# EUROPEAN PATENT APPLICATION

(11) **EP 1 715 616 A1**
(43) Date of publication of application: **25.10.2006**
(21) Application number: 05720265.7
(22) Date of filing: 08.03.2005
(51) Int. Cl.: H04L 9/14, H04L 9/08

(54) **UPDATE SYSTEM FOR CIPHER SYSTEM**

(30) Priority: 30.03.2004 JP 2004100072
(71) Applicant: MATSUSHITA ELECTRIC INDUSTRIAL CO., LTD., Osaka 571-8501 (JP)
(72) Inventor: OHMORI, Motoji, Matsushita Elect. Industr. Co.,Ltd, 1-3-7 Shiromi,Chuo-Ku, Osaka 540-6319 (JP); MATSUZAKI, N., Matsushita Elect. Industr. Co.,Ltd, 1-3-7 Shiromi,Chuo-Ku, Osaka 540-6319 (JP); NAKANO, T, Matsushita Elect. Industr. Co.,Ltd, 1-3-7 Shiromi,Chuo-Ku, Osaka 540-6319 (JP)
(74) Representative: Grünecker, Kinkeldey, Stockmair & Schwanhäusser Anwaltssozietät
(86) International application number: PCT/JP2005/003993
(87) International publication number: WO 2005/099168

(57) **Abstract**

There is a demand for a device handling information with the use of encryption technology to safely and simply update the encryption schemes. The present invention offers an information security device having a plurality of encryption schemes and handling information safely and reliably, **characterized by** selecting one of the plurality of encryption schemes as an application encryption scheme and installing a different encryption scheme from the plurality of encryption schemes based on the application encryption scheme.

## Description

### Technical Field

The present invention relates to technology of changing an encryption scheme.

### Background Art

In order to prevent use of unauthorized contents obtained by tampering and eavesdropping, using encryption technology has become common in selling digital contents, including video and audio, which have been recorded on recording media or distributing them over a network.
Patent Reference 1 discloses technology of providing a rewritable circuit in an encryption processing system which carries out such an encryption process and forming an encryption circuit according to processing target data with respect to each process.
<Patent Reference 1> Japanese Patent Application No. H10-132755;
<Patent Reference 2> Japanese Patent Application No. 2000-600352; and
<Non-Patent Reference 1> *Gendai Ango-ron* (Modern Encryption Theory) written by Shinichi Ikeno and Kenji Koyama, and published by the Institute of Electronics and Communication Engineer, 1986.

### Disclosure of the Invention

### [Problems that the Invention is to Solve]

However, a problem remains that, if an encryption scheme corresponding to the processing target data is broken, the system cannot safely process the processing target data using the encryption circuit.
The present invention has been made in view of the above-stated problem, and aims at offering an information security device, an information security system, a control method and a computer program, all of which are capable of safely installing a new encryption scheme in the case when an encryption scheme of the encryption circuit is broken.

### [Means to Solve the Problems]

In order to meet the above demand, the present invention is an information security device having a plurality of encryption schemes and handling information safely and reliably. The information security device is characterized by selecting one of the plurality of encryption schemes as an application encryption scheme and installing a different encryption scheme from the plurality of encryption schemes based on the application encryption scheme.

### [Advantageous Effects of the Invention]

According to the above structure, by appropriately selecting the application encryption scheme, the information security device is capable of safely installing the different encryption scheme based on the application encryption scheme even if any of the plurality of encryption schemes is broken.
The information security device of the present invention may comprise: an obtaining unit operable to obtain an installation direction to install the different encryption scheme; a selecting unit operable to select the one of the plurality of encryption schemes as the application encryption scheme; an installation unit operable to install the different encryption scheme based on the application encryption scheme; and an encryption processing unit operable to processing the information safely based on at least one encryption scheme from among the plurality of encryption schemes and the installed different encryption scheme.

According to this structure, the selecting unit selects the application encryption scheme from the plurality of encryption schemes, the installation unit installs the different encryption scheme based on the application encryption scheme, and the encryption processing unit safely handles the information based on the plurality of encryption schemes and the different encryption scheme. Accordingly, in the case when any of those encryption schemes becomes to have a problem in assuring the safe use, the selecting unit selects, as the application encryption scheme, an encryption scheme which enables the safe use, and thereby the installation unit is able to safely install the different encryption scheme. In addition, the encryption processing unit can handle the information safely and reliably based on the different encryption scheme in place of the encryption scheme unable to provide the safe use any longer.

In addition, the selecting unit of the information security device may select the most recently installed encryption scheme from the plurality of encryption schemes as the application encryption scheme.
Every time when the obtaining unit receives a direction of installation, the information security device installs a new encryption scheme different from the plurality of encryption schemes that the information security device itself already has. The newly installed encryption scheme is considered to provide a higher safety level since it was developed after the development of the plurality of encryption schemes, and is based on higher encryption technology.

Accordingly, the selecting unit selects an encryption scheme with the latest installation date as the application encryption scheme, as described above, and thereby the different encryption scheme can be installed more safely.
In addition, the selecting unit of the information security device may select an encryption scheme with the highest encryption level from the plurality of encryption schemes as the application encryption scheme.
With this structure, the selecting unit selects an encryption scheme with the highest encryption level as the application encryption scheme. Accordingly, the installation unit is able to install the different encryption scheme using the safest method.

In addition, the selecting unit of the information security device may include: a direction obtaining subunit operable to externally obtain a selection direction indicating one of the plurality of encryption schemes; and a selecting subunit operable to select the one of the plurality of encryption schemes as the application encryption scheme according to the obtained selection direction.
With this structure, the selecting unit selects the application encryption scheme according to a selection direction obtained externally. Here, the externally-obtained selection direction means, for example, a recording medium placed in the information security device. Stored in the recording medium are: information to be handled by the information security device; information indicating a most suitable encryption scheme for the information to be handled by the information security device; and a most suitable selection direction for installing an encryption scheme which is most suitable for the information to be handled by the information security device. Herewith, the different encryption scheme and the application encryption scheme which reflect the intention of a selling agency of the recording medium can be selected.

The externally-obtained selection direction is also considered a direction based on a user's key operation. In this case, the selecting unit selects an encryption scheme indicated by the selection direction as the application encryption scheme, which allows the user to have freedom to select the application encryption scheme in view of the safety, time and the like pertaining to the installation of the encryption scheme.
The obtaining unit of the information security device may obtain, as the installation direction, identification information identifying a broken encryption scheme among the plurality of encryption schemes. Here, the selecting unit selects, as the application encryption scheme, an encryption scheme other than the broken encryption scheme identified by the identification information from among the plurality of encryption schemes.

Herewith, the installation unit installs the different encryption scheme if any of the plurality of encryption schemes is broken. Accordingly, the encryption processing unit becomes capable of using the different encryption scheme in place of the broken encryption scheme, and thus the information can be continuously handled safely and reliably. In this case, the selecting unit selects an encryption scheme other than the encryption scheme indicated by the identification information―namely, an encryption scheme other than the broken encryption scheme―as the application encryption scheme. Accordingly, the installation unit is capable of safely installing the different encryption scheme based on the application encryption scheme which is unbroken.

In addition, the encryption processing unit of the information security device may process the information safely based on the encryption scheme other than the broken encryption scheme identified by the identification information.
With this structure, the encryption processing unit processes the information based on the encryption scheme other than the encryption scheme indicated by the identification information. That is, the information security device does not use an encryption scheme which has been broken and has a problem in assuring the safe use, and therefore the information is always processed in a safe and secure manner.

In addition, the encryption processing unit may use the broken encryption scheme identified by the identification information only for decrypting a ciphertext.
With this structure, the encryption processing unit uses the encryption scheme indicated by the identification information only for decrypting a ciphertext. Therefore, the information security device is able to decrypt a ciphertext which was generated before the encryption scheme indicated by the identification information was broken. To be more specific, assume that a recording medium, on which encrypted contents generated based on the encryption scheme are recorded, is manufactured and sold. Then, the encryption scheme is broken. In such a case, the information security device is capable of decrypting the encrypted contents and generating the contents.
Thus, the information security device is able to use contents stored in an already bought recording medium any time.

Additionally, the encryption processing unit does not use the encryption scheme indicated by the identification information for anything but decryption of a ciphertext. Thus, by limiting the use of the broken encryption scheme, the information security device safely handles the information while maintaining convenience for users.
The information security device of the present invention may further comprise a deletion unit operable to delete the broken encryption scheme identified by the identification information.

With this structure, the deletion unit deletes the encryption scheme indicated by the identification information, and therefore the information security device never uses an encryption scheme having a problem in assuring the safe use.
The encryption processing unit of the information security device of the present invention may include a key storage subunit and a computation execution subunit. In this case, the key storage subunit stores therein a plurality of key information sets, each of which corresponds to a different one of the plurality of encryption schemes. The computation execution subunit includes an encryption circuit for executing processing in accordance with the plurality of encryption schemes and a logic circuit, at least part of which is rewritable. The installation unit includes: a procedure obtaining subunit operable to obtain procedure information showing a procedure to establish an encryption circuit for executing processing in accordance with the different encryption scheme on the logic circuit; a key obtaining subunit operable to safely obtain a private key information set with use of the application encryption scheme and write the obtained private key information set to the key storage unit; and an establishment unit operable to establish the encryption circuit for executing processing in accordance with the different encryption scheme on the logic circuit according to the procedure shown by the obtained procedure information.

With this structure, the computation execution unit has a rewritable logic circuit, and the establishment unit establishes the encryption circuit for the different encryption scheme on the logic circuit. Herewith, the computation execution unit is capable of adding, deleting and changing an encryption scheme that the computation execution unit currently has by re-establishing a new encryption circuit on the logic circuit. Additionally, since the computation execution unit has an encryption circuit, processing based on the plurality of encryption schemes as well as the different encryption scheme can be carried out at high speeds by the encryption circuit.

In addition, the procedure obtaining subunit of the information security device may obtain the procedure information from a server device via a network.
Here, it is considered that the server device is managed by a selling agent of the information security device or a company providing information usable by the information security device―e.g. digital contents, and has the latest information related to the safety of the plurality of encryption schemes and procedure information corresponding to the different encryption scheme which is most suitable at the point.

Accordingly, with this structure, the procedure obtaining unit obtains the procedure information from the server device via a network, and therefore, the information security device is able to install, as the different encryption scheme, an encryption scheme most suitable at the point.
In addition, the network may be a broadcast network for digital broadcasting. Here, the procedure obtaining subunit obtains the procedure information by receiving broadcast waves and extracting the procedure information from the received broadcast waves.

With this structure, the procedure obtaining subunit is able to obtain the procedure information in a simple manner by receiving the broadcast waves.
The present invention is an information security system including an information security device that has a plurality of encryption schemes and handles information safely and reliably and a server device that supplies a different encryption scheme from the plurality of encryption schemes. Here, the server device comprises a supply unit operable to supply the different encryption scheme. The information security device comprises: an obtaining unit operable to obtain an installation direction to install the different encryption scheme; a selecting unit operable to select one of the plurality of encryption schemes as an application encryption scheme; an installation unit operable to install the different encryption scheme based on the application encryption scheme; and an encryption processing unit operable to process the information safely based on at least one encryption scheme from among the plurality of encryption schemes and the installed different encryption scheme.

Here, it is considered that the server device is managed by a selling agent of the information security device or a company providing information usable by the information security device-e.g. digital contents, has the latest information related to the safety of the plurality of encryption schemes, and is capable of supply the different encryption scheme which is most suitable at the point.
Accordingly, in the information security system, the information security device obtains the different encryption scheme from the server device, and therefore is capable of installing an encryption scheme most suitable at the time as the different encryption scheme and safely handling the information based on the different encryption scheme and the plurality of encryption schemes.

### Brief Description of the Drawings

FIG. 1 is a structural diagram showing a structure of an update system 10;
FIG. 2 is a structural diagram showing structures of programs and data stored in DVDs 500a and 500b;
FIG. 3 is a block diagram showing a structure of a security management device 600;
FIG. 4 shows details of an revoked encryption scheme list 621;
FIG. 5 shows details of a SD key list;
FIG. 6 shows details of information included in a program file Eᵢᵢ 641 and a program file Pᵢᵢ 651;
FIG. 7 shows details of information included in a program file E_{II} 661 and a program file P_{II} 671;
FIG. 8 is a flowchart showing operational processing according to an encryption control program OE2;
FIG. 9 is a flowchart showing operational processing according to an encryption application program AE2;
FIG. 10 is a flowchart showing operational processing according to a decryption control program OD2;
FIG. 11 is a flowchart showing operational processing according to a decryption application program AD2;
FIG. 12 is a flowchart showing operational processing according to an encryption application program APE2;
FIG. 13 is a flowchart showing operational processing according to a decryption application program APD2;
FIG. 14 is an example of an emergency screen presented on a display unit of a mobile phone 700;
FIG. 15 is a block diagram showing a structure of a home server device 100;
FIG. 16 is an example of information stored in a storage unit 110;
FIG. 17 is a block diagram showing a structure of a memory card 300;
FIG. 18 is an example of information stored in a secure area 320;
FIG. 19 is an example of information stored in program memory 311;
FIG. 20 is an example of information stored in the program memory 311 after update of an encryption scheme;
FIG. 21 is a flowchart showing operational processing according to an encryption control program OE1;
FIG. 22 is a flowchart showing operational processing according to an encryption application program AE1;
FIG. 23 is a flowchart showing operational processing according to a decryption control program OD1;
FIG. 24 is a flowchart showing operational processing according to a decryption application program AD1;
FIG. 25 is a flowchart showing operational processing according to an encryption application program APE1;
FIG. 26 is a flowchart showing operational processing according to a decryption application program APD1;
FIG. 27 is a block diagram showing a structure of the mobile phone 700;
FIG. 28 is a flowchart showing operations for sharing an emergency key between the home server device 100 and the memory card 300;
FIG. 29 is a flowchart showing operations of the home server device 100 for writing contents to a memory card;
FIG. 30 is a flowchart showing operations of the home server device 100 for writing contents to a memory card (continued from FIG. 29);
FIG. 31 is a flowchart showing operations of the home server device 100 for writing contents to a memory card (continued from FIG. 29);
FIG. 32 is a flowchart showing operations of the home server device 100 for writing contents to a memory card (continued from FIG. 29);
FIG. 33 is a flowchart showing operations for contents playback in the mobile phone 700;
FIG. 34 is a flowchart showing operations of the home server device 100 for updating a symmetric-key encryption scheme;
FIG. 35 is a flowchart showing operations of the home server device 100 for updating a public-key encryption scheme;
FIG. 36 is a flowchart showing operations of the memory card 300 for updating an encryption scheme;
FIG. 37 is a flowchart showing operations of the security management device 600 and memory card 300 for a special process;
FIG. 38 is a flowchart showing operations of the security management device 600 for a safety notification process;
FIG. 39 is a flowchart showing operations of the memory card 300 for updating a symmetric-key encryption scheme;
FIG. 40 is a flowchart showing operations of the memory card 300 for installing programs for a symmetric-key encryption scheme;
FIG. 41 is a flowchart showing operations of the memory card 300 for installing programs for the symmetric-key encryption scheme (continued from FIG. 40);
FIG. 42 is a flowchart showing operations of the memory card 300 for acquiring a device key;
FIG. 43 is a flowchart showing operations of the memory card 300 for transferring the device key;
FIG. 44 is a flowchart showing operations of the memory card 300 for transferring the device key (continued from FIG. 43);
FIG. 45 is a flowchart showing operations of the memory card 300 for updating a public-key encryption scheme;
FIG. 46 is a flowchart showing operations of the memory card 300 for installing programs for a public-key encryption scheme;
FIG. 47 is a flowchart showing operations of the memory card 300 for installing programs for the public-key encryption scheme (continued from FIG. 46);
FIG. 48 is a flowchart showing operations of the memory card 300 for acquiring private keys and public key certificates;
FIG. 49 is a flowchart showing operations of the memory card 300 for acquiring private keys and public key certificates (continued from FIG. 48);
FIG. 50 is a flowchart showing operations of the memory card 300 for transferring a private key and a public key certificate;
FIG. 51 is a flowchart showing operations of the memory card 300 for transferring the private key and public key certificate (continued from FIG. 50);
FIG. 52 is a flowchart showing operations of SAC establishment between two devices;
FIG. 53 is a flowchart showing operations of SAC establishment between two devices (continued from FIG. 52);
FIG. 54 is a structural diagram showing a structure of an update system 11;
FIG. 55 is a block diagram showing a structure of a security management device 1600;
FIG. 56 shows details of HS revoked encryption scheme list 1621;
FIG. 57 shows details of NW emergency key list 1691;
FIG. 58 shows information included in a program file Bᵢᵢ 1681;
FIG. 59 is a block diagram showing a structure of the home server device 1100;
FIG. 60 is an example of information stored in a storage unit 1110;
FIG. 61A shows details of an encryption scheme list 1133 before update of an encryption scheme; and FIG. 61B shows details of an encryption scheme list 1133 after the update of the encryption scheme;
FIG. 62 is a flowchart showing operations of the home server device 1100 for starting update of an encryption scheme via the Internet;
FIG. 63 is a flowchart showing operations of the home server device 1100 for updating a symmetric-key encryption scheme via the Internet;
FIG. 64 is a flowchart showing operations of the home server device 1100 for updating the symmetric-key encryption scheme via the Internet (continued from FIG. 63);
FIG. 65 is a flowchart showing operations of the home server device 1100 for updating a public-key encryption scheme via the Internet;
FIG. 66 is a flowchart showing operations of the home server device 1100 for updating the public-key encryption scheme via the Internet (continued from FIG. 65);
FIG. 67 is a flowchart showing operations of the home server device 1100 for updating the public-key encryption scheme via the Internet (continued from FIG. 65);
FIG. 68 is a flowchart showing operations of the home server device 1100 for updating a broadcast encryption scheme via the Internet;
FIG. 69 is a flowchart showing operations of the home server device 1100 for updating the broadcast encryption scheme via the Internet (continued from FIG. 68);
FIG. 70 is a flowchart showing operations of the home server device 1100 for updating the broadcast encryption scheme via the Internet (continued from FIG. 68);
FIG. 71 is a flowchart showing operations of the home server device 1100 for updating a symmetric-key encryption scheme by broadcast waves;
FIG. 72 is a flowchart showing operations of the home server device 1100 for updating a public-key encryption scheme by broadcast waves; and
FIG. 73 is a flowchart showing operations of the home server device 1100 for updating a broadcast encryption scheme by broadcast waves.

### Explanation of References

- 10: update system
- 20: Internet
- 50: personal computer
- 70: broadcast station
- 100: home server device
- 101: receiving unit
- 101: transmitting and receiving unit
- 102: input and output unit
- 103: authentication unit
- 106: update unit
- 107: control unit
- 108: encryption unit
- 109: decryption unit
- 110: storage unit
- 112: display unit
- 113: input unit
- 114: antenna
- 115: input and output unit
- 124: emergency key list
- 300: memory card
- 302: input and output unit
- 303: authentication unit
- 306: update unit
- 307: control unit
- 308: encryption unit
- 309: decryption unit
- 310: information storage unit
- 500a: DVD
- 500b: DVD
- 600: security management device
- 601: transmitting and receiving unit
- 603: authentication unit
- 607: control unit
- 610: information storage unit
- 621: revoked encryption scheme list
- 612: input unit
- 612: display unit
- 613: input unit
- 700: mobile phone
- 1071: security management device
- 1100: home server device
- 1600: security management device

### Best Mode for Carrying Out the Invention

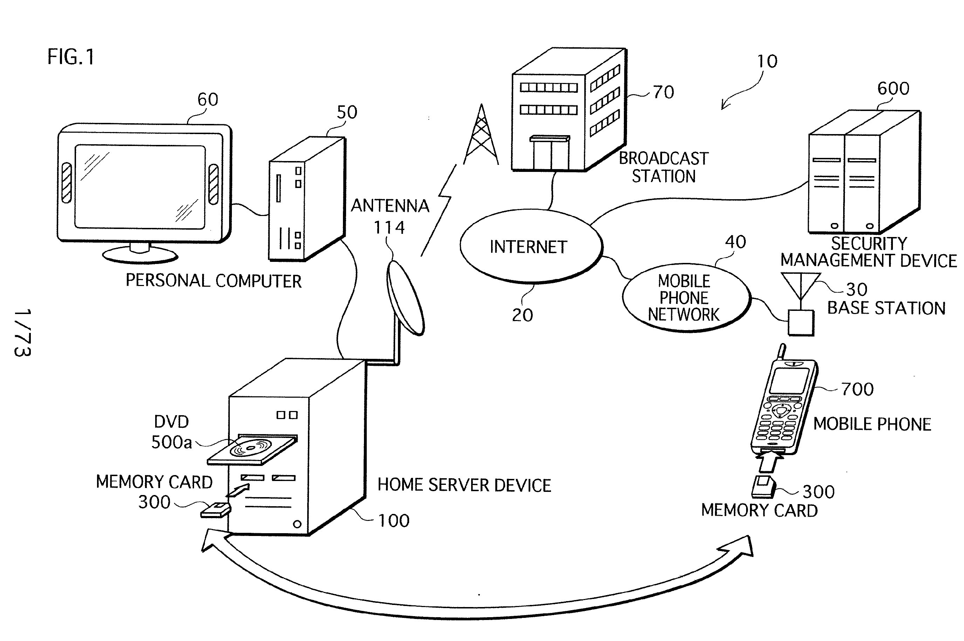

1. EMBODIMENT 1
The following describes an update system 10 of a preferred embodiment according to the present invention.
*1.1 structure of Update System 10*
As shown in FIG. 1, the update system 10 comprises: a home server device 100; a mobile phone 700; a security management device 600; and a broadcast station 70. The mobile phone 700, security management device 600 and broadcast station 70 are connected to the Internet 20. A memory card 300 having tamper resistance can be placed in the home server device 100 and the mobile phone 700, and communicates with the security management device 600 via the mobile phone 700.

In the home server device 100, a DVD (Digital Versatile Disk) is placed. Stored in the DVD are encrypted contents and an encrypted content key. The encrypted contents are created by encrypting contents including video and audio by a symmetric-key encryption scheme. The encrypted content key is created by encrypting a content key, which was used to generate the encrypted contents, based on a symmetric-key encryption scheme, using a device key specific to the home server device 100. An example of the symmetric-key encryption scheme used here is DES (Data Encryption Standard) encryption scheme. Since the DES encryption scheme is publicly known technology, the explanation is omitted.

Here, an encryption scheme comprises encryption and decryption algorithms and keys suited for computation based on the algorithms. In addition, the encryption scheme of the present invention includes basic encryption technology applying, as a source of safety, difficulty of a discrete logarithm problem on an elliptic curve or difficulty of prime factorization of a composite number of large figures, for example, as well as applied technologies such as secret communication, key sharing and digital signature using such basic encryption technology. In the present specification, "encryption and decryption algorithms" are simply referred to as an "encryption scheme", and each key suited for computation based on such an algorithms is referred to as simply "key", "encryption key", or "decryption key" for the sake of simplification of description.

The home server device 100 has a function to perform encryption and decryption according to the DES encryption scheme. The home server device 100 reads the encrypted content key from the DVD, applies, to the read encrypted content key, a decryption process based on the DES encryption scheme, and generates the content key.
When directed to play contents back according to user's operation, the home server device 100 reads the encrypted contents from the DVD, and performs a decryption process based on the DES encryption scheme, using the content key with which the read encrypted contents were generated, to thereby generate the contents. The home server device 100 is connected to an external device having a content playback function―e.g. a personal computer, and the generated contents are output to the external device.

Additionally, the memory card 300 is placed in the home server device 100. When directed to copy the encrypted contents stored in the DVD into the memory card 300 according to user's operation, the home server device 100 shares a common key with the memory card 300 by using a public-key encryption scheme, and establishes a SAC (Secure Authentication Channel).
An example of the public-key encryption scheme used here is RSA encryption scheme, and the home server device 100 has a function to perform encryption and decryption according to the RSA encryption scheme. Since the RSA encryption scheme is publicly known technology, the explanation is omitted.

Next, the home server device 100 encrypts the content key by an encryption scheme program according to the DES encryption scheme, using the generated key to thereby generate an encrypted content key. Subsequently, the home server device 100 reads the encrypted contents from the DVD, and writes the read encrypted contents and the generated encrypted content key to the memory card 300.
The memory card 300 stores therein encryption and decryption scheme programs based on the DES encryption scheme and those based on the RSA encryption scheme.

When receiving the encrypted content key and encrypted contents from the home server device 100, the memory card 300 generates the content key by decrypting the encrypted content key according to a decryption scheme program based on the DES encryption scheme.
If directed to play the contents back according to user's operation while the memory card 300 is placed in the mobile phone 700, the memory card 300 generates the content key and contents according to procedure indicated by a decryption scheme program based on the DES encryption scheme, and outputs the generated contents to the mobile phone 700.

As described above, the home server device 100 acquires the contents from a DVD using both symmetric-key and public-key encryption schemes, and safely transmits and receives the contents to/from the memory card 300.
The broadcast station 70 transmits contents including video and audio and a variety of information through broadcast waves.

Here, assume that an unauthorized user analyzes the DES encryption scheme or the RSA encryption scheme, and finds a way to brake the encryption scheme.
The security management device 600 stores therein programs based on a new encryption scheme that replaces the encryption scheme whose cryptanalysis method has been discovered and therefore its security is at risk.
The security management device 600 transmits, from among programs based on the new encryption scheme, programs for the home server device 100 to the broadcast station 70 via the Internet 20.

The broadcast station 70 transmits the received programs for the home server device 100 through broadcast waves.
The memory card 300 sends an inquiry to the security management device 600 about whether the DES encryption scheme and RSA encryption scheme which the memory card 300 is currently using have been broken, and, in the case that either one of the encryption schemes has been broken, requests the security management device 600 to start an update of the encryption scheme.

In the case where the DES encryption scheme has been broken, the home server device 100 receives, from the broadcast station 70, programs for a new symmetric-key encryption scheme for the home server device 100, and updates, based on the received programs, the symmetric-key encryption scheme that the home server device 100 is currently using.
The memory card 300 obtains, from the security management device 600, programs for the new symmetric-key encryption scheme for a memory card and a device key corresponding to the new symmetric-key encryption scheme via the Internet 20, and safely transfers the obtained device key to the home server device 100.

In the case where the RSA encryption scheme has been broken, the home server device 100 obtains, from the broadcast station 70, programs for a new public-key encryption scheme for the home server device 100, and updates, based on the obtained programs, the public-key encryption scheme that the home server device 100 is currently using.
The memory card 300 obtains, from the security management device 600, programs for the new encryption scheme, a private key and a public key certificate for a public key to be paired with the private key, and transfers the obtained new private key and public key certificate to the home server device 100 to thereby reestablish a safe communication path.

*1.2 DVD 500a and DVD 500b*
DVDs 500a and 500b are portable optical disk media to be placed in the home server device 100.
The DVD 500a stores therein information encrypted by an encryption scheme program Enc1. The encryption scheme program Enc1 is, for example, a program including procedure of encryption computation according to the DES encryption scheme. The DVD 500b was created and put on sale after the DES encryption scheme had been broken, and stores therein information encrypted by an encryption scheme program Enc2. The encryption scheme program Enc2 is, for example, a program including procedure of encryption computation according to Rijndael encryption scheme.

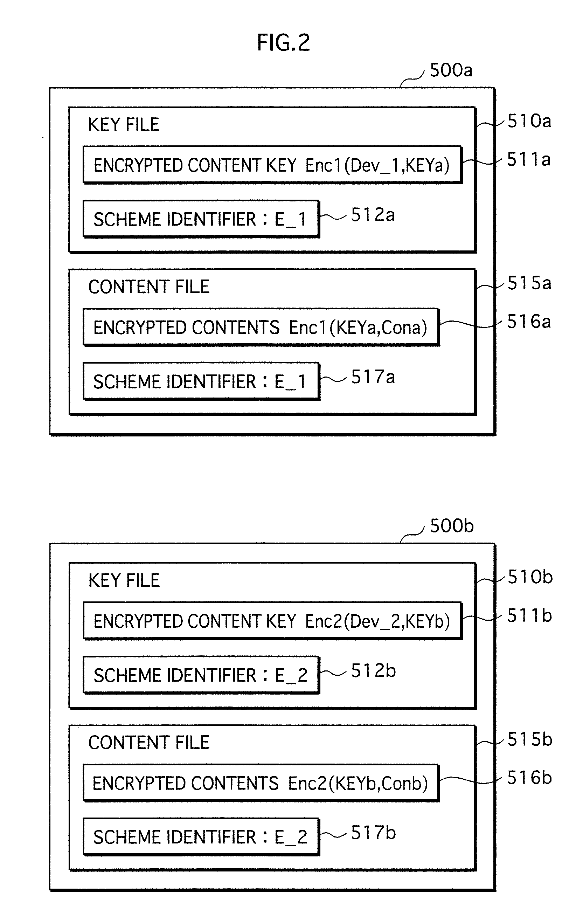

On the DVD 500a, as shown in FIG. 2, a key file 510a and a content file 515a are stored. The key file 510a includes: an encrypted content key 511a, Enc1 (Dev_1, KEYa); and a scheme identifier 512a, "E_1".
The encrypted content key 511a, Enc1(Dev_1, KEYa), has been generated by encrypting a content key KEYa according to procedure indicated in the encryption scheme program Enc1, using a device key Dev_1.

Device keys are key values each specific to a device. Therefore, there are as many encrypted content keys as there are devices that are able to read the DVD 500a; however, here for the sake of simplification of description, assume that the DVD 500a stores therein an encrypted content key which can be decrypted by a device key specific to the home server device 100. The same applies to the DVD 500b.
The scheme identifier 512a, "E_1", is an identifier indicating an encryption scheme of the encryption scheme program Enc1 which was used to generate the encrypted content key 511a, Enc1(Dev_1, KEYa). Here, it indicates, for example, the DES encryption scheme.

In the present specification, a ciphertext generated by encrypting a plain text C according to an encryption scheme indicated by the scheme identifier "E_1", using a key A, is described as Enc1(A, C).
The content file 515a includes encrypted contents Enc1(KEYa, Cona) 516a, and a scheme identifier 517a, "E_1". The encrypted contents Enc1(KEYa, Cona) 516a is generated by, for example, encrypting video contents Cona, such as a movie, according to procedure indicated in the encryption scheme program Enc1, using the content key KEYa. The scheme identifier 517a, "E_1", is an identifier indicating an encryption scheme of the encryption scheme program Enc1 which was used to generate the encrypted contents Enc1(KEYa, Cona) 516a.

On the DVD 500b, a key file 510b and a content file 515b are stored, as shown in FIG. 2. The key file 510b includes an encrypted content key Enc2(Dev_2, KEYb) 511b, and a scheme identifier 512b, "E_2".
The encrypted content key Enc2(Dev_2, KEYb) 511b has been generated by encrypting a content key KEYb according to procedure indicated in the encryption scheme program Enc2, using a device key Dev_2. The scheme identifier 512b, "E_2", is an identifier indicating an encryption scheme of the encryption scheme program Enc2 which was used to generate the encrypted content key 511b, and indicates Rijndael encryption scheme, for example.

In the present specification, a ciphertext generated by encrypting a plain text C according to the encryption scheme indicated by the scheme identifier "E_2", using a key A, is described as Enc2(A, C).
The content file 515b includes encrypted contents Enc2(KEYb, Conb) 516b and a scheme identifier 517b, "E_2". The encrypted contents Enc2(KEYb, Conb) 516b is generated by encrypting contents Conb according to procedure indicated in the encryption scheme program Enc2, using the content key KEYb. The scheme identifier 517b, "E_2", is an identifier indicating an encryption scheme of the encryption scheme program Enc2 which was used to generate the encrypted contents Enc2(KEYb, Conb) 516b.

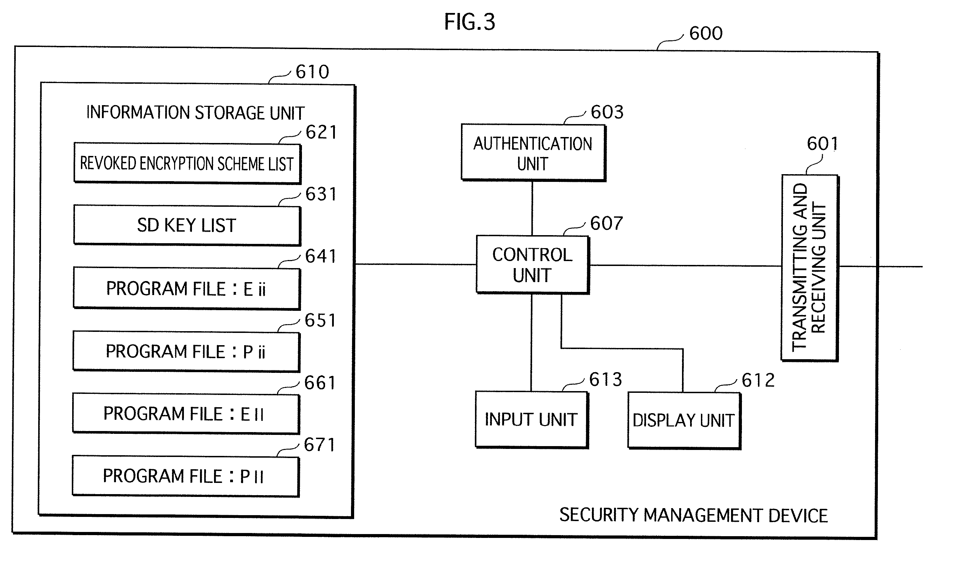

*1.3 Security Management Device 600*
The security management device 600 comprises, as shown in FIG. 3: a transmitting and receiving unit 601; an authentication unit 603; a control unit 607; an information storage unit 610; a display unit 612; and an input unit 613.
The security management device 600 is composed of a micro processing unit, RAM, ROM, hard disk and so on, which are not specifically shown in the figure. Computer programs are stored in the RAM, ROM and hard disk. The micro processing unit operates according to the programs, and thereby the security management device 600 fulfills its function.

(1) Information Storage Unit 610
The information storage unit 610 is structured from a hard disk unit, and stores therein a revoked encryption scheme list 621, a SD key list 631, a program file Eᵢᵢ 641, a program file Pᵢᵢ 651, a program file E_{II} 661 and a program file P_{II} 671, for example.

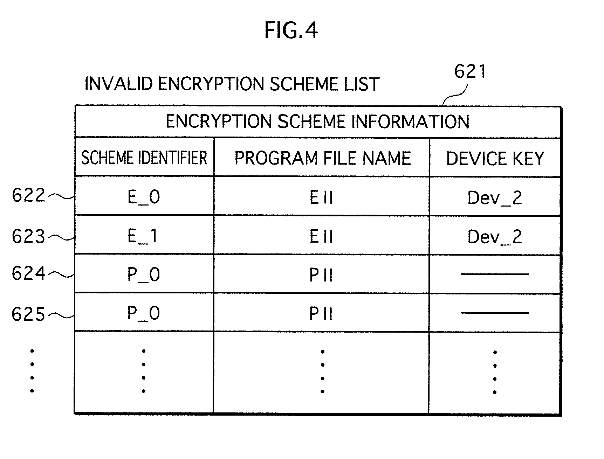

(A) Revoked Encryption Scheme List 621
The revoked encryption scheme list 621 includes, as shown in FIG. 4, a plurality of encryption scheme information sets 622, 623, 624, and 625.... Each encryption scheme information set corresponds to an encryption scheme which has already been broken. Some encryption scheme information sets include a scheme identifier and a program file name, while others include a scheme identifier, a program file name and a device key.

The scheme identifier is an identifier indicating an encryption scheme. The program file name is a file name of a program file including an encryption scheme program which is executed by the memory card 300 based on a new encryption scheme that replaces the encryption scheme indicated by the scheme identifier. The device key is a key value used to decrypt an encrypted content key stored in a DVD corresponding to the new encryption scheme that replaces the encryption scheme indicated by the scheme identifier.

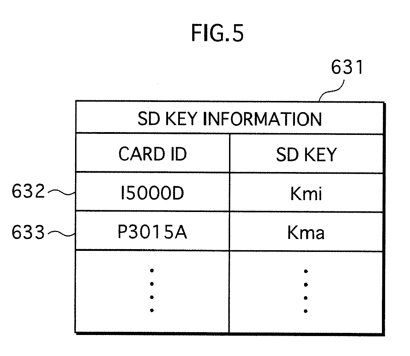

(B) SD key list 631
The SD key list 631 stores, as shown in FIG. 5, a plurality of SD key information sets 632, 633, .... Each SD key information set includes a card ID and a SD key. The card ID is identification information specific to a memory card, and the SD key is a key value specific to a memory card and used to communicate with the memory card in the event of an emergency. Here, the "event of an emergency" means when a public-key encryption scheme is to be changed.

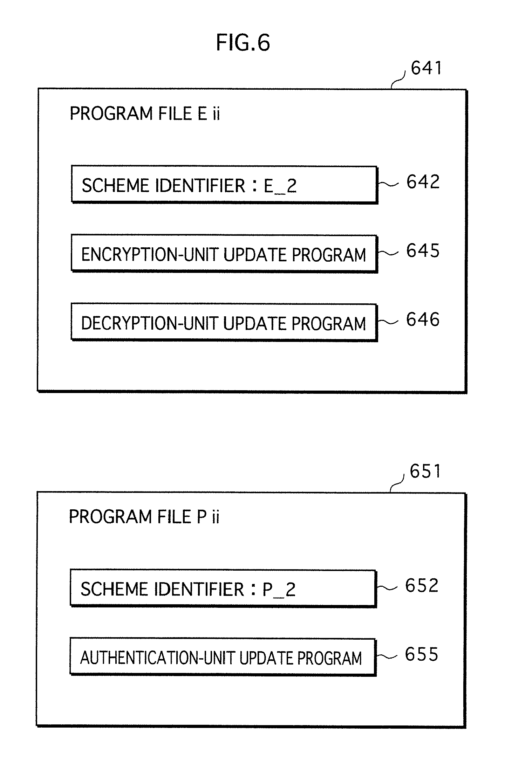

(C) Program File Eᵢᵢ 641
The program file Eᵢᵢ 641 includes, as shown in FIG. 6: a scheme identifier 642, "E_2"; an encryption-unit update program 645; and a decryption-unit update program 646. The scheme identifier 642, "E_2", is identification information indicating, for example, Rijndael encryption scheme.
The encryption-unit update program 645 and decryption-unit update program 646 are respectively composed of directions in a plurality of machine code formats, which are generated by compiling hardware description language. These machine code formats are formats executed by an update unit 106 (described hereinafter) of the home server device 100. Here, VHDL (VHSIC Hardware Description Language) is used for the hardware description language, for example.

The encryption-unit update program 645 includes procedure for rewriting an FPGA (Field Programmable Gate Array) making up an encryption unit 108 (to be hereinafter described) of the home server device 100, and establishing a circuit having a function to encrypt a plain text based on encryption schemes indicated by the scheme identifiers "E_1" and "E_2".
The decryption-unit update program 646 includes procedure of rewriting an FPGA making up a decryption unit 109 (described hereinafter) of the home server device 100, and establishing a circuit having a function to decrypt a ciphertext based on encryption schemes indicated by the scheme identifiers "E_1" and "E_2".

(D) Program File Pᵢᵢ 651
The Program File Pᵢᵢ 651 includes, as shown in FIG. 6: a scheme identifier 652, "P_2"; and an authentication-unit update program 655. The scheme identifier 652, "P_2", is identification information indicating an elliptic encryption scheme, for example.
The authentication-unit update program 655 is composed of directions in a plurality of machine code formats, which are generated by compiling hardware description language. These machine code formats are formats executed by the update unit 106 of the home server device 100. The authentication-unit update program 655 includes procedure of rewriting an FPGA making up the authentication unit 103 of the home server device 100, and establishing a circuit having a function to perform SAC establishment (describe hereinafter) using an encryption scheme indicated by the scheme identifier "P_2".

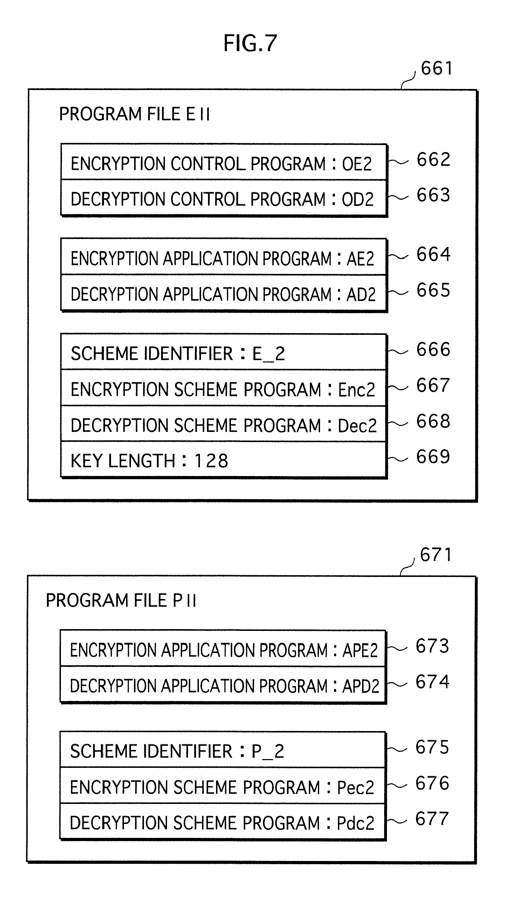

(E) Program File E_{II} 661
The Program File E_{II} 661 comprises, as shown in FIG. 7: an encryption control program OE2 662; a decryption control program OD2 663; an encryption application program AE2 664; a decryption application program AD2 665; a scheme identifier 666, "E_2"; an encryption scheme program Enc2 667; a decryption scheme program Dec2 668; and a key length 669, "128".

The encryption control program OE2 662 is a program including encryption procedure. The encryption application program AE2 664 is a program for reading a plain text in appropriate lengths and directing the encryption scheme program Enc2 667 to perform computation. The encryption scheme program Enc2 667 is a program including procedure of encryption computation.
The decryption control program OD2 663 is a program including procedure of a decryption process. The decryption application program AD2 665 is a program for reading a ciphertext in appropriate lengths and directing the decryption scheme program Dec2 668 to perform computation of the read ciphertext. The decryption scheme program Dec2 668 is a program including computation procedure for decrypting a ciphertext which has been encrypted by the encryption scheme program Enc2.

The scheme identifier 666, "E_2", is an identifier indicating an encryption scheme to be the basis for the encryption scheme program Enc2 667 and decryption scheme program Dec2 668, and indicates Rijndael encryption scheme, for example. The key length 669, "128", shows a bit length of a key value which is required when encryption or decryption is performed according to procedure indicated in the encryption scheme program Enc2 667 and decryption scheme program Dec2 668.

Each computer program is composed of directions in a plurality of machine code formats. These machine code formats are formats executed by an encryption unit 308 (described hereinafter) and a decryption unit 309 (described hereinafter) of the memory card 300.
The encryption control program OE2 662, encryption application program AE2 664 and encryption scheme program Enc2 667 are used by the encryption unit 308 of the memory card 300, while the decryption control program OD2 663, decryption application program AD2 665 and decryption scheme program Dec2 668 are used by the decryption unit 309 of the memory card 300.

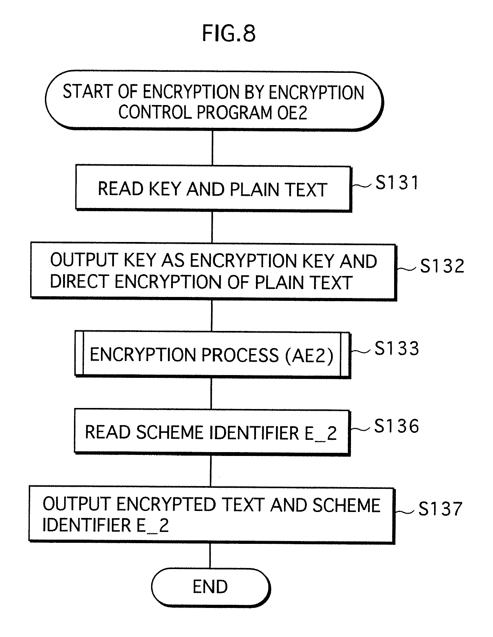

The following explains operational processing of each computer program described above. To facilitate understanding, the operational processing of each computer program is described using not directions in machine code formats, but a flowchart.
[Encryption Control Program OE2 662]
An encryption process by the encryption control program OE2 is described next with the aid of a flowchart shown in FIG. 8.

The encryption control program OE2 reads a key and a plain text (Step S131). Here, combinations of the key and plain text read by the encryption control program OE2 are, for example, a combination of an emergency key K_EMR and a private key SK_L2 and a combination of the emergency key K_EMR and a public key certificate Cert_L2.
Next, the encryption control program OE2 outputs the read key as an encryption key, and directs the encryption application program AE2 to encrypt the plain text (Step S132). A ciphertext is generated by the encryption application program AE2, and the encryption control program OE2 receives the generated ciphertext (Step S133). Subsequently, the encryption control program OE2 reads a scheme identifier 346, "E_2", from a program memory 311 (Step S136), and outputs the ciphertext and the read scheme identifier 346, "E_2" (Step S137).

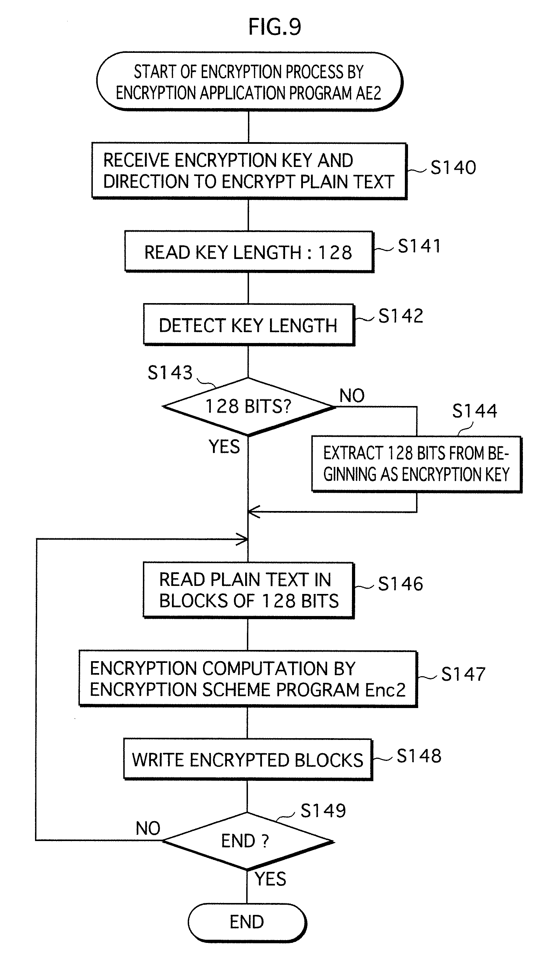

[Encryption Application Program AE2 664]
The encryption application program AE2 is described with the aid of a flowchart shown in FIG. 9.
The encryption application program AE2 receives an encryption key and a direction to encrypt a plain text (Step S140). Next, the encryption application program AE2 reads a key length 349, "128", from the program memory 311 (Step S141), and then detects the key length of the received encryption key (Step S142). The encryption application program AE2 compares the detected key length and the read key length 349, "128" (Step S143), and directly proceeds the process to Step S146 when determining the detected key length is 128 bits (Step S143 : YES). If determining that the detected key length is not 128 bits (Step S143: NO), the encryption application program AE2 extracts 128 bits from the beginning of the received encryption key, and uses this as an encryption key (Step S144).

Then, the encryption application program AE2 reads the plain text in blocks of 128 bits (Step S146), and outputs the encryption key and the read blocks to the encryption scheme program Enc2. The encryption application program AE2 subsequently directs the encryption scheme program Enc2 to perform encryption computation on the output blocks (Step S147).
After receiving encrypted blocks from the encryption scheme program Enc2, the encryption application program AE2 writes the received encrypted blocks to the information storage unit 310 (Step S148). The encryption application program AE2, then, judges whether the blocks making up the plain text yet include unencrypted blocks (Step S149), and, in the case when there is any unencrypted block (Step S149 : NO), returns to Step S146 and repeats Steps S146 to S149 to generate a ciphertext. If all blocks have been encrypted (Step S149: YES), the encryption application program AE2 outputs the generated ciphertext, and ends the process.

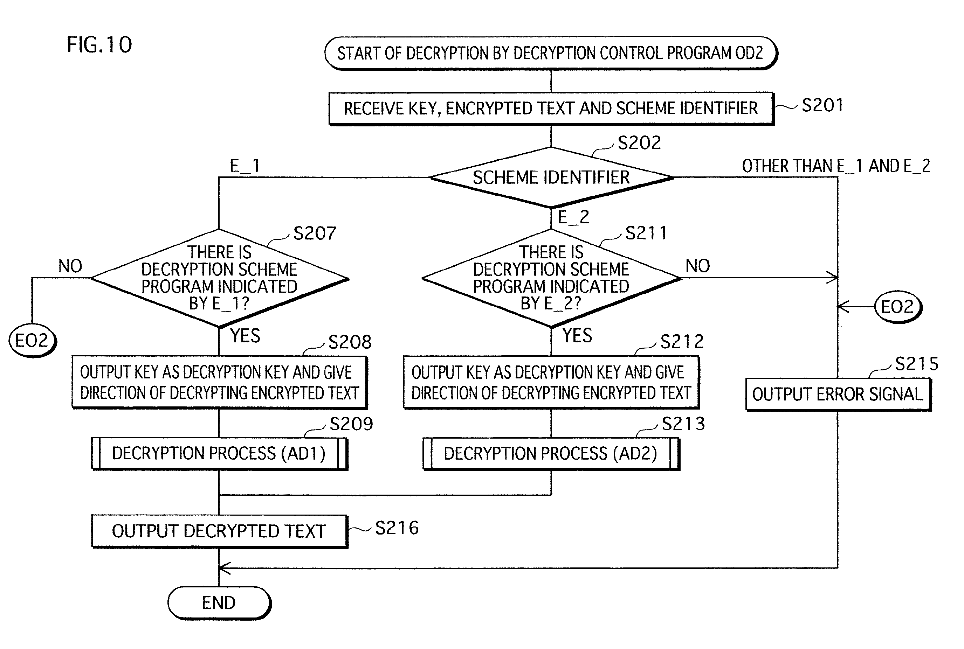

[Decryption Control Program OD2 663]
The decryption control program OD2 is described with the aid of a flowchart shown in FIG. 10.
The decryption control program OD2 receives a key, a ciphertext, and a scheme identifier indicating an encryption scheme used for generating the ciphertext (Step S201). Here, combinations of the key and the ciphertext received by the decryption control program OD2 are, for example, a combination of a session key Kb' and an encrypted content key Enc1 (K_E1B, KEYa), a combination of the content key KEYa and the encrypted contents Enc1 (KEYa, Cona), and a combination of a SD key Kmi and an encrypted device key Enc1 (Kmi, Dev_2).

Next, the decryption control program OD2 judges the received scheme identifier (Step S202). If determining that the scheme identifier is "E_1" (Step S202), the decryption control program OD2 further judges whether a decryption scheme program Dec1 indicated by the scheme identifier "E_1" is present in the program memory 311 (Step S207), and proceeds the process to Step S215 when determining that it is not present.
When determining that the decryption scheme program Dec1 indicated by the scheme identifier "E_1" is present in the program memory 311 (Step S207: YES), the decryption control program OD2 outputs, to the decryption application program AD1, the received key as a decryption key, and directs the decryption application program AD1 to decrypt the ciphertext (Step S208). Subsequently, the decryption control program OD2 receives the decrypted text from the decryption application program AD1 (Step S209), and outputs the received decrypted text before ending the process (Step S216). The encryption application program AD1 is hereinafter described.

If determining that the scheme identifier is "E_2" (Step S202), then the decryption control program OD2 judges whether a decryption scheme program Dec2 indicated by the scheme identifier "E_2" is present in the program memory 311 (Step S211). When determining that it is not present, the decryption control program OD2 precedes the process to Step S215.
If determining that the decryption method program Dec2 indicated by the scheme identifier "E_2" is present in the program memory 311 (Step S211: YES), the decryption control program OD2 outputs, to the decryption application program AD2, the received key as a decryption key, and directs the decryption application program AD2 to decrypt the ciphertext (Step S212). After receiving a decrypted text from the decryption application program AD2 (Step S213), the decryption control program OD2 proceeds the process to Step S216.

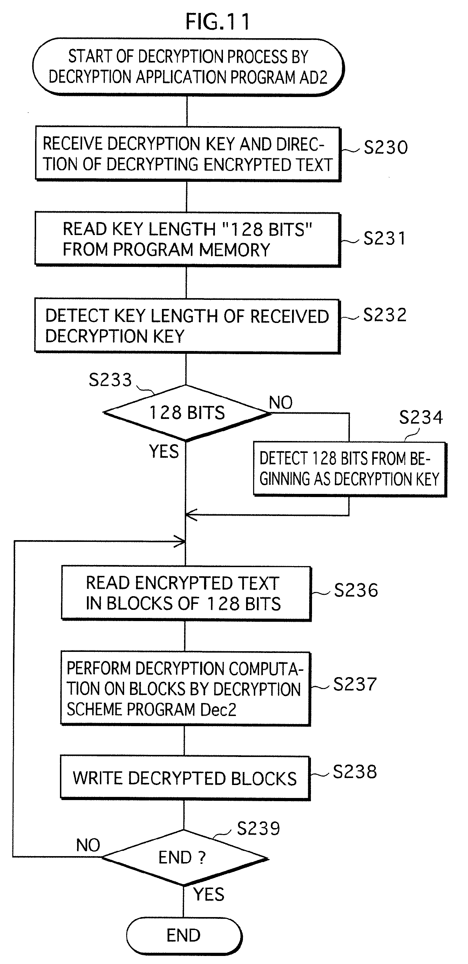

If determining that the scheme identifier is other than "E_1" and "E_2" (Step S202), the decryption control program OD2 outputs an error signal indicating that the ciphertext cannot be decrypted (Step S215), and ends the process.
[Decryption Application Program AD2 665]
The decryption application program AD2 is described with the aid of a flowchart shown in FIG. 11.

The decryption application program AD2 receives a decryption key and a direction to decrypt a ciphertext (Step S230). Then, the decryption application program AD2 reads the key length 349, "128", from the program memory 311 (Step S231), and detects the key length of the received key (Step S232). The decryption application program AD2 compares the detected key length and the read key length 349, "128" (Step S233), and directly proceeds the process to Step S236 when determining that the detected key is 128 bits (Step S233: YES). If determining that the detected key length is not 128 bits (Step S233: NO), the decryption application program AD2 extracts 128 bits from the beginning of the received decryption key, and uses this as a decryption key (Step S234).

Then, the decryption application program AD2 reads the ciphertext in blocks of 128 bits (Step S236). The decryption application program AD2 outputs the decryption key and the read blocks to the decryption scheme program Dec2, and then directs the decryption scheme program Dec2 to perform decryption computation on the output blocks (Step S237).
Subsequently, the decryption application program AD2 receives decrypted blocks from the decryption scheme program Dec2, and writes the received decrypted blocks to the information storage unit 310 (Step S238). The decryption application program AD2, then, judges whether the blocks making up the ciphertext yet include undecrypted blocks (Step S239), and, in the case when there is any undecrypted block (Step S239: NO), returns to Step S236 and repeats Steps S236 to S239 to generate a decrypted text. If all blocks have been decrypted (Step S239 : YES), the decryption application program AD2 outputs the generated decrypted text, and ends the process.

(F) Program File P_{II} 671
The Program File P_{II} 671 comprises, as shown in FIG. 7: an encryption application program APE2 673; a decryption application program APD2 674; a scheme identifier 675, "P_2"; an encryption scheme program Pec2 676; and a decryption scheme program Pdc2 677.

The encryption application program APE2 673 is a program for reading a plain text in appropriate lengths and directing the encryption scheme program Pec2 676 to perform encryption computation on the read plain text. The encryption scheme program Pec2 676 is a program including procedure of encryption computation based on an encryption scheme indicated by the scheme identifier 675, "P_2". The scheme identifier 675, "P_2", is an identifier indicating an elliptic curve encryption scheme, for example.

The decryption application program APD2 674 is a program for reading a ciphertext in appropriate lengths and directs the decryption scheme program Pdc2 677 to perform decryption computation. The decryption scheme program Pdc2 677 is a program including computation procedure for decrypting a ciphertext which has been encrypted by the encryption scheme program "Pec2". Note that, since the elliptic curve encryption scheme is publicly known technology, the explanation is omitted here.

Each computer program is composed of directions in a plurality of machine code formats. These machine code formats are formats executed by an authentication unit 303 (described hereinafter) of the memory card 300.
The following explains operational processing of each computer program described above. To facilitate understanding, the operational processing of each computer program is described using not directions in machine code formats, but a flowchart.

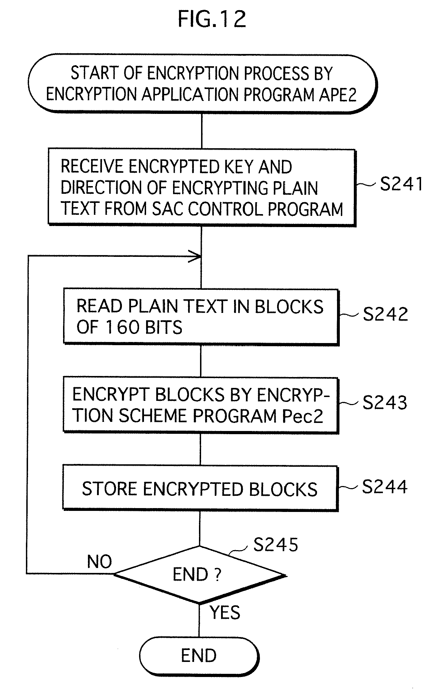

[Encryption Application Program APE2 673]
The encryption application program APE2 is a program called by a SAC control program to be hereinafter described. The encryption application program APE2 is described with the aid of a flowchart shown in FIG. 12
The encryption application program APE2 receives an encryption key and a direction to encrypt a plain text from the SAC control program (Step S241). Next, the encryption application program APE2 reads the plain text in blocks of 160 bits (Step S242). The encryption application program APE2 outputs the read blocks and encryption key to the encryption scheme program Pec2, and then directs the encryption scheme program Pec2 to perform encryption computation on the output blocks (Step S243). After receiving encrypted blocks from the encryption scheme program Pec2, the encryption application program APE2 writes the received encrypted blocks to the information storage unit 310 (Step S244). The encryption application program APE2, then, judges whether all the blocks making up the plain text have been encrypted (Step S245), and, in the case when there is any unencrypted block (Step S245: NO), returns to Steps S242 and repeats Steps S242 to S245 to generate a ciphertext. If no unencrypted block is present (Step S245: YES), the encryption application program APE2 outputs the generated ciphertext, and the process is moved on to the SAC control program.

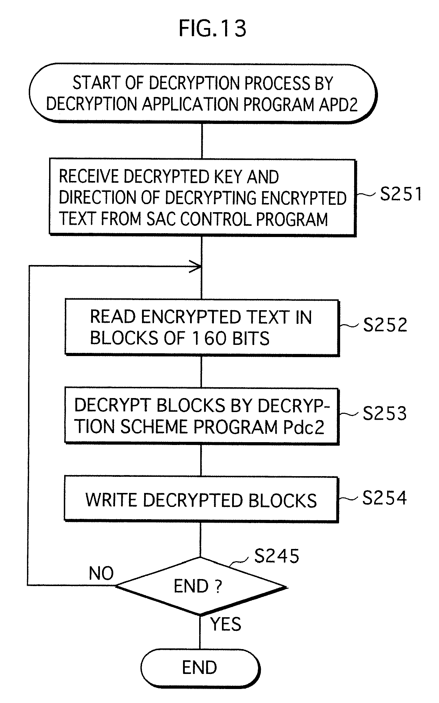

[Decryption Application Program APD2 674]
The decryption application program APD2 is a program called by the SAC control program to be hereinafter described. The decryption application program APD2 is described with the aid of a flowchart shown in FIG. 13.
The decryption application program APD2 receives a decryption key and a direction to decrypt a ciphertext from the SAC control program (Step S251). Next, the decryption application program APD2 reads the ciphertext in blocks of 160 bits (Step S252). The decryption application program APD2 outputs the received decryption key and the read blocks to the decryption scheme program Pdc2, and then directs the decryption scheme program Pdc2 to perform decryption computation on the output blocks (Step S253). After receiving decrypted blocks from the decryption scheme program Pdc2, the decryption application program APD2 writes the received decrypted blocks to the information storage unit 310 (Step S254). The decryption application program APD2 judges whether the blocks making up the ciphertext include yet undecrypted blocks (Step S255), and, in the case when there is any undecrypted block (Step S255: NO), returns to Steps S252 and repeats Steps S252 to S255 to generate a decrypted text. If no undecrypted block is present (Step S255: YES), the decryption application program APD2 outputs the generated decrypted text, and the process is moved on to the SAC control program.

(2) Transmitting and Receiving Unit 601
The transmitting and receiving unit 601 is connected to the Internet 20, and performs transmission and reception of information between external devices connected to the Internet 20 and the control unit 607, or and the authentication unit 603. Here, the external devices are, specifically speaking, the mobile phone 700 and the memory card 300 placed in the mobile phone 700.

(3) Authentication Unit 603
The authentication unit 603 shares common session keys with the external devices and establishes safe communication paths, or SACs (Secure Authentication Channels), prior to the security management device 600 communicating with the external devices.
(4) Control Unit 607
In the case when an encryption scheme indicated by the scheme identifier "E_1" is broken, the control unit 607 receives a direction from the operator via the input unit 613, and transmits the program file Eᵢᵢ 641 to the broadcast station 70 via the Internet 20 according to the received direction.

In the case when an encryption scheme indicated by the scheme identifier "P_1" is broken, the control unit 607 receives a direction from the operator via the input unit 613, and transmits the program file Pᵢᵢ 671 to the broadcast station 70 via the Internet 20 according to the received direction.
In addition, the control unit 607 obtains the latest CRL (Certificate Revocation list) from a certificate authority on a regular basis, and transmits the obtained CRL to the broadcast station 70 via the Internet 20. The certificate authority and CRL are hereinafter described.

The control unit 607 also receives, from the memory card 300 via the Internet 20 and transmitting and receiving unit 601, scheme identifiers indicating encryption schemes that the memory card 300 is currently using, and receives a request of examining the safety of these encryption schemes indicated by the received scheme identifiers.
When receiving, from the memory card 300, the scheme identifiers "E_1" and "P_1" indicating encryption schemes that the memory card 300 is currently using, as well as the request of examining the security of these encryption schemes indicated by the scheme identifiers "E_1" and "P_1", the control unit 607 searches, in the revoked encryption scheme list 621, encryption scheme information sets including the received scheme identifiers "E_1" and "P_1". As a result of the search, if both the scheme identifiers "E_1" and "P_1" are detected, the following process (i) is carried out. If only the scheme identifier "E_1" is detected, the following process (ii) is carried out. If only the scheme identifier "P_1" is detected, the following process (iii) is carried out. If neither the scheme identifier "E_1" nor the scheme identifier "P_1" is detected, the following process (iv) is carried out.

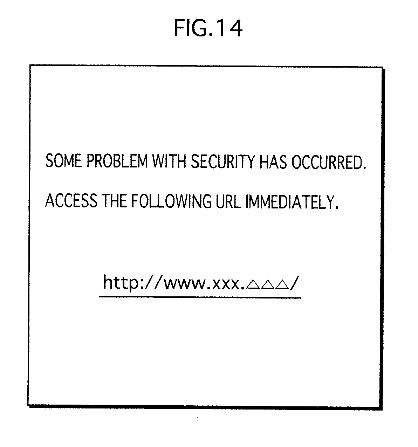

The details of processes (i) to (iv) are given below.
(i) In the Case Both Scheme Identifiers "E_1" and "P_1" are Detected
   The control unit 607 generates emergency screen data, and transmits the generated emergency screen data to the memory card 300 via the transmitting and receiving unit 601. FIG. 14 is an example of a screen generated from such emergency screen data.

(ii) In the Case Only Scheme Identifier "E_1" is Detected
The control unit 607 performs an update process of an encryption scheme indicated by the scheme identifier "E_1" in the following procedure: (ii-a) transmission of a program file; and (ii-b) transmission of a device key.

The descriptions of the processes (ii-a) and (ii-b) are given below.
(ii-a) Transmission of Program File
The control unit 607 generates an update direction which directs an update of the encryption scheme indicated by the scheme identifier "E_1", and transmits the generated update direction to the memory card 300 via the transmitting and receiving unit 601.

Next, the control unit 607 receives the scheme identifier "E_1" and an updating start request from the memory card 300.
The control unit 607 selects, from the revoked encryption scheme list 621 in the information storage unit 610, the encryption scheme information set 623 including the same identifier as the received scheme identifier "E_1". Then, the control unit 607 reads the program file E_{II} 661 based on the program file name included in the selected encryption scheme information set 623, and transmits the read program file E_{II} 661 to the memory card 300 via the transmitting and receiving unit 601.

(ii-b) Transmission of Device Key
Next, the control unit 607 directs the authentication unit 603 to establish a SAC. When the establishment of a SAC is completed, the control unit 607 receives a session key Kc from the authentication unit 603. Then, the control unit 607 extracts 128 bits from the beginning of the received session key Kc, and uses this as a common key K_E2C.
Then, the control unit 607 selects, from the revoked encryption scheme list 621, the encryption scheme information set 623 including the same identifier as the scheme identifier "E_1" received from the memory card 300. The control unit 607 extracts the device key Dev_2 from the selected encryption scheme information set 623, and encrypts the extracted device key Dev_2 according to an encryption scheme indicated by the scheme identifier "E_2", using the common key K_E2C, to thereby generate an encrypted device key Enc2(K_E2C, Dev_2). Subsequently, the control unit 607 transmits the generated encrypted device key Enc2(K_E2C, Dev_2) and the scheme identifier "E_2" indicating the encryption scheme used to generate the encrypted device key to the memory card 300 via the transmitting and receiving unit 601.

(iii) In the Case Only Scheme Identifier "P_1" is Detected
The control unit 607 performs an update process of an encryption scheme indicated by the scheme identifier "P_1" in the following procedure: (iii-a) transmission of a program file; and (iii-b) generation of keys and transmission of public key certificates.

The descriptions of processes (iii-a) and (iii-b) are given below.
(iii-a) Transmission of Program File
The control unit 607 generates an update direction which directs an update of an encryption scheme indicated by the scheme identifier "P_1", and transmits the generated update direction to the memory card 300 via the transmitting and receiving unit 601.

Next, when receiving the scheme identifier "P_1" and an updating start request from the memory card 300, the control unit 607 selects, from the revoked encryption scheme list 621 in the information storage unit 610, the encryption scheme information set 615 including the same identifier as the scheme identifier "P_1". The control unit 607 then reads the program file P_{II} 671 based on the program file name included in the selected encryption scheme information set 615, and transmits the read program file P_{II} 671 to the memory card 300 via the transmitting and receiving unit 601.

(iii-b) Generation of Keys and Transmission of Public Key Certificates
Next, the control unit 607 generates a key pair of a private key SK_X2 and a public key PK_X2 and a key pair of a private key SK_L2 and a public key PK_L2, and obtains, from the certificate authority, public key certificates Cert_X2 and Cert_L2 of the generated public keys PK_X2 and PK_L2, respectively. Each of the public key certificates includes: an ID number specifically allocated to the public key certificate; a key value of the public key certified by the public key certificate; and signature data of the certificate authority, which is an issuer.

These key pairs are keys used for encryption and decryption according to the encryption scheme indicated by the scheme identifier "P_2". The encryption scheme indicated by the scheme identifier "P_2" is, for example, an elliptic curve encryption scheme. The generation method of these key pairs is publicly known, and the description is therefore omitted here.
Then, the control unit 607 requests the memory card 300, via the transmitting and receiving unit 601, to send its card ID. When receiving a card ID "I5000D" from the memory card 300, the control unit 607 selects the SD key information set 632 from the SD key list 631 based on the received card ID "I5000D", and reads the SD key Kmi included in the selected SD key information set 632.

The control unit 607 subsequently encrypts the private key and public key certificate according to an encryption scheme indicated by the scheme identifier "E_1", using the read SD key Kmi, and generates an encrypted private key Enc1(Kmi, SK_X2), an encrypted public key certificate Enc1(Kmi, Cert_X2), an encrypted private key Enc1(Kmi, SK_L2) and an encrypted public key certificate Enc1(Kmi, Cert_L2). At this point, if the bit length of the SD key Kmi is larger than 56 bits, which is a key length suited to the encryption scheme indicated by the scheme identifier "E_1", the control unit 607 extracts 56 bits from the beginning of the SD key Kmi, and uses this for the encryption.

Then, the control unit 607 transmits, to the memory card 300 via the transmitting and receiving unit 601, the generated encrypted private key Enc1(Kmi, SK_X2), encrypted public key certificate Enc1(Kmi, Cert_X2), encrypted private key Enc1(Kmi, SK_L2) and encrypted public key certificate Enc1(Kmi, Cert_L2).
(iv) In the Case Neither Scheme Identifier "E_1" nor Scheme Identifier "P_1" is Detected
The control unit 607 generates a safety notification signal showing that both encryption schemes indicated by the scheme identifiers "E_1" and "P_1", respectively, are safe, and transmits the generated safety notification signal to the memory card 300 via the transmitting and receiving unit 601.

(5) Input Unit 613 and Display Unit 612
The input unit 613 receives an input of information or a direction from the operator of the security management device 600, and outputs the received information or direction to the control unit 607.
The display unit 612 displays a variety of screens according to directions from the control unit 607.
*1.4 Broadcast Station 70*
The broadcast station 70 receives a CRL and the program file Eᵢᵢ or program file Pᵢᵢ from the security management device 600 via the Internet 20.

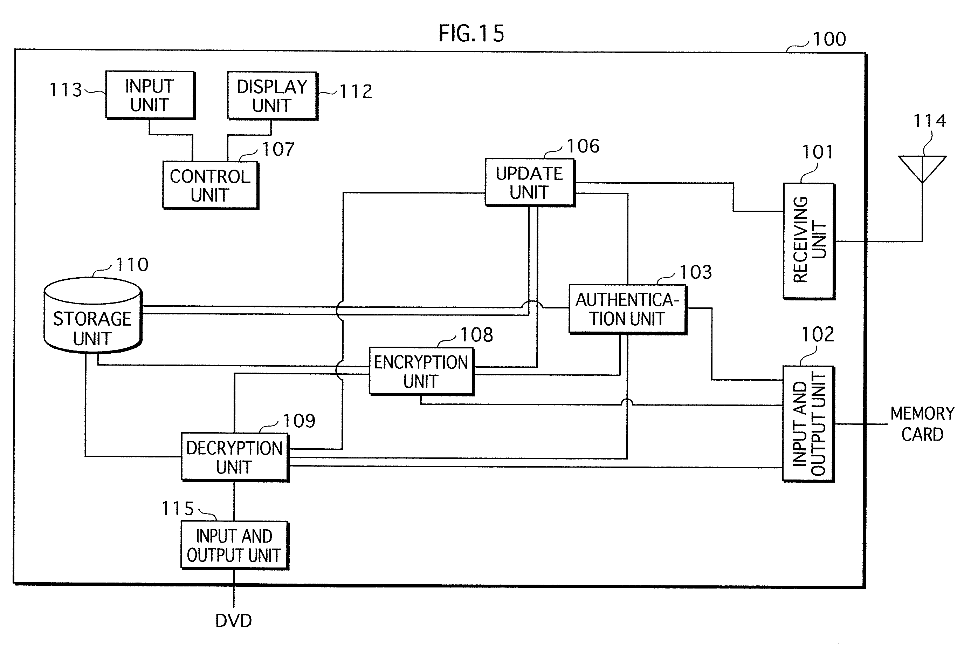

The broadcast station 70 includes an amplifier, a modulator, an antenna and so on, and converts the received CRL and program file Eᵢᵢ or program file Pᵢᵢ into broadcast waves and transmits them.
*1.5 Home Server Device 100*
The home server device 100 comprises, as shown in FIG. 15: a receiving unit 101; an input and output unit 102; an authentication unit 103; an update unit 106; a control unit 107; an encryption unit 108; a decryption unit 109; a storage unit 110; a display unit 112; an input unit 113 ; an antenna 114 ; and an input and output unit 115.

The home server device 100 is composed of a micro processing unit, RAM, ROM, hard disk and so on, which are not specifically shown in the figure. Computer programs are stored in the RAM, ROM, hard disk and storage unit 110. The micro processing unit operates according to the computer programs, and thereby the home server device 100 fulfills its function.

In addition, the DVD 500a or DVD 500b and the memory card 300 are placed in the home server device 100.
(1) Receiving Unit 101 and Antenna 114
The receiving unit 101 and antenna 114 receive information transmitted from the broadcast station 70 through broadcast waves.

The receiving unit 101 includes an amplifier and a modulator, and amplifies broadcast waves received by the antenna 114 and modulates the amplified broadcast waves.
(2) Input and Output Units 102 and 115
The input and output unit 102 outputs, to the control unit 107, a card detecting signal which indicates detection of a memory card when the memory card 300 is placed into the home server device 100.

In addition, the input and output unit 102 writes/reads information to/from the memory card 300 according to control of the authentication unit 103, update unit 106 and control unit 107.
The input and output unit 115 outputs, to the control unit 107, a disk detecting signal which indicates detection of a DVD when the DVD 500a or DVD 500b is placed into the home server device 100.

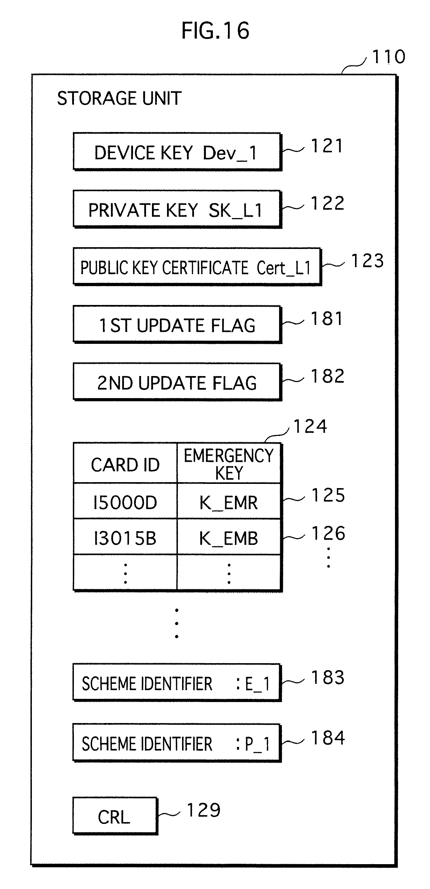

The input and output unit 115 reads information stored in the DVD 500a or 500b according to direction of the control unit 107.
(3) Storage Unit 110
The storage unit 110 is structured from a hard disk unit, and stores therein, for example, a device key Dev_1 121, a private key SK_L1 122, a public key certificate Cert_L1 123, an emergency key list 124, a CRL 129, a 1st update flag 181, a 2nd update flag 182, a scheme identifier 183, "E_1", and a scheme identifier 184, "P_1", as shown in FIG. 16.

The public key certificate Cert_L1 123 certifies a public key paired with the private key SK_L1 122, and includes an ID number, a key value of the public key and signature data of the certificate authority. The signature data of the certificate authority is generated by applying a signature generation algorithm S to the public key paired with the private key SK_L1 122, using a private key of the certificate authority. Here, the certificate authority is a third-party organization, which issues a public key certificate for certifying the validity of a public key of each device belonging to the update system 10. Note that one example of the signature generation algorithm S is Elgamal signature over a finite field. Since the Elgamal signature is publicly known, the description is omitted.

The emergency key list 124 is composed of a plurality of emergency key information sets 125, 126..., and each emergency key information set includes a card ID and an emergency key. The card ID is memory-card specific information which identifies a memory card placed into the home server device 100. The emergency key is an encryption key value used in the case of communicating with a memory card identified by the card ID in the event of an emergency. Here, the "event of an emergency" is a time when a public-key encryption scheme used for the communication between the home server device 100 and the memory card 300 is changed.

The CRL 129 is created by the certificate authority, which is an issuer of public key certificates, and includes ID numbers of revoked public key certificates.
The 1st update flag 181 is a flag indicating whether an update process of the symmetric-key encryption scheme has been completed, and is a value of either "0" or "1". The value "0" indicates that the updates of the encryption unit 108 and decryption unit 109 have been completed, but a new device key has not been obtained. The value "1" indicates that the updates of the encryption unit 108 and decryption unit 109 as well as the acquisition of a new device key have been completed.

The 2nd update flag 182 is a flag indicating whether an update process of the public-key encryption scheme has been completed, and is a value of either "0" or "1". The value "0" indicates that the update of the authentication unit 103 has been completed, but a new private key and public key certificate have not yet been obtained. The value "1" indicates the update of the authentication unit 103 as well as the acquisition of a new private key and public key certificate have been completed (the updates of the encryption unit 108, decryption unit 109 and authentication unit 103 will be described hereinafter).
The scheme identifiers 183 and 184, "E_1" and "P_1", are identifiers indicating the symmetric-key encryption scheme and the public-key encryption scheme, respectively, of the home server device 100.

(4) Control Unit 107
The control unit 107 receives a card detecting signal and a disk detecting signal from the input and output unit 102 and the input and output unit 115, respectively. In addition, the control unit 107 receives a CRL via the antenna 114 and receiving unit 101.
The control unit 107 performs an update of the CRL, generation of an emergency key, and playback or copy of contents.

These processes are described below.
(i) Update of CRL
   The control unit 107 obtains the latest CRL from the broadcast station 70 via the receiving unit 101 and antenna 114, and then rewrites the CRL 129 of the storage unit 110 with the latest CRL obtained.
(ii) Generation of Emergency Key
   Receiving the card detecting signal from the input and output unit 102, the control unit 107 requests a card ID from the memory card 300 via the input and output unit 102, and receives the card ID "I5000D" from the memory card 300 via the input and output unit 102.

Receiving the card ID "I5000D", the control unit 107 judges whether the card ID "I5000D" has already been included in the emergency key list 124, and finishes the process of generating an emergency key if determining that the card ID "I5000D" has already been included in the emergency key list 124.
When determining that the card ID "I5000D" has not been stored in the emergency key list 124, the control unit 107 generates a 256-bit length random number, generates a 32-bit ID code by converting as well as each of the numbers and character codes―i.e. alphabets―included in the received card ID "I5000D" into a binary-coded form of four bits, and then obtains 48-bit current date-and-time information. Subsequently, the control unit 107 breaks (a) the generated random number, from the beginning, into 16 bits each, (b) the ID code, from the beginning, into 2 bits each and (c) the current date-and-time information, from the beginning, into 3 bits each, and arranges the 16 bits, 2 bits and 3 bits of these by turns from the beginning and then joins all to generate a 336-bit length emergency key K_EMR.

Next, the control unit 107 directs the authentication unit 103 to establish a SAC. After the authentication unit 103 has established a SAC, the control unit 107 receives a session key Ka, then outputs the received session key Ka as an encryption key while outputting the generated emergency key K_EMR as a plain text, and directs the encryption unit 108 to encrypt the plain text. Receiving, from the encryption unit 108, the ciphertext as an encrypted emergency key Enc1(K_E1A, K_EMR) and the scheme identifier "E_1" indicating an encryption scheme used for the encryption, the control unit 107 transmits the received encrypted emergency key Enc1(K_E1A, K_EMR) and scheme identifier "E_1" to the memory card 300 via the input and output unit 102.

Then, the control unit 107 writes emergency key information including the received card ID "I5000D" and the generated emergency key K_EMR additionally to the emergency key list 124
(iii) Playback or Copy of Contents
The following explains only the case when the DVD 500a is placed in the home server device 100, and omits the description of the case when the DVD 500b is placed therein since the same process takes place.

Receiving a disk detecting signal from the input and output unit 115, the control unit 107 reads the key file 510a from the DVD 500a via the input and output unit 115. Then, the control unit 107 extracts the scheme identifier 512a, "E_1", and the encrypted content key Enc1(Dev_1, KEYa) 511a from the read key file 510a, and reads the device key Dev_1 121 from the storage unit 110. The control unit 107 subsequently outputs to the decryption unit 109: the extracted scheme identifier 512a, "E_1"; the encrypted content key Enc1(Dev_1, KEYa) 511a as a ciphertext; and the read device key Dev_1121 as a decryption key. The control unit 107 then directs the decryption unit 109 to decrypt the ciphertext.

Receiving, from the decryption unit 109, an error signal indicating that the ciphertext cannot be decrypted, the control unit 107 generates an error screen which displays notification that the contents of the DVD 500a cannot be read, and outputs the generated error screen to the display unit 112.
In the case of not receiving the error signal, the control unit 107 receives, as a decrypted text, the content key KEYa from the decryption unit 109, and writes the received content key KEYa to the storage unit 110.

Next, the control unit 107 receives, from the input unit 113, operation directing information corresponding to the user's operation on the keys.
Receiving operation directing information indicating playback of the contents from the input unit 113, the control unit 107 reads the content file 515a from the DVD 500a. Next, the control unit 107 extracts the encrypted contents Enc1(KEYa, Cona) 516a and the scheme identifier 517a, "E_1", from the read content file 515a, and reads the content key KEYa from the storage unit 110. The control unit 107 subsequently outputs to the decryption unit 109: the extracted encrypted contents Enc1(KEYa, Cona) 516a as a ciphertext; the read content key KEYa as a decryption key; and the scheme identifier 517a, "E_1". The control unit 107 then directs the decryption unit 109 to decrypt the ciphertext.

If receiving from the decryption unit 109 an error signal indicating that the ciphertext cannot be decrypted, the control unit 107 generates an error screen indicating that the contents of the DVD 500a cannot be read, and outputs the generated error screen to the display unit 112.
After the decryption unit 109 has properly performed the decryption process, the control unit 107 receives the contents Cona from the decryption unit 109, and then outputs the received contents Cona to a personal computer 50.

In addition, when receiving, from the input unit 113, operation directing information indicating copy of the contents, the control unit 107 reads the scheme identifier 517a, "E_1", from the content file 515a of the DVD 500a, transmits the read scheme identifier 517a, "E_1", to the memory card 300 via the input and output unit 102, and inquires whether the ciphertext generated by an encryption scheme indicated by the scheme identifier "E_1" can be decrypted. The control unit 107 receives, from the memory card 300 via the input and output unit 102, a judgment result showing whether there is a decryption scheme program indicated by the scheme identifier "E_1". If the received judgment result is "0", the control unit 107 generates an error screen showing that copying to the memory card 300 cannot be performed, and outputs the generated error screen to the display unit 112.

When the judgment result received from the memory card 300 is "1", the control unit 107 reads the content file 515a from the DVD 500a. Next, the control unit 107 directs the authentication unit 103 to establish a SAC, and receives a session key Kb from the authentication unit 103 after a SAC is established by the authentication unit 103. The control unit 107 reads the content key KEYa from the storage unit 110. Then, the control unit 107 outputs to the encryption unit 108: the read content key KEYa as a plain text; and the received session key Kb as an encryption key, and directs the encryption unit 108 to encrypt the plain text.

Receiving from the encryption unit 108, as the ciphertext, an encrypted content key Enc1(K_E1B, KEYa) as well as the scheme identifier "E_1" indicating an encryption scheme used for generating the encrypted content key Enc1(K_E1B, KEYa), the control unit 107 outputs the received encrypted content key Enc1(K_E1B, KEYa) and scheme identifier "E_1" as well as the read content file 515a to the memory card 300 via the input and output unit 102.

In addition, when receiving, via the input unit 113, operation directing information indicating a process other than the above-mentioned processes, the control unit 107 performs the process.
(5) Update Unit 106
The update unit 106 has an FPGA writing device (FPGA is described hereinafter).
The update unit 106 receives the program file Eᵢᵢ or Pᵢᵢ from the broadcast station 70 via the receiving unit 101.

When receiving the program file Eᵢᵢ, the update unit 106 starts an update of the symmetric-key encryption scheme. On the other hand, if receiving the program file Pᵢᵢ, the update unit 106 starts an update of the public-key encryption scheme. These processes are described below.
(i) Update of Symmetric-Key Encryption Scheme
Receiving the program file Eᵢᵢ, the update unit 106 performs the update of the symmetric-key encryption scheme in the procedure of: (i-a) updates of the encryption unit 108 and decryption unit 109; and (i-b) acquisition of a device key. The following explains the processes (i-a) and (i-b).

(i-a) Updates of Encryption Unit 108 and Decryption Unit 109
The update unit 106 extracts the scheme identifier "E_2" from the received program file Eᵢᵢ, and searches the same identifier as the extracted scheme identifier "E_2" in the storage unit 110. If the same identifier is present in the storage unit 110, the update unit 106 moves on to the process (i-b).
If the same identifier is not present in the storage unit 110, the update unit 106 writes the extracted scheme identifier "E_2" to the storage unit 110.

Subsequently, the update unit 106 extracts an encryption-unit update program from the received program file Eᵢᵢ, rewrites the FPGA making up the encryption unit 108 according to the procedure shown by the extracted encryption-unit update program, and establishes a circuit having a function to perform encryption in compliance with an encryption scheme indicated by the scheme identifier "E_2". To be more specific, the update unit 106 generates arbitrary logical function circuits on a plurality of CLBs (Configuration Logic Blocks) making up the FPGA, and establishes a circuit by connecting the generated logical function circuits using connection resources present between each CLB. In addition, the update unit 106 writes the received encryption-unit update program to config ROM attached to the FPGA element.

Next, the update unit 106 extracts a decryption-unit update program from the received program file Eᵢᵢ, rewrites an FPGA making up the decryption unit 109 according to the procedure shown by the extracted decryption-unit update program, and establishes a circuit having a function to perform decryption in compliance with encryption schemes indicated by the scheme identifiers "E_1" and "E_2".
Then, the update unit 106 sets the 1st update flag 181 of the storage unit 110 to "0".

(i-b) Acquisition of Device Key
Receiving a request of the 1st update flag from the memory card 300 while the memory card 300 is placed in the home server device 100, the update unit 106 reads the update flag 181 "0" from the storage unit 110, and transmits the read 1st update flag 181 "0" to the memory card 300 via the input and output unit 102.

Then, receiving a public key certificate Cert_X1 from the memory card 300, the update unit 106 outputs the received public key certificate Cert_X1 and directs the authentication unit 103 to establish a SAC.
After a SAC is established by the authentication unit 103, the update unit 106 receives a session key Kd', and then receives an encrypted device key Enc2(K_E2D, Dev_2) and the scheme identifier "E_2" from the memory card 300 via the input and output unit 102. The update unit 106 outputs: the received scheme identifier "E_2"; the received encrypted device key Enc2(K_E2D, Dev_2) as a ciphertext; and the session key Kd' as a decryption key to the decryption unit 109. The update unit 106 then directs the decryption unit 109 to decrypt the ciphertext. Receiving the device key Dev_2 as a decrypted text, the update unit 106 writes the received device key Dev_2 to the storage unit 110.

Next, the update unit 106 sets the 1st update flag 181 of the storage unit 110 to "1", which herewith completes the update process of the symmetric-key encryption scheme.
From here onward, when receiving a request of the 1st update flag from the memory card 300, the update unit 106 reads the 1st update flag 181 "1" from the storage unit 110 and transmits the read 1st update flag 181 "1" to the memory card 300.

(ii) Update of Public-key Encryption Scheme
Receiving the program file Pᵢᵢ via the receiving unit 101, the update unit 106 performs the update of the public-key encryption scheme in the procedure of: (ii-a) update of the authentication unit 103; and (ii-b) acquisition of a private key and a public key certificate. The following explains the processes (ii-a) and (ii-b).

(ii-a) Update of Authentication Unit 103
The update unit 106 extracts a scheme identifier "P_2" from the received program file Pᵢᵢ, and searches the same identifier as the extracted scheme identifier "P_2" in the storage unit 110. If the same identifier is present in the storage unit 110, the update unit 106 moves on to the process (ii-b).
If determining that the same identifier is not present in the storage unit 110, the update unit 106 writes the extracted scheme identifier "P_2" to the storage unit 110, and deletes the scheme identifier 184 "P_1" from the storage unit 110.

Next, the update unit 106 extracts an authentication-unit update program from the received program file Pᵢᵢ, rewrites the FPGA making up the authentication unit 103 according to the procedure shown by the extracted authentication-unit update program, and establishes a circuit having a function to establish a SAC using the scheme identifier "P_2". To be more specific, the update unit 106 establishes a circuit by connecting a plurality of CLBs making up the FPGA using connection resources which are present between each CLB. In addition, the update unit 106 writes the received authentication-unit update program to config ROM attached to the FPGA element.

Then, the update unit 106 sets the 2nd update flag 182 of the storage unit 110 to "0".
(ii-b) Acquisition of Private Key and Public Key Certificate
Receiving a request of the 2nd update flag from the memory card 300 via the input and output unit 102 while the memory card 300 is placed in the home server device 100, the update unit 106 reads the 2nd update flag 182 "0" from the storage unit 110, and transmits the read 2nd update flag 182 "0" to the memory card 300 via the input and output unit 102.

After receiving, from the memory card 300, the card ID "I5000D", the encrypted private key Enc1(K_EMR, SK_L2), the encrypted public key certificate Enc1(K_EMR, Cert_L2) and the scheme identifier "E_1", the update unit 106 selects emergency key information 125 from the emergency key list 124 stored in the storage unit 110, based on the received card ID "I5000D", and reads an emergency key K_EMR included in the selected emergency key information 125. Next, the update unit 106 outputs, to the decryption unit 109, the read emergency key K_EMR as well as the received encrypted private key Enc1(K_EMR, SK_L2), encrypted public key certificate Enc1(K_EMR, Cert_L2) and scheme identifier E_1. The update unit 106 then directs the decryption unit 109 to decrypt the encrypted private key Enc1(K_EMR, SK_L2) and the encrypted public key certificate Enc1(K_EMR, Cert_L2), using the emergency key K_EMR as a decryption key. The update unit 106 receives the private key SK_L2 and public key certificate Cert_L2 from the decryption unit 109, and writes the received private key SK_L2 and public key certificate Cert_L2 to the storage unit 110. Then, the update unit 106 deletes the private key SK_L1 122 and public key certificate Cert_L1 123 from the storage unit 110.

Next, the update unit 106 sets the 2nd update flag 182 of the storage unit 110 to "1", which herewith completes the update of the public-key encryption scheme.
From here onward, when receiving a request of the 2nd update flag from the memory card 300, the update unit 106 reads the 2nd update flag 182 "1" from the storage unit 110 and transmits the read 2nd update flag 182 "1" to the memory card 300.
(6) Encryption Unit 108
The encryption unit 108 is structured from an FPGA element, and the FPGA element is made up of an FPGA and config ROM. The FPGA is composed of a number of CLBs positioned in an array format, wiring resources positioned between each CLB, and connection switches. Each CLB is composed of function generators and flip-flop circuits, and can generate an arbitrary logical function. The config ROM has EEPROM which stores therein a program for establishing a circuit on the FPGA, and configures, for the FPGA, the program stored in the EEPROM when the power supply to the home server device 100 is started.

The encryption unit 108 has a function to perform an encryption process on the FPGA according to an encryption scheme indicated by the scheme identifier "E_1". In addition, the encryption unit 108 has a function to perform an encryption process on the FPGA according to an encryption scheme indicated by the scheme identifier "E_2", when the symmetric-key encryption scheme is updated by the update unit 106.
The encryption unit 108 receives an encryption key output from the control unit 107 and a direction to encrypt a plain text. Here, combinations of the encryption key and plain text that the encryption unit 108 receives from the control unit 107 are, for example, a combination of the session key Ka and emergency key K_EMR and a combination of the session key Kb and content key KEYa.

The following explains processes performed by the encryption unit 108 before and after the update of the symmetric-key encryption scheme, respectively.
(i) Before Update of Symmetric-Key Encryption Scheme
The encryption unit 108 receives, from the control unit 107, an encryption key and a direction to encrypt a plain text.
Then, the encryption unit 108 detects a key length of the received encryption key, and judges whether the detected key length is 54 bits. When determining that the detected key length is not 54 bits, the encryption unit 108 extracts 54 bits from the beginning of the received encryption key, and uses this as an encryption key. If the detected key length is 54 bits, the above process of extracting the encryption key is omitted.

Subsequently, the encryption unit 108 reads the plain text in blocks of 64 bits, and applies, to each of the read blocks, encryption computation based on an encryption scheme indicated by the scheme identifier "E_1", using the encryption key, to thereby generate an encrypted block. The encryption unit 108 writes the generated encrypted block to the storage unit 110.
Until encryption of all blocks making up the plain text is completed, the encryption unit 108 repeats processes of reading a block, encrypting the read block and writing the encrypted block, and thereby generates a ciphertext.

When encryption of all blocks is finished, the encryption unit 108 outputs the generated ciphertext and the scheme identifier "E_1" indicating an encryption scheme used for the encryption.
(ii) After Update of Symmetric-Key Encryption Scheme
The encryption unit 108 receives, from the control unit 107, an encryption key and a direction to encrypt a plain text.
Then, the encryption unit 108 detects a key length of the received encryption key, and judges whether the detected key length is 128 bits. When determining that the detected key length is not 128 bits, the encryption unit 108 extracts 128 bits from the beginning of the received encryption key, and uses this as an encryption key. If the detected key length is 128 bits, the above process of extracting the encryption key is omitted.

Subsequently, the encryption unit 108 reads the plain text in blocks of 128 bits, and applies, to each of the read blocks, encryption computation based on an encryption scheme indicated by the scheme identifier "E_2", using the encryption key, to thereby generate an encrypted block. The encryption unit 108 writes the generated encrypted block to the storage unit 110.
Until encryption of all blocks making up the plain text is completed, the encryption unit 108 repeats processes of reading a block, encrypting the read block and writing the encrypted block, and thereby generates a ciphertext.

When encryption of all blocks is finished, the encryption unit 108 outputs the generated ciphertext and the scheme identifier "E_2" indicating an encryption scheme used for the encryption.
(7) Decryption Unit 109
The decryption unit 109 is structured from an FPGA element, and the FPGA element is made up of an FPGA and config ROM.

The decryption unit 109 has a function to perform a decryption process on the FPGA based on an encryption scheme indicated by the scheme identifier "E_1". In addition, the decryption unit 109 has a function to perform a decryption process on the FPGA based on encryption schemes indicated by the scheme identifiers "E_1" and "E_2", when the symmetric-key encryption scheme is updated by the update unit 106.
The decryption unit 109 receives, from the control unit 107 or update unit 106, a decryption key and a scheme identifier indicating an encryption scheme used for generating a ciphertext, and receives a direction to decrypt the encryption text.

Here, combinations of a decryption key and a ciphertext received by the decryption unit 109 from the control unit 107 are, for example: a combination of the device key Dev_1 and the encrypted content key Enc1(Dev_1, KEY a); a combination of the content key KEYa and the encrypted content Enc1(KEYa, Cona) ; a combination of the device key Dev_2 and the encrypted content key Enc2(Dev_2, KEYb); and a combination of the content key KEYb and the encrypted content Enc2(KEYb, Conb).

In addition, combinations of a decryption key and a ciphertext received by the decryption unit 109 from the update unit 106 are, for example: a combination of the session key Kd' and the encrypted device key Enc2(K_E2D, Dev_2); a combination of the emergency key K_EMR and the encrypted private key Enc1(K_EMR, SK_L2); and a combination of the emergency key K_EMR and the encrypted public key certificate Enc(K_EMR, Cert_L2).

The following explains processes performed by the decryption unit 109 before and after the update of the symmetric-key encryption scheme, respectively.
(i) Before Update of Symmetric-key Encryption Scheme
The decryption unit 109 receives a decryption key, a ciphertext, a scheme identifier indicating an encryption scheme used for generating the ciphertext and a direction to decrypt the ciphertext, and identifies the received scheme identifier.

When determining that the received scheme identifier is other than "E_1", the decryption unit 109 outputs an error signal indicating that the ciphertext cannot be decrypted.
When determining that the received scheme identifier is "E_1", the decryption unit 109 detects a key length of the received decryption key, and judges whether the detected key length if 54 bits. If determining that the detected key length is not 54 bits, the decryption unit 109 extracts 54 bits from the beginning of the received decryption key, and uses this as a decryption key. When the detected key length is 54 bits, the decryption unit 109 omits the above extraction process and moves on to the next process.

Then, the decryption unit 109 reads the ciphertext in blocks of 64 bits, and applies, to each of the read blocks, decryption computation based on an encryption scheme indicated by the scheme identifier "E_1", using the decryption key, to thereby generate a decrypted block. The decryption unit 109 writes the generated decrypted block to the storage unit 110.
Until decryption of all blocks making up the ciphertext is completed, the decryption unit 109 repeats processes of reading a block, decrypting the read block and writing the decrypted block, and thereby generates a decrypted text.

When decryption of all blocks is finished, the decryption unit 109 outputs the generated decrypted text.
(ii) After Update of Symmetric-Key Encryption Scheme
The decryption unit 109 receives a decryption key, a ciphertext, a scheme identifier indicating an encryption scheme used for generating the ciphertext and a direction to decrypt the ciphertext, and identifies the received scheme identifier.
When determining that the received scheme identifier is other than "E_1" and "E_2", the decryption unit 109 outputs an error signal indicating that the ciphertext cannot be decrypted.

When determining that the received scheme identifier is "E_1", the decryption unit 109 performs the extraction of a decryption key, a decryption process based on an encryption scheme indicated by the scheme identifier "E_1", and the output of a decrypted text, in the same manner as described in the section (i) above.
When determining that the received scheme identifier is "E_2", the decryption unit 109 detects a key length of the received decryption key, and judges whether the detected key length is 128 bits. If determining that the detected key length is not 128 bits, the decryption unit 109 extracts 128 bits from the beginning of the received decryption key, and uses this as a decryption key. If the detected key length is 128 bits, the decryption unit 109 omits the above extraction process and moves on to the next process.

Subsequently, the decryption unit 109 reads the ciphertext in blocks of 128 bits, and applies, to each of the read blocks, decryption computation based on an encryption scheme indicated by the scheme identifier "E_2", using the decryption key, to thereby generate a decrypted block. The decryption unit 109 writes the generated decrypted block to the storage unit 110.
Until decryption of all blocks making up the ciphertext is completed, the decryption unit 109 repeats processes of reading a block, decrypting the read block and writing the decrypted block, and thereby generates a decrypted text.

When decryption of all blocks is finished, the decryption unit 109 outputs the generated decrypted text.
(8) Authentication Unit 103
The authentication unit 103 is structured from an FPGA element, as in the case of the encryption unit 108 and decryption unit 109.
The authentication unit 103 has a function to establish a SAC on the FPGA, using an encryption scheme indicated by the scheme identifier "P_1". In addition, the authentication unit 103 also has a function to establish a SAC on the FPGA, using an encryption scheme indicated by the scheme identifier "P_2", when the public-key encryption scheme is updated by the update unit 106.

The authentication unit 103 receives, from the control unit 107 or update unit 106, a direction to establish a SAC, or alternatively a public key certificate of a target device and a direction to establish a SAC. The target device here is the memory card 300.
The following explains processes performed by the authentication unit 103 before and after the update of the public-key encryption scheme, respectively.

(i) Before Update of Public-key Encryption Scheme
In the case of receiving only a direction to establish a SAC from the control unit 107 or update unit 106, the authentication unit 103 performs a process shown in the following section (i-a). On the other hand, if receiving a public key certificate of the target device and a direction to establish a SAC from the control unit 107 or update unit 106, the authentication unit 103 performs a process shown in the section (i-b) below to thereby establish a SAC. The processes (i-a) and (i-b) are explained next.

Note that, in the following explanation, Gen() denotes a key generation function, and Y is a parameter specific to a system. The key generation function Gen() satisfies the relationship of Gen(x, Gen(z, Y)) = Gen(z, Gen(x,Y)). The key generation function is practicable by arbitrary publicly-known technology, and therefore the detail is not described here. Non-Patent Reference 1 discloses Diffie-Hellman public key distribution scheme as one example of such a key generation function.

(i-a) The authentication unit 103 reads the public key certificate Cert_L1 123 from the storage unit 110, and outputs the read public key certificate Cert_L1 123 to the memory card 300 via the input and output unit 102.
The authentication unit 103 then receives the public key certificate Cert_X1 from the memory card 300, and performs signature validation by applying a signature validation algorithm V to a signature Sig_CA made by the certificate authority and included in the received public key certificate Cert_X1, using a public key PK_CA of the certificate authority. When the validation is not successful, the authentication unit 103 ends the process.

The signature validation algorithm V is an algorithm for examining a signature data which is generated by the signature generation algorithm S.
When the validation is successful, the authentication unit 103 reads the CRL 129 from the storage unit 110, and judges whether an ID number included in the received public key certificate Cert_X1 has been registered on the read CRL 129. If determining that it has been registered, the authentication unit 103 ends the process. When determining that it has not been registered, the authentication unit 103 moves on to the next process.

Next, the authentication unit 103 receives a random number Cha_B from the memory card 300 via the input and output unit 102. The authentication unit 103 reads the private key SK_L1 122 from the storage unit 110. Then, the authentication unit 103 reads the received random number Cha_B in blocks of 128 bits, and applies, to each of the read blocks, encryption computation based on an encryption scheme indicated by the scheme identifier "P_1", using the private key Sk_L1 to thereby generate an encrypted block. Subsequently, the authentication unit 103 writes the generated encrypted block to the storage unit 110. Until all blocks making up the random number Cha_B are encrypted, the authentication unit 103 repeats processes of reading a block, encrypting the read block and writing the encrypted block, and thereby generates a ciphertext.

When encryption of all blocks is finished, the authentication unit 103 transmits, as signature data Sig_A, the generated ciphertext to the memory card 300 via the input and output unit 102.
Subsequently, the authentication unit 103 generates a random number Cha_A, and transmits the generated random number Cha_A to the memory card 300 via the input and output unit 102.
The authentication unit 103, then, receives signature data Sig_B from the memory card 300 via the input and output unit 102, and reads the received signature data Sig_B in blocks of 128 bits. The authentication unit 103 applies, to each of the read blocks, decryption computation based on an encryption scheme indicated by the scheme identifier "P_1", using a public key PK_X1 included in the received public key certificate Cert_X1 to thereby generate a decrypted block. The authentication unit 103 writes the generated decrypted block to the storage unit 110. Until all blocks making up the signature data Sig_B are decrypted, the authentication unit 103 repeats processes of reading a block, performing the decryption computation and writing the decrypted block, and thereby generates a decrypted text.

Next, the authentication unit 103 compares the generated decrypted text and the generated random number Cha_A. If the two do not match, the authentication unit 103 determines that the signature validation is unsuccessful, and ends the process.
If the generated decrypted text and the random number Cha_A match each other, the authentication unit 103 determines that the signature validation is successful, and then generates a random number "a". Generating Key_A = Gen(a, Y) using the generated random number "a", the authentication unit 103 outputs the generated Key_A to the memory card 300 via the input and output unit 102.

Then, the authentication unit 103 receives, from the memory card 300, a Key_B generated by using the key generation function G() and the parameter Y specific to the system. The authentication unit 103 generates a session key Key_AB = Gen(a, Key_B), using the received Key_B and the random number "a", and outputs the generated session key to the control unit 107 or the update unit 106.
(i-b) The authentication unit 103 performs signature validation by applying the signature validation algorithm V to the signature Sig_CA made by the certificate authority and included in the received public key certificate Cert_X1 of the memory card 300. When the validation is not successful, the authentication unit 103 ends the process.

When the validation is successful, the authentication unit 103 reads the CRL 129 from the storage unit 110, and judges whether an ID number included in the received public key certificate Cert_X1 has been registered on the read CRL 129. If determining that it has been registered, the authentication unit 103 ends the process.
When determining that it has not been registered, the authentication unit 103 reads the public key certificate Cert_L1 123 from the storage unit 110, and outputs the read public key certificate Cert_L1 123 to the memory card 300 via the input and output unit 102.

Next, the authentication unit 103 generates a random number Cha_A, and transmits the generated random number Cha_A to the memory card 300 via the input and output unit 102.
After receiving the signature data Sig_B from the memory card 300, the authentication unit 103 reads the received signature data Sig_B in blocks of 128 bits, and applies, to each of the read blocks, decryption computation based on an encryption scheme indicated by the scheme identifier "P_1", using the public key PK_X1 included in the public key certificate Cert_X1 of the memory card 300, to thereby generate a decrypted block. Then, the authentication unit 103 writes the generated decrypted block to the storage unit 110. Until all blocks making up the signature data Sig_B are decrypted, the authentication unit 103 repeats processes of reading a block, performing the decryption computation and writing the decrypted block, and thereby generates a decrypted text.

Next, the authentication unit 103 compares the generated decrypted text and the generated random number Cha_A. If the two do not match, the authentication unit 103 determines that the signature validation is unsuccessful, and ends the process.
If the generated decrypted text and the random number Cha_A match each other, the authentication unit 103 determines that the signature validation is successful, and continues the process.
Subsequently, the authentication unit 103 receives the random number Cha_B from the memory card 300 via the input and output unit 102. The authentication unit 103 reads the private key SK_L1 122 from the storage unit 110. Then, the authentication unit 103 reads the received random number Cha_B in blocks of 128 bits, and applies, to each of the read blocks, encryption computation based on an encryption scheme indicated by the scheme identifier "P_1", using the read private key SK_L1, to thereby generate an encrypted block. The authentication unit 103 writes the generated encrypted block to the storage unit 110. Until all blocks making up the random number Cha_B are encrypted, the authentication unit 103 repeats processes of reading a block, performing the encryption computation and writing the encrypted block, and thereby generates a ciphertext.

When encryption of all the blocks is completed, the authentication unit 103 transmits, as the signature data Sig_A, the generated ciphertext to the memory card 300 via the input and output unit 102.
Next, when receiving, from the memory card 300, the Key_B generated by using the key generation function G() and the parameter Y specific to the system, the authentication unit 103 generates the random number "a", and then generates Key_A = Gen(a, Y), using the generated random number "a". Then, the authentication unit 103 outputs the generated Key_A to the memory card 300 via the input and output unit 102.

The authentication unit 103 generates the session key Key_AB = Gen (a, Key_B), using the received Key_B and the random number "a", and outputs the generated session key to the control unit 107 or the update unit 106.
(ii) After Update of Public-Key Encryption Scheme
The process performed by the authentication unit 103 after the update of the public-key encryption scheme is substantially the same as the process performed before the update. The difference is that the authentication unit 103 reads the received signature data Sig_B in blocks of 160 bits and applies, to each of the read blocks, decryption computation based on an encryption scheme indicated by the scheme identifier "P_2" to thereby generate a decrypted block, instead of reading the received signature data Sig_B in blocks of 128 bits and applying, to each of the read blocks, decryption computation based on an encryption scheme indicated by the scheme identifier "P_1".

Additionally, instead of reading the random number Cha_B in blocks of 128 bits and applying, to each of the read blocks, encryption computation based on an encryption scheme indicated by the scheme identifier "P_1", the authentication unit 103 reads the random number Cha_B in blocks of 160 bits, and applies, to each of the read blocks, encryption computation based on an encryption scheme indicated by the scheme identifier "P_2" to thereby generate an encrypted block. The remaining processes are the same as those performed before the update of the public-key encryption scheme, and therefore the descriptions are omitted.

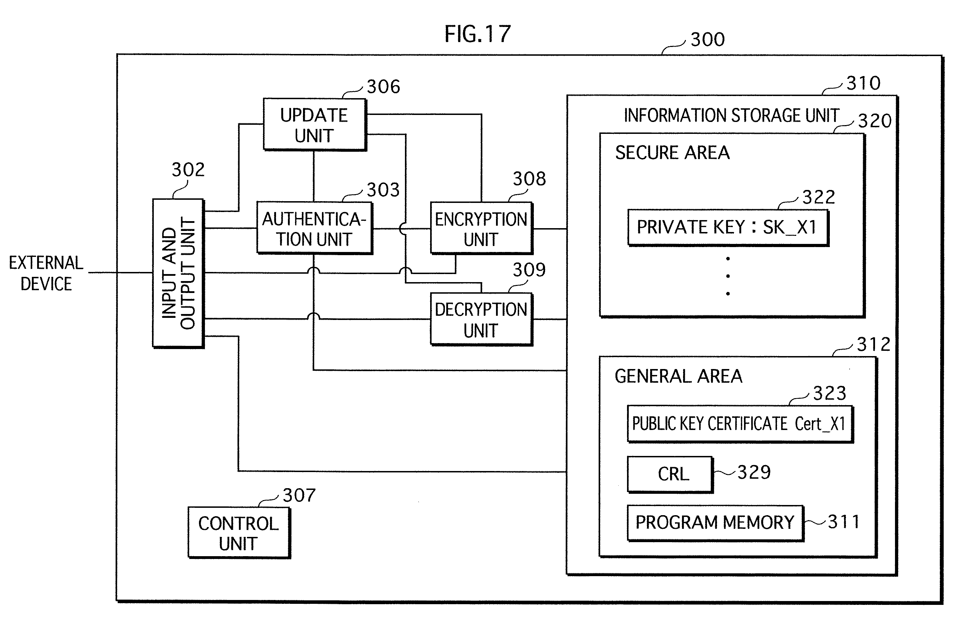

*1.6 Memory Card 300*
The memory card 300 comprises, as shown in FIG. 17: an input and output unit 302; an authentication unit 303; an update unit 306; a control unit 307; an encryption unit 308; a decryption unit 309; and an information storage unit 310.
The memory card 300 is an IC memory card carrying an IC chip, for example, and has functions to perform device authentication, encryption processing and so on. According to these functions, the memory card 300 does not permit any device other than authorized devices to read/write data therefrom/to. Here, the authorized devices mean the home server device 100 and mobile phone 700.
Specifically speaking, the IC chip is composed of a micro processing unit, ROM, RAM and so on. Computer programs are stored in the ROM and RAM. The micro processing unit operates according to the computer programs, and thereby the memory card 300 fulfills its function.

When placed in an external device, the memory card 300 receives information from the external device and, then, stores therein the received information. Or instead, the memory card 300 reads information from its inside, and outputs the read information to the external device.
Here, the external device means the home server device 100 or the mobile phone 700.
(1) Information Storage Unit 310
The information storage unit 310 includes a secure area 320 and a general area 312.

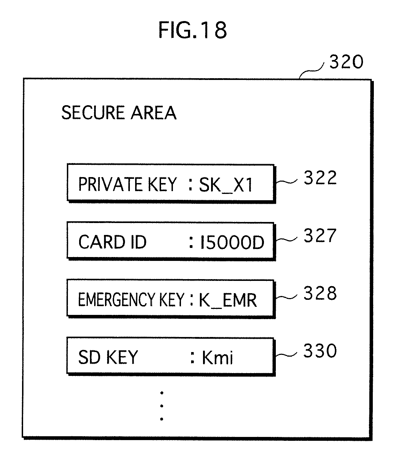

The secure area 320 has tamper resistance, and stores, as shown in FIG. 18, a private key SK_X1 322, a card ID 327, "I5000D", an emergency key K_EMR 328 and a SD key Kmi 330, for example.
The private key SK_X1 322 is a private key of the memory card 300, used for its public-key encryption scheme. The card ID 327, "I5000D", is an identifying number specific to the memory card 300.

The emergency key K_EMR 328 is a key value used by the memory card 300 to perform emergency communications with the home server device 100 in the case that the public-key encryption scheme is broken. This is the same as the emergency key K_EMR stored in the emergency key list 124, which is stored by the home server device 100.
The SD key Kmi 330 is a key value specific to the memory card 300, which is set by the manufacture when the memory card 300 was manufactured. This is the same as the SD key Kmi included in the SD key information 632 of the SD key list 631, which is stored in the security management device 600.

The general area 312 stores therein, for example, a public key certificate Cert_X1 323, a CRL 329 and program memory 311, as shown in FIG. 17.
The public key certificate Cert_X1 323 is a key certificate for certifying a public key paired with the private key SK_X1 322. The public key certificate Cert_X1 323 includes an ID number specific to the public key certificate Cert_X1 323, a key value of the public key paired with the private key SK_X1, and signature data of the certificate authority.

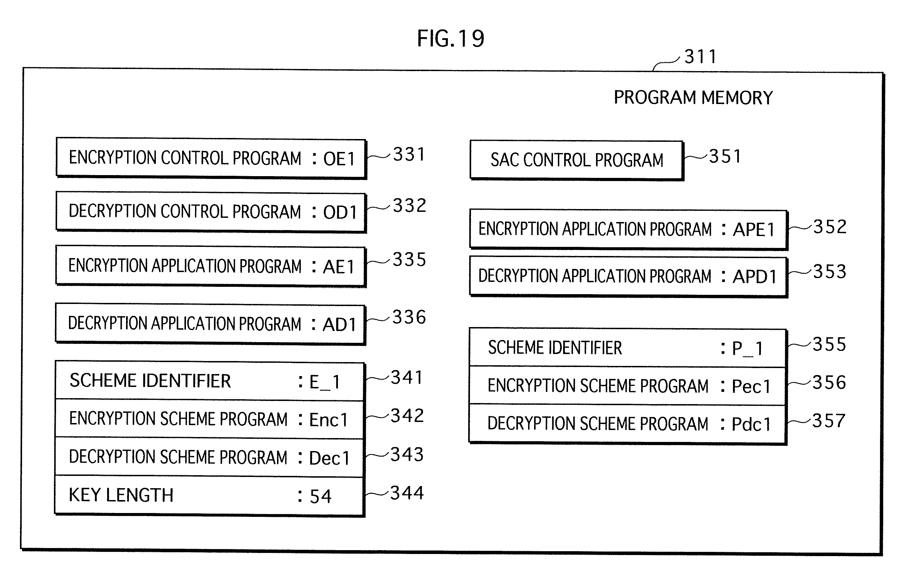

The CRL 129 is created and distributed by the certificate authority, and includes ID numbers of revoked public key certificates.
As shown in FIG. 19, the program memory 311 stores, for example: an encryption control program OE1 331; a decryption control program OD1 332; an encryption application program AE1 335; a decryption application program AD1 336; a scheme identifier 341, "E_1"; an encryption scheme program Enc1 342; a decryption scheme program Dec1 343; a key length 344, "54"; a SAC control program 351; an encryption application program APE1 352; a decryption application program APD1 353; a scheme identifier 355, "P_1"; an encryption scheme program Pec1 356; and a decryption scheme program Pdc1 357.

Each computer program is composed of directions in a plurality of machine code formats. These machine code formats are formats executed by the encryption unit 308, decryption unit 309 and authentication unit 303 of the memory card 300.
The encryption control program OE1 331, encryption application program AE1 335 and encryption scheme program Enc1 342 are used by the encryption unit 308.

The decryption control program OD1 332, decryption application program AD1 336 and decryption scheme program Dec1 343 are used by the decryption unit 309.
The SAC control program 351, encryption application program APE1 352, decryption application program APD1 353, encryption scheme program Pec1 356, and decryption scheme program Pdc1 357 are used by the authentication unit 303.

Details of each computer program are given hereinafter.
The scheme identifier 341, "E_1", is an identifier indicating an encryption scheme to be the basis for the encryption scheme program Enc1 342 and decryption scheme program Dec1 343, and indicates DES encryption scheme, for example.
The scheme identifier 355, "P_1", is an identifier indicating an encryption scheme to be the basis for the encryption scheme program Pen1 356 and decryption scheme program Pdc1 357, and indicates RSA encryption scheme, for example.

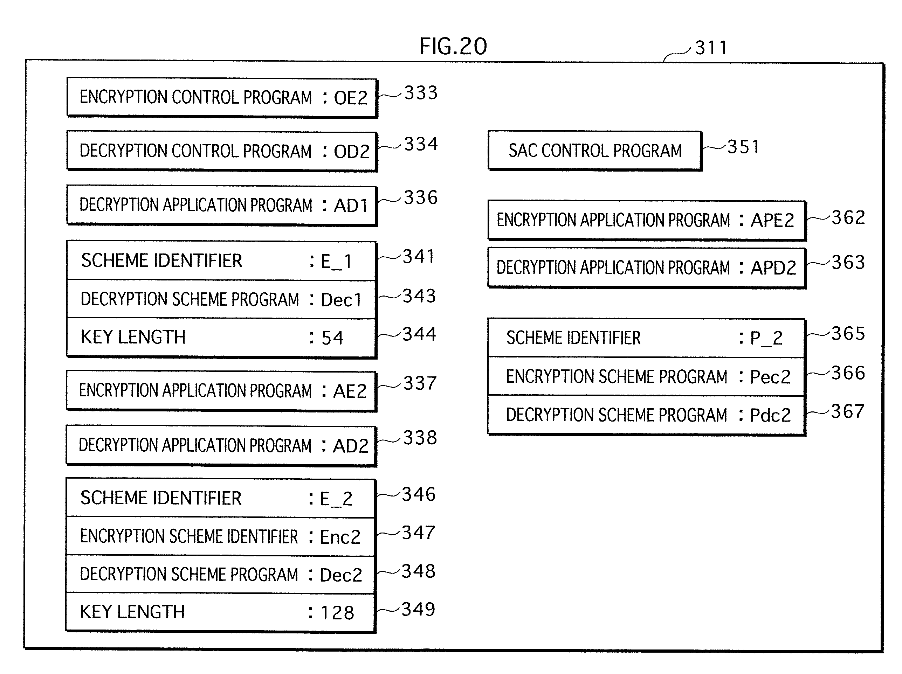

As to the program memory 311, the contents are rewritten when the updates of symmetric-key encryption scheme and public-key encryption scheme are performed by the update unit 306. The program memory 311 after the updates of the symmetric-key encryption scheme and the public-key encryption scheme stores therein, as shown in FIG. 20: an encryption control program OE2 333; a decryption control program OD2 334; a decryption application program AD1 336; an encryption application program AE2 337; a decryption application program AD2 338; a scheme identifier 341, "E_1"; a decryption scheme program Dec1 343; a key length 344, "54"; a scheme identifier 346, "E_2"; an encryption scheme program Enc2 347; a decryption scheme program Dec 2 348; a key length 349, "128"; a SAC control program 351; an encryption application program APE 362; a decryption application program APD2 363; a scheme identifier 365, "P_2"; an encryption scheme program Pec2 366; and a decryption scheme program Pdc2 367.
Since the following items are the same as the encryption control program OE2, decryption control program OD2, encryption application program AE2, decryption application program AD2, scheme identifier "E_2", encryption scheme program Enc2, decryption scheme program Dec2 and key length "128" included in the program file E_{II} 661 stored in the security management device 600, their descriptions are omitted: the encryption control program OE2 333; decryption control program OD2 334; encryption application program AE2 337; decryption application program AD2 338; scheme identifier 346, "E_2"; encryption scheme program Enc2 347; decryption scheme program Dec2 348; and key length 349, "128".

In addition, since the following items are the same as the encryption application program APE2, decryption application program APD2, scheme identifier "P_2", encryption scheme program Pec2 and decryption scheme program Pdc2 included in the program file P_{II} 671 stored in the security management device 600, their descriptions are omitted: the encryption application program APE2 362; decryption application program APD2 363; scheme identifier 365 "P_2"; encryption scheme program Pec2 366; and decryption scheme program Pdc2 367.

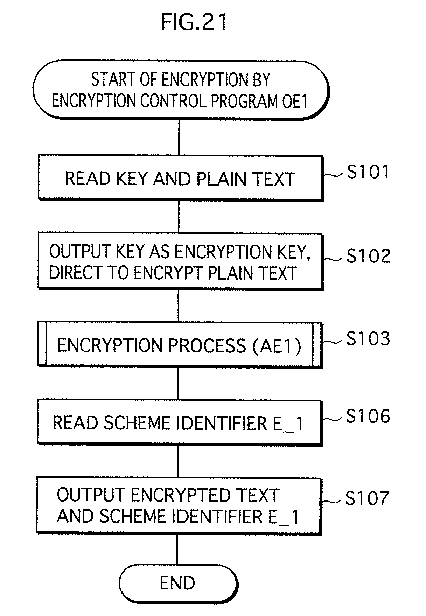

The following explains details of the computer programs.
(A) Encryption Control Program OE1 331
Next is described the encryption control program OE1 331 with the aid of a flowchart shown in FIG. 21.
The encryption control program OE1 reads a key and a plain text (Step S101).

Here, combinations of the key and plain text read by the encryption control program OE1 are, for example, a combination of a session key Kd and the device key Dev_2, a combination of the emergency key K_EMR and private key SK_L2, and the emergency key K_EMR and the public key certificate Cert_L2.
Next, the encryption control program OE1 331 outputs the read key as an encryption key, and directs the encryption application program AE1 to encrypt the plain text (Step S102).

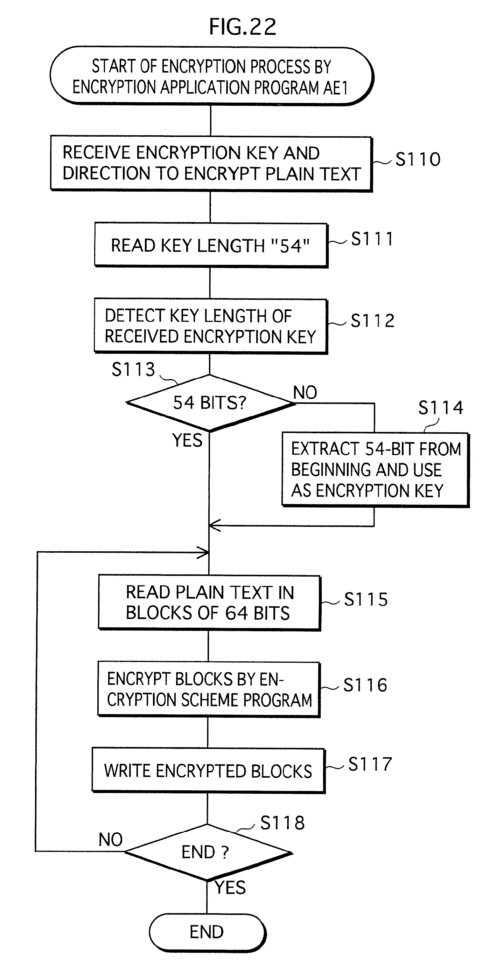

Then, the encryption control program OE1 331 receives a ciphertext from the encryption application program AE1 (Step S103). After reading a scheme identifier 141, "E_1", from the program memory 311 (Step S106), the encryption control program OE1 331 outputs the ciphertext and the read scheme identifier 141, "E_1" (Step S107).
(B) Encryption Application Program AE1 335
Next is described the encryption application program AE1 335 with the aid of a flowchart shown in FIG. 22.

The encryption application program AE1 receives an encryption key and a direction to encrypt a plain text (Step S110). Next, the encryption application program AE1 reads a key length 144, "54", from the program memory 311 (Step S111), and detects the key length of the received encryption key (Step S112). Judging whether the detected key length is 54 bits or not (Step S113), the encryption application program AE1 directly moves on to Step S115 if the key length is 54 bits. If the detected key length is not 54 bits (Step S113: NO), the encryption application program AE1 extracts 54 bits from the beginning of the received encryption key and uses this as an encryption key (Step S114). Next, the encryption application programAE1 reads the plain text in blocks of 64-bit length (Step S115). The encryption application program AE1 outputs the encryption key and the read blocks, and directs the encryption scheme program Enc1 to perform encryption computation on the output blocks (Step S116). After receiving encrypted blocks from the encryption scheme program Enc1, the encryption application program AE1 writes the received encrypted blocks to the information storage unit 310 (Step S117). The encryption application program AE1 judges whether encryption of all blocks making up the plain text has been completed (Step S118), and, in the case when there is any unencrypted block (Step S118 : NO), returns to Step S115 and repeats Steps S115 to S118 to generate a ciphertext. If determining that all blocks have been encrypted (Step S118: YES), the encryption application program AE1 outputs the generated ciphertext, and ends the process.

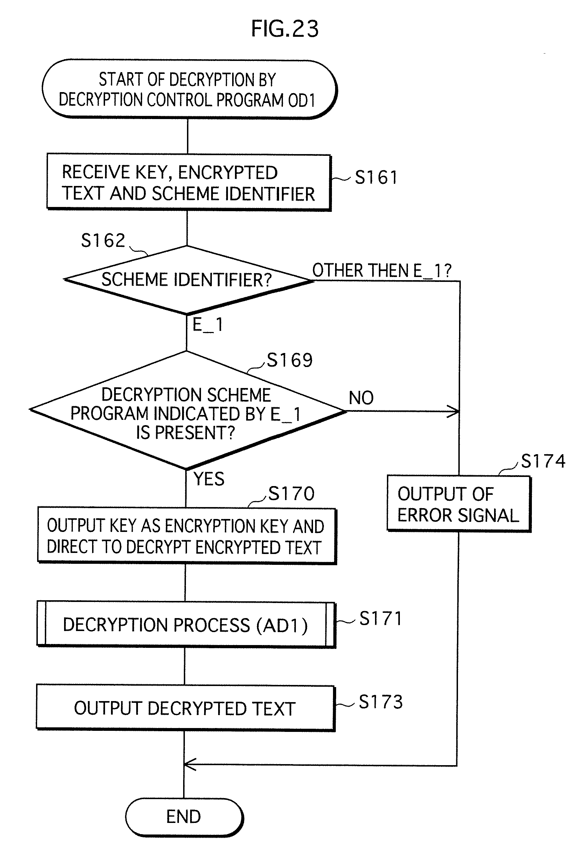

(C) Decryption Control Program OD1 132
Next is described the decryption control program OD1 132 with the aid of a flowchart shown in FIG. 23.
The decryption control program 132 receives a key, a ciphertext, and a scheme identifier indicating an encryption scheme used for generating the ciphertext (Step S161). Here, combinations of the key and ciphertext received by the decryption control program 132 are, for example, a combination of a session key Kb' and the encrypted content key Enc1(K_E1B, KEYa), a combination of the content key KEYa and the encrypted contents Enc1(KEYa, Cona), and a combination of a session key Kc' and the encrypted device key Enc2(K_E2C, Dev_2).

The decryption control program 132 then distinguishes the received scheme identifier (Step S162). If determining that the received scheme identifier is "E_1" (Step S162), the decryption control program 132 judges whether the decryption scheme program Dec1 based on an encryption scheme indicated by the scheme identifier "E_1" is present in the program memory 311 (Step S169). Here, when determining that it is not present (Step 169: NO), the decryption control program 132 moves the process on to Step S174. If determining that the decryption scheme program Dec1 based on an encryption scheme indicated by the scheme identifier "E_1" is present in the program memory 311 (Step S169: YES), the decryption control program 132 outputs, to the decryption application program AD1, the received key as a decryption key, and directs the decryption application program AD1 to decrypt the ciphertext (Step S170).

The process is then moved on to the decryption application program AD1, and the decryption control program 132 consequently receives a decrypted text from the decryption application program AD1 (Step S171). The decryption control program 132 outputs the received decrypted text (Step S173), and ends the process.
When determining that the scheme identifier is other than "E_1" (Step S162), the decryption control program 132 outputs an error signal (Step S174), and ends the process.

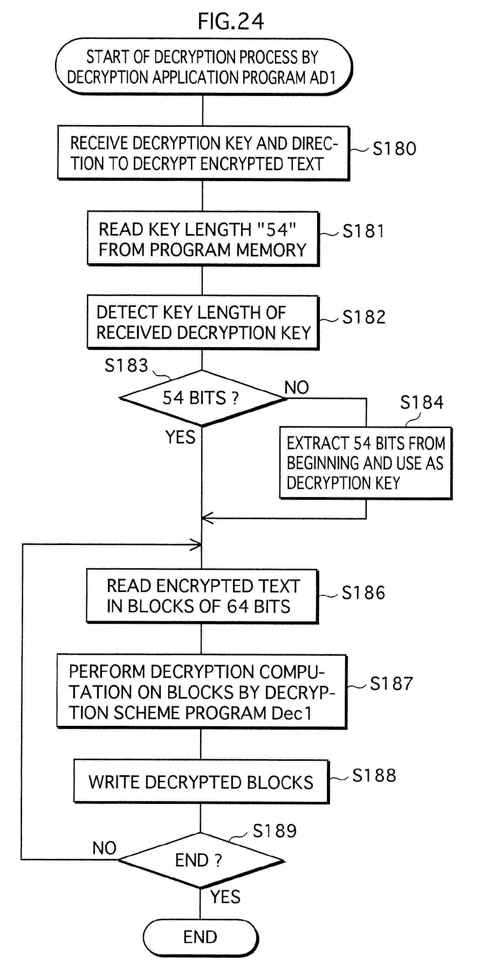

(D) Decryption Application Program AD1 336
Next is described the decryption application program AD1 with the aid of a flowchart shown in FIG. 24.
After receiving a decryption key and a direction to decrypt a ciphertext (Step S180), the decryption application program AD1 reads a key length 344, "54", from the program memory 311 (Step S181), and then detects the key length of the received decryption key (Step S182).

The decryption application program AD1 judges whether the detected key length is 54 bits (Step S183). If the detected key length is 54 bits (Step S183: YES), then the decryption application program AD1 directly moves the process on to Step S183. When determining that the detected key length is not 54 bits (Step 5183 : NO), the decryption application program AD1 extracts 54 bits from the beginning of the received decryption key, and uses this as a decryption key (Step S184).

After reading the ciphertext in blocks of 64 bits (Step S186), the decryption application program AD1 outputs the decryption key and the read blocks to the decryption scheme program Dec1, and directs the decryption scheme program Dec1 to perform decryption computation on the output blocks (Step S187).
Next, after receiving decrypted blocks from the decryption scheme program Dec1, the decryption application program AD1 writes the received decrypted blocks to the information storage unit 310 (Step S188). Then, judging whether decryption of all blocks making up the ciphertext is completed (Step S189), and, in the case when there is any undecrypted block (Step S189: NO), returns to Step S186 and repeats Steps 186 to S189 to generate a decrypted text. If all blocks have been decrypted (Step S189 : YES), the decryption application program AD1 outputs the generated decrypted text, and ends the process.

(E) SAC Control Program 351
The SAC control program 351 first judges whether a public key certificate of a target device, with which the memory card 300 is to have SAC establishment, has been received. If determining that the public key certificate of the target device has not been received, the SAC control program 351 establishes a SAC as described in the following process (E-1). When determining that the public key certificate of the target device has been received, the SAC control program 351 establishes a SAC as described in the following process (E-2). Here is described the case where the target device is the home server device 100.

Note that, in the following explanation, Gen() denotes a key generation function, and Y is a parameter specific to a system. The key generation function Gen() satisfies the relationship of Gen(x, Gen(z, Y)) = Gen(z, Gen(x,Y)). The key generation function is practicable using arbitrary publicly-known technology, and therefore the detail is not described here. Non-Patent Reference 1 discloses Diffie-Hellman public key distribution scheme as one example of such a key generation function.

The following explains the processes (E-1) and (E-2).
(E-1) When determining that the SAC control program has not received the public key certificate of the home server device 100, the SAC control program reads a public key certificate Cert_X1 323 from the information storage unit 310, and outputs the read public key certificate Cert_X1 323 to the home server device 100 via the input and output unit 302.

Then, receiving the public key certificate Cert_L1 from the home server device 100, the SAC control program performs signature validation by applying the signature validation algorithm V to the signature Sig_CA made by the certificate authority and included in the received public key certificate Cert_L1, using the public key PK_CA of the certificate authority. When the validation is not successful, the SAC control program ends the process.
If the validation is successful, the SAC control program reads the CRL 329 from the information storage unit 310, and judges whether an ID number included in the received public key certificate Cert_L1 has been registered on the read CRL 329. If determining that it has been registered, the SAC control program ends the process. When determining that it has not been registered, the SAC control program moves on to the next process.

Next, the SAC control program receives a random number Cha_B from the home server device 100 via the input and output unit 302. The SAC control program reads the private key SK_X1 322 from the information storage unit 310, outputs, to the encryption application program, the read private key SK_X1 322 as an encryption key and the received random number Cha_B as a plain text, and directs the encryption application program to perform encryption.
After receiving a ciphertext from the encryption application program, the SAC control program transmits the received ciphertext as signature data Sig_A to the home server device 100 via the input and output unit 302.

The SAC control program then generates a random number Cha_A, and transmits the generated random number Cha_A to the home server device 100 via the input and output unit 302.
After receiving signature data Sig_B from the home server device 100 via the input and output unit 302, the SAC control program outputs, to the decryption application program, the received signature data Sig_B as a ciphertext and a public key included in the received public key certificate Cert_L1 as a decryption key, and directs the decryption application program to perform decryption.

Subsequently, receiving a decrypted text from the decryption application program, the SAC control program compares the received decrypted text and the generated random number Cha_A. If they do not match, the SAC control program determines that the signature validation is unsuccessful, and ends the process.
When the received decrypted text and the random number Cha_A match each other, the SAC control program determines that the signature validation is successful.
Next, the SAC control program generates a random number "a", and generates Key_A = Gen(a, Y) using the generated random number "a". The SAC control program outputs the generated Key_A to the home server device 100 via the input and output unit 302.

The SAC control program then receives, from the home server device 100, Key_B generated by using the key generation function G() and the system-specific parameter Y. The SAC control program generates a session key_AB = Gen(a, Key_B), using the received Key_B and the random number "a", and ends the process.
(E-2) When determining that the SAC control program has received the public key certificate Cert_L1 of the home server device 100, the SAC control program performs signature validation by applying the signature validation algorithm V to the signature Sig_CA made by the certificate authority and included in the received public key certificate Cert_L1. When the validation is not successful, the SAC control program ends the process.

If the validation is successful, the SAC control program reads the CRL 329 from the information storage unit 310, and judges whether an ID number included in the received public key certificate Cert_L1 has been registered on the read CRL 329. If determining that it has been registered, the SAC control program ends the process.
When determining that it has not been registered, the SAC control program reads the public key certificate Cert_ X1 323 from the information storage unit 310, and outputs the read public key certificate Cert_X1 323 to the home server device 100 via the input and output unit 302.

Then, the SAC control program generates a random number Cha_A, and outputs the generated random number Cha_A to the home server device 100 via the input and output unit 302.
After receiving the signature date Sig_B from the home server device 100, the SAC control program outputs, to the decryption application program, the received signature data Sig_B as a ciphertext and a public key included in the received public key certificate Cert_L1 as a decryption key, and directs the decryption application program to decrypt the ciphertext.

Subsequently, receiving from a decrypted text from the decryption application program, the SAC control program compares the received decrypted text and the generated random number Cha_A. If they do not match, the SAC control program determines that the signature validation is unsuccessful, and ends the process. When the received decrypted text and the generated random number Cha_A match each other, the SAC control program determines that the signature validation is successful, and continues the process.
Next, the SAC control program receives a random number Cha_B from the home server device 100 via the input and output unit 302. The SAC control program then reads the private key SK_X1 322 from the information storage unit 310, outputs, to the encryption application program, the read private key SK_X1 322 as an encryption key and the received random number Cha_B as a plain text, and directs the encryption application program to encrypt the plain text.

After receiving a ciphertext from the encryption application program, the SAC control program outputs the received ciphertext to the home server device 100 as the signature data Sig_A.
Then, the SAC control program receives, from the home server device 100, Key_B generated by using the key generation function G() and the system-specific parameter Y. The SAC control program generates a random number "a", and generates Key_A = Gen (a, Y), using the generated random number "a". Then, the SAC control program outputs the generated Key_A to the home server device 100 via the input and output unit 302.

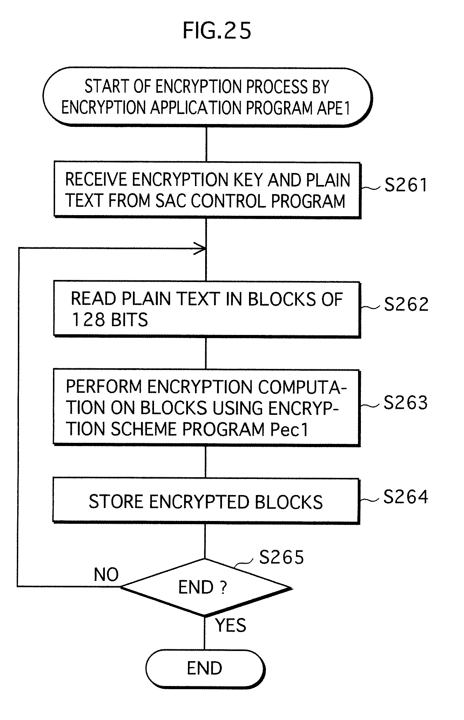

The SAC control program generates a session key Key_AB = Gen(a, Key_B) using the received Key_B and the random number "a", and ends the process.
(F) Encryption Process by Encryption Application Program APE1 352
Next is described the encryption application program APE1 with the aid of a flowchart shown in FIG. 25.

The encryption application program APE1 receives an encryption key and a direction to encrypt a plain text (Step S261). Next, the encryption application program APE1 reads the plain text in blocks of 128 bits (Step S262), outputs the read blocks and the encryption key to the encryption scheme program Pec1, and directs the encryption scheme program Pec1 to perform encryption computation (Step S263). After receiving encrypted blocks from the encryption scheme program Pec1, the encryption application program APE1 writes the received encrypted blocks to the information storage unit 310 (Step S264). The encryption application program APE1 judges whether encryption of all blocks making up the plain text has been completed (Step S265). If there is any unencrypted block (Step S265 : NO), the encryption application program APE1 returns to Step S262 and repeats Steps S262 to S265 to thereby generate a ciphertext. If there is no unencrypted block (Step S265: YES), the encryption application program APE1 outputs the generated ciphertext, and ends the process.

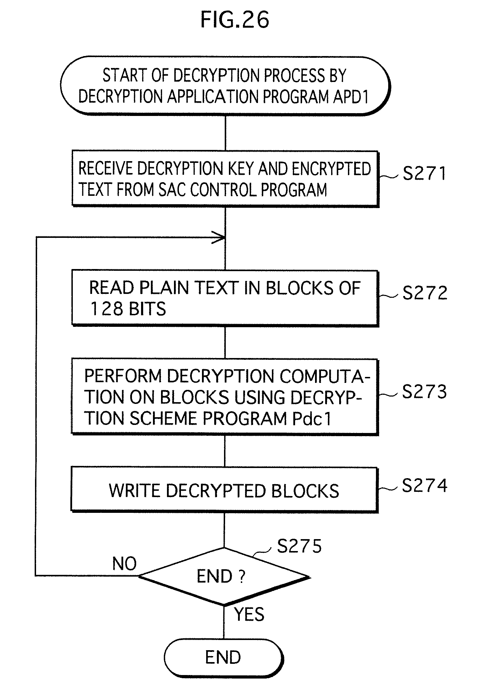

(G) Decryption Process by Decryption Application Program APD1 353
Next is described the decryption application program APD1 with the aid of FIG. 26.
The decryption application program APD1 receives a decryption key and a direction to decrypt a ciphertext (Step S271). Then, the decryption application program APD1 reads the ciphertext in blocks of 128-bit length (Step S272), outputs, to the decryption scheme program Pdc1, the received decryption key and the read blocks, and directs the decryption scheme program Pdc1 to perform decryption computation on the blocks (Step S273). Subsequently, receiving decrypted blocks from the decryption scheme program Pdc1, the decryption application program APD1 writes the received decrypted blocks to the information storage unit 310 (Step S274).

Next, the decryption application program APD1 judges whether decryption of all blocks making up the ciphertext has been completed (Step S275). Then, determining that there is undecrypted block (Step S275: NO), the decryption application program APD1 returns to Step S272 and repeats Steps S272 to S275 to thereby generate a decrypted text.
When determining that all blocks making up the ciphertext have been decrypted (Step S275), the decryption application program APD1 outputs the generated decrypted text, and ends the process.

(2) Input and Output Unit 302
The input and output unit 302 transmits and receives information between an external device and the control unit 307 or the update unit 306.
Additionally, detecting that the memory card 300 is placed in the mobile phone 700, the input and output unit 302 outputs a mobile-phone detecting signal to the control unit 307. When detecting that the memory card 300 is placed in the home server device 100, the input and output unit 302 outputs a HS detecting signal to the update unit 306.

(3) Control Unit 307
The control unit 307 receives a request of the card ID from the home server device 100 via the input and output unit 302 while the memory card 300 is placed in the home server device 100.
In addition, receiving a scheme identifier from the home server device 100, the control unit 307 receives an inquiry of whether decryption of a ciphertext generated by the received encryption scheme can be performed.

The control unit 307 receives a mobile-phone detecting signal from the input and output unit 302 while the memory card 300 is placed in the mobile phone 700. The control unit 307 also receives a request of outputting the contents from the mobile phone 700 via the input and output unit 302.
The control unit 307 performs: generation of an emergency key; update of a CRL; direction to the update unit 306 to start the update process of the encryption scheme; and reception of the contents; and output of the contents. The following explains these processes.

(i) Generation of Emergency Key
When receiving a request of the card ID from the home server device 100 while the memory card 300 is placed in the home server device 100, the control unit 307 reads a card ID 327, "I5000D", from the information storage unit 310, and transmits the read card ID to the home server device 100 via the input and output unit 302.

Next, the control unit 307 receives the public key certificate Cert_L1 from the home server device 100, outputs the received public key certificate Cert_L1 to the authentication unit 303, and directs the authentication unit 303 to establish a SAC. When the authentication unit 303 completes establishing a SAC, the control unit 307 receives a session key Ka' from the authentication unit 303.
Next, receiving the encrypted emergency key Enc1(K_E1A, K_EMR) and the scheme identifier "E_1" from the home server device 100 via the input and output unit 302, the control unit 307 outputs, to the decryption unit 309, the received encrypted emergency key Enc1(K_E1A, K_EMR) and scheme identifier "E_1" and session key Ka', and directs the decryption unit 309 to decrypt the encrypted emergency key Enc1 (K_E1A, K_EMR).

Receiving the emergency key K_EMR from the decryption unit 309, the control unit 307 writes the received emergency key K_EMR to the secure area 320 of the information storage unit 310.
(ii) Update of CRL
Receiving a mobile-phone detecting signal from the input and output unit 302, the control unit 307 obtains the latest CRL from the certificate authority via the input and output unit 302, mobile phone 700 and the Internet 20, and rewrites the CRL 329 of the information storage unit 310 with the latest CRL.

(iii) Direction to Update Unit 306 to Start Update of Encryption Scheme
When finishing the update of the CRL as described in the above process (ii), the control unit 307 directs the update unit 306 to start the update of the encryption scheme.
(iv) Reception of Contents
After receiving the scheme identifier "E_1" from the home server device 100 via the input and output unit 302 and an inquiry of whether the decryption of a ciphertext generated by an encryption scheme indicated by the received scheme identifier "E_1" can be performed, the control unit 307 checks whether the decryption scheme program Dec1 of an encryption scheme indicated by the received scheme identifier "E_1" is present in the program memory 311.

When determining that the decryption scheme program Dec1 is stored in the program memory 311, the control unit 307 generates a judgment result "1". On the other hand, when determining that the decryption program Dec1 is not stored in the program memory 311, the control unit 307 generates a judgment result "0". Next, the control unit 307 transmits the generated judgment result to the home server device 100 via the input and output unit 302.
Then, receiving the public key certificate Cert_L1 from the home server device 100, the control unit 307 outputs the received public key certificate Cert_L1 to the authentication unit 303, and directs the authentication unit 303 to establish a SAC. After the authentication unit 303 has completed establishing a SAC, the control unit 307 receives the session key Kb' from the authentication unit 303.

Then, receiving a content file, the encrypted content key Enc1(K_E1B, KEYa) and the scheme identifier "E_1" from the home server device 100, the control unit 307 writes the received content file to the general area 312. The control unit 307 then outputs, to the decryption unit 309, the received encrypted content key Enc1(K_EIB, KEYa) and scheme identifier "E_1" as well as the session key Kb' received from the authentication unit, and directs the decryption unit 309 to decrypt the encrypted content key Enc1(K_E1B, KEYa) using the session key Kb'. After receiving the content key KEYa from the decryption unit 309, the control unit 307 writes the received content key KEYa to the secure area 320.

(v) Output of Contents
Receiving, from the mobile phone 700, a request of outputting the contents while the memory card 300 is placed in the mobile phone 700, the control unit 307 reads the content key KEYa from the secure area 320 as well as the encrypted contents Enc1(KEYa, Cona) and the scheme identifier "E_1" from the content file stored in the general area 312. Then, the control unit 307 outputs the read content key KEYa, encrypted contents Enc1(KEYa, Cona) and scheme identifier "E_1" to the decryption unit 309, and directs the decryption unit 309 to decrypt the encrypted contents Enc1(KEYa, Cona).

When receiving the contents Cona generated by the decryption unit 309, the control unit 307 outputs the received contents Cona to the mobile phone 700 via the input and output unit 302.
Specifically speaking, in the case of outputting a large amount of information, like the contents Cona including video and audio, the decryption unit 309 generates decrypted texts by sequentially decrypting ciphertexts, and the control unit 307 sequentially outputs the generated decrypted texts to the mobile phone 700.

(4) Update Unit 306
The update unit 306 receives, from the control unit 307, a direction to start updates of encryption schemes. The update unit 306 also receives a HS detecting signal from the input and output unit 302.
Receiving a direction to start updates of the encryption schemes from the control unit 307, the update unit 306 reads the scheme identifier 341, "E_1", and the scheme identifier 355, "P_1", from the program memory 311. Then the update unit 306 transmits the read scheme identifier 341, "E_1", and scheme identifier 355, "P_1", to the security management device 600 via the input and output unit 302 and mobile phone 700, and requests the security management device 600 to check the safety of the encryption schemes.

The update unit 306 receives from the security management device 600: (i) emergency screen data; (ii) a safety notification signal; (iii) a direction to update an encryption scheme indicated by the scheme identifier "E_1"; and (iv) a direction to update an encryption scheme indicated by the scheme identifier "P_1". When receiving these, the update unit 306 performs individual processes described below.
Note that the home server device 100 receives a broadcast wave on a steady basis, and frequently performs the above-stated update processes of the encryption schemes. Therefore, it is here assumed that the home server device 100 has completed installation of programs for a new symmetric-key encryption scheme and programs for a new public-key encryption scheme before the memory card 300 has done.

(i) Receiving Emergency Screen Data
Receiving emergency screen data from the security management device 600 via the mobile phone 700, the update unit 306 outputs the received emergency screen data to the mobile phone 700 and requests the mobile phone 700 to display an emergency screen.
(ii) Receiving Safety Notification Signal
Receiving a safety notification signal from the security management device 600 via the mobile phone 700, the update unit 306 determines that the encryption schemes stored in the memory card 300 itself are safe, and ends the update processes of the encryption schemes.

(iii) Direction to Update Encryption Scheme Indicated by Scheme Identifier "E_1"
After receiving a direction to update an encryption scheme indicated by the scheme identifier "E_1" from the security management device 600 via the mobile phone 700, the update unit 306 reads the scheme identifier 341, "E_1", from the program memory 311, transmits the read scheme identifier 341, "E_1", to the security management device 600 via the input and output unit 302, and requests the security management device 600 to start the update process.

Subsequently, receiving the program file E_{II} from the security management device 600 via the mobile phone 700, the update unit 306 extracts the encryption control program OE2 and decryption control program OD2 from the received program file E_{II}, and installs the extracted encryption control program OE2 and decryption control program OD2. Then, the update unit 306 deletes the encryption control program OE1 331 and decryption control program OD1 332 from the program memory 311.

Next, the update unit 306 extracts the encryption application program AE2 and decryption application program AD2 from the received program file E_{II} and installs them, and deletes the encryption application program AE1 335 from the program memory 311.
Next, the update unit 306 extracts the encryption scheme program Enc2 and decryption scheme program Dec2 from the received program file E_{II}, installs the extracted encryption scheme program Enc2 and decryption scheme program Dec2, and deletes the encryption scheme program Enc1 342 from the program memory 311.

The update unit 306 then extracts the scheme identifier "E_2" and key length "128" from the received program file E_{II}, and writes the extracted scheme identifier "E_2" and key length "128" to the program memory 311.
When receiving, from the security management device 600 via the mobile phone 700, the public key certificate of the security management device 600, the update unit 306 outputs the received public key certificate to the authentication unit 303, and directs the authentication unit 303 to establish a SAC. After the authentication unit 303 has established a SAC, the update unit 306 receives the session key Kc' from the authentication unit 303.

The update unit 306 receives the encrypted device key Enc2(K_E2C, Dev_2) and the scheme identifier "E_2" from the security management device 600 via the mobile phone 700. The update unit 306 outputs, to the decryption unit 309, the received encrypted device key Enc2(K_E2C, Dev_2) and scheme identifier "E_2" as well as the session key Kc' received from the authentication unit 303, and directs the decryption unit 309 to decrypt the encrypted device key Enc2(K_E2C, Dev_2).

After receiving the device key Dev_2 from the decryption unit 309, the update unit 306 writes the received device key Dev_2 to the secure area 320.
Receiving a HS detecting signal from the input and output unit 302 via the input and output unit 302, the update unit 306 requests the 1st update flag from the home server device 100 via the input and output unit 302, and then receives the 1st flag from the home server device 100. When identifying the received 1st update flag as "1", the update unit 306 determines that transferring the device key Dev_2 is not necessary, deletes the device key Dev_2 stored in the secure area 320, and then ends the update process of the symmetric-key encryption scheme.

When identifying the received 1st update flag as "0", the update unit 306 directs the authentication unit 303 to establish a SAC. After the authentication unit 303 has established a SAC, the update unit 306 receives the session key Kd. Then, the update unit 306 reads the device key Dev_2 from the secure area 320, outputs the read device key Dev_2 and the received session key Kd to the encryption unit 308, and directs the encryption unit 308 to encrypt the device key Dev_2.

After receiving, from the encryption unit 308, the encrypted device key Enc2(K_E2D, Dev_2) and the scheme identifier "E_2" indicating an encryption scheme used to generate the encrypted device key Enc2 (K_E2D, Dev_2), the update unit 306 transmits, to the home server device 100, the encrypted device key Enc2(K_E2D, Dev_2) and scheme identifier "E_2" received via the input and output unit 302, and ends the update process of the symmetric-key encryption scheme.

(iv) Receiving Direction to Update Encryption Scheme Indicated by Scheme Identifier "P_1"
When receiving a direction of changing an encryption scheme indicated by the scheme identifier "P_1" from the security management device 600 via the mobile phone 700, the update unit 306 reads the scheme identifier 355, "P_1" from the program memory 311, transmits the read scheme identifier "P_1" to the security management device 600 via the mobile phone 700, and requests the security management device 600 to start updating the encryption scheme.

The update unit 306 receives the program file P_{II} from the security management device 600 via the mobile phone 700. The update unit 306 extracts the encryption application program APE2 and decryption application program APD2 from the received program file P_{II}, and installs the extracted encryption application program APE2 and decryption application program APD2. The update unit 106 then replaces the encryption application program APD1 with the encryption application program APD2 as well as the decryption application program APD1 with the decryption application program APD2 by deleting the encryption application program APE1 352 and decryption application program APD1 353.

Then, extracting the encryption scheme program Pec2 and decryption scheme program Pdc2 from the program file P_{II}, the update unit 306 installs the extracted encryption scheme program Pec 2 and decryption scheme program Pdc2. Next, the update unit 306 deletes the encryption application program APE1 352 and decryption application program APD1 353 from the program memory 311.
Subsequently, the update unit 306 extracts the scheme identifier "P_2" from the received program file P_{II}, writes the extracted scheme identifier "P_2" to the program memory 311, and deletes the scheme identifier 355, "P_1", from the program memory 311.

When receiving a request of the card ID from the security management device 600 via the mobile phone 700, the update unit 306 reads the card ID 327, "I5000D", from the secure area 320, and transmits the read card ID 327, "I5000D", to the security management device 600 via the mobile phone 700.
Next, the update unit 306 receives, from the security management device 600 via the mobile phone 700 and transmitting and receiving unit 302, the encrypted private key Enc1(Kmi, SK_L2), encrypted private key Enc1 (Kmi, SK_X2), encrypted public key certificate Enc1 (Kmi, Cert_L2), encrypted public key certificate Enc1(Kmi, Cert_X2) and scheme identifier "E_1". Reading the SD key Kmi 330 from the secure area 320, the update unit 306 outputs, to the decryption unit 309, the read SD key Kmi 330 as well as the received encrypted private key Enc1 (Kmi, SK_L2), encrypted private key Enc1 (Kmi, SK_X2), encrypted public key certificate Enc1 (Kmi, Cert_L2), encrypted public key certificate Enc1 (Kmi, Cert_X2) and scheme identifier "E_1", and directs the decryption unit 309 to decrypt the encrypted private key End1(Kmi, SK_L2), encrypted private key Enc1(Kmi, SK_X2), encrypted public key certificate Enc1(Kmi, Cert_L2), and encrypted public key certificate Enc1(Kmi, Cert_X2). When receiving, from the decryption unit 309, the private key SK_L2, private key SK_X2, public key certificate Cert_L2 and public key certificate Cert_X2, the update unit 306 writes the received private key SK_L2 and private key SK_X2 to the secure area 320 while writing the received public key certificates Cert_L2 and public key certificate Cert_X2 to the general area 312.

Then, the update unit 306 deletes the private key SK_X1 322 and public key certificate Cert_X1 323.
When receiving a HS detecting signal from the input and output unit 302, the update unit 306 requests the 2nd update flag from the home server device 100 via the input and output unit 302.
The update unit 306 receives the 2nd flag from the home server device 100. When determining that the received 2nd flag is "1", the update unit 306 determines that there is no need to transfer the private key SK_L2 and public key certificate Cert_L2, and deletes the private key SK_L2 and public key certificate Cert_L2 from the information storage unit 310.

When determining that the received 2nd flag is "0", the update unit 306 reads the emergency key K_EMR 328 and private key SK_L2 from the secure area 320 while reading the public key certificate Cert_L2 from the general area 312. Then, the update unit 306 outputs, to the encryption unit 308, the read emergency key K_EMR 328, private key SK_L2 and public key certificate Cert_L2, and directs the encryption unit 308 to encrypt the private key SK_L2 and public key certificate Cert_L2.

After receiving, from the encryption unit 308, the encrypted private key Enc1 (K_EMR, SK_L2), encrypted public key certificate Enc1 (K_EMR, Cert_L2) and scheme identifier "E_1", the update unit 306 transmits, to the home server device 100 via the input and output unit 302, the encrypted private key Enc1(K_EMR, SK_L2) and encrypted public key certificate Enc1(K_EMR, Cert_L2), and ends the update process of the public-key encryption scheme.

(5) Encryption Unit 308
The encryption unit 308 receives, from the update unit 306, the emergency key K_EMR, private key SK_L2 and public-key certificate Cert_L2, and is directed to encrypt the private key SK_L2 and public key certificate Cert_L2.
When receiving an encryption direction from the update unit 306, the encryption unit 308 reads the encryption control program OE1 331 from the program memory 311, and executes the encryption control program OE1 331, using the received emergency key K_EMR as a key and the received private key SK_L2 and public key certificate Cert_L2 as plain texts. Specifically speaking, the encryption unit 308 fetches each of directions from the read encryption control program OE1 331, decodes the fetched direction, and executes the decoded direction. From here onward, by repeating the processes of fetch, decode and execution of a direction, the received plain texts are encrypted to thereby generate ciphertexts.

Subsequently, the encryption unit 308 outputs, to the update unit 306, the generated ciphertexts―the encrypted private key Enc1(K_EMR, SK_L2) and encrypted public key certificate Enc1(K_EMR, Cert_L2), as well as the scheme identifier "E_1" indicating an encryption scheme used to generate the ciphertexts.
The encryption unit 308 also executes the encryption control program OE2 333, instead of the encryption control program OE1 331, after the update of the symmetric-key encryption scheme performed by the update unit 306.

(6) Decryption Unit 309
The decryption unit 309 receives, from the control unit 307, the session key Kb' and encrypted content key Enc1(K_E1B, KEYa) and scheme identifier "E_1", and is directed to decrypt the encrypted content key Enc1(K_E1B, KEYa). In addition, the decryption unit 309 receives the content key KEYa, encrypted contents Enc1(KEYa, Cona) and scheme identifier "E_1", and is directed to decrypt the encrypted contents Enc1(KEYa, Cona).

The decryption unit 309 receives, from the update unit 306, the SD key Kmi, encrypted private key Enc1(Kmi, SK_L2), encrypted private key Enc1(Kmi, SK_X2), encrypted public key certificate Enc1(Kmi, Cert_L2), encrypted public key certificate Enc1(Kmi, Cert_X2) and scheme identifier "E_2", and is directed to decrypt the encrypted private key Enc1(Kmi, SK_L2), encrypted private key Enc1(Kmi, SK_X2), encrypted public key certificate Enc1(Kmi, Cert_L2) and encrypted public key certificate Enc1(Kmi, Cert_X2).

Receiving a decryption direction from the control unit 307 or the update unit 306, the decryption unit 309 reads, from the program memory 311, the decryption control program OD1 332 or the decryption control program OD2 334.
Here, the decryption unit 309 reads the decryption control program OD1 332 before the update of the symmetric-key encryption scheme performed by the update unit 306, while reading the decryption control program OD2 334 after the update.

The decryption unit 309 executes the decryption control program OD1 332 or the decryption control program OD2 334, using the received session Key Kb', content key KEYa and SD key Kmi as keys and using the received encrypted content key Enc1(K_E1B, KEYa), encrypted contents Enc1(KEYa, Cona), encrypted private key Enc1(Kmi, SK_L2), encrypted private key Enc1(Kmi, SK_X2), encrypted public key certificate Enc1(Kmi, Cert_L2), and encrypted public key certificate Enc1 (Kmi, Cert_ X2) as ciphertexts, and thereby generates decrypted texts. Specifically speaking, the decryption unit 309 fetches each of directions from the read decryption control program OD1 323 or decryption control program OD2 334, decodes the fetched direction, and executes the decoded direction. From here onward, the decryption process is conducted by repeating the processes of fetch, decode and execution of a direction.

Subsequently, the decryption unit 309 outputs, to the control unit 307, the content key KEYa and Contents Cona generated as decrypted texts.
In addition, the decryption unit 309 outputs, to the update unit 306, the private key SK_L2, private key SK_X2, public key certificate Cert_L2 and public key certificate Cert_X2 generated as decrypted texts.
(7) Authentication Unit 303
When directed to establish a SAC from the control unit 307 or the update unit 306, the authentication unit 303 reads the SAC control program 351 from the program memory 311. Then, the authentication unit 303 fetches each of directions from the read SAC control program 351, decodes the fetched direction, and executes the decoded direction. From here onward, the authentication unit 303 establishes a SAC and outputs a generated session key to the control unit 307 or update unit 306 by repeating the processes of fetch, decode and execution of a direction.

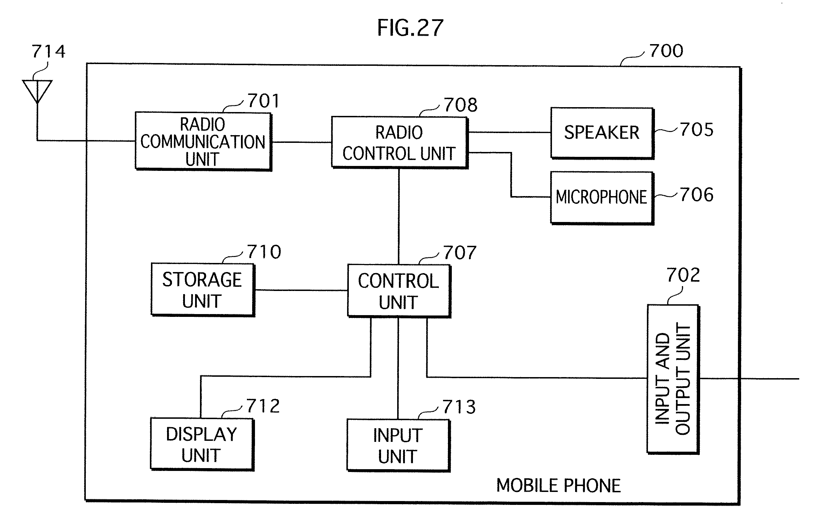

*1.7 Mobile Phone 700*
The mobile phone 700 comprises, as shown in FIG. 27: a radio communication unit 701; an input and output unit 702; a speaker 705; a microphone 706; a control unit 707; a radio control unit 708; a storage unit 710; a display unit 712; an input unit 713; and an antenna 714.
(1) Storage Unit 710
The storage unit 710 is composed of hard disk, RAM and ROM, and stores therein a variety of information.

(2) Antenna 714, Radio Communication Unit 701 and Radio Control Unit 708
The antenna 714, radio communication unit 701 and radio control unit 708 transmit and receive audio or information to/from an external device connected thereto via a base station 30 and a mobile phone network 40.
The radio communication unit 701 is composed of a receiving unit and a transmitting unit. The receiving unit includes: a high-frequency amplifier; a reception mixer; an IF amplifier; and a demodulator, and amplifies and demodulates a signal received by the antenna 714. The transmitting unit includes: a transmission power amplifier; a transmission mixer; and a modulator. The transmitting unit modulates a high-frequency signal using a baseband signal, converts the signal to a radio frequency, amplifies the signal and outputs the amplified signal from the antenna 714.
The radio communication control unit 708 includes a baseband unit, and performs processing of various signals which are input and output from/to the radio communication unit 701.

(3) Input and Output Unit 702
The input and output unit 702 transmits and receives information between the control unit 707 and the memory card 300.
(4) Control Unit 707
The control unit 707 receives a variety of operation directing information from the input unit 712, and receives, from the memory card 300 via the input and output unit 702, emergency screen data and a request for emergency screen display.

Receiving, from the input unit 712, operation directing information indicating playback of the contents while the memory card 300 is placed in the mobile phone 700, the control unit 707 requests the memory card 300 to output the contents.
Then, the control unit 707 sequentially receives data making up the contents from the memory card 300, expands the received data, and generates screen and audio from the expanded data. The control unit 707 sequentially outputs the generated screen to the display unit 712 and the generated audio to the speaker 705. The control unit 707 plays back the contents by repeating the processes of reception of data, expansion, generation of a screen and audio and output.

In addition, receiving emergency screen data and a request of emergency screen display from the memory card 300, the control unit 707 generates an emergency screen from the received emergency screen data and outputs the generated screen to the display unit 712.
The control unit 707 also controls, via the input and output unit 702, radio control unit 708, radio communication unit 701 and antenna 714, information transmission and reception between the memory card 300 and the security management device 600.

(5) Display Unit 712, Input Unit 713, Speaker 705 and Microphone 706
The display unit 712 displays a variety of information under the control of the control unit 707.
The input unit 713 has various keys including numeric keys, an enter key, and selection keys, receives a user's key operation, and outputs operation direction information corresponding to the received key operation to the control unit 707.

The speaker 705 outputs audio under the control of the control unit 707 or the radio control unit 708.
The microphone 706 detects audio under the control of the audio control unit 708.
*1.8 operations of Update System 10*
Next are described operations of the update system 10.

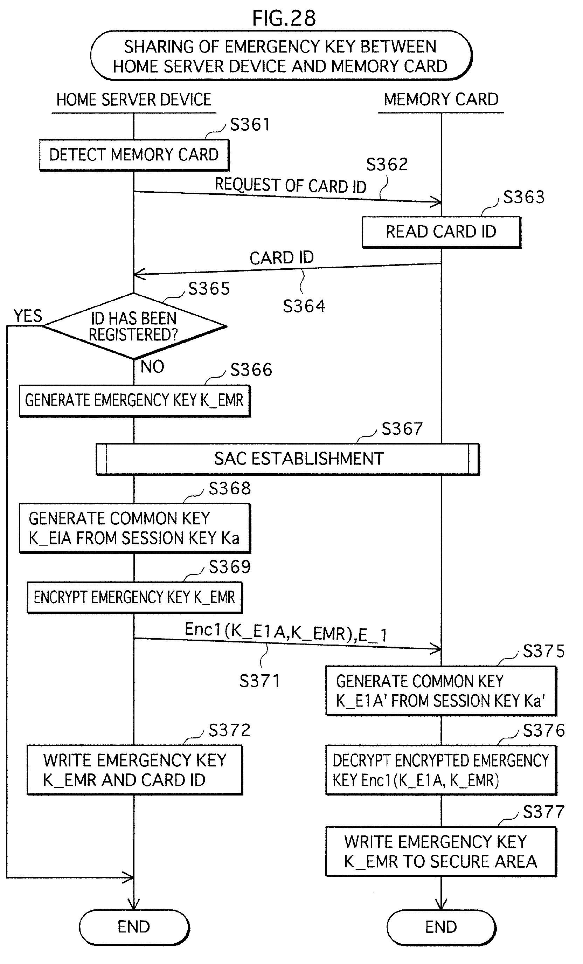

(1) Sharing of Emergency Key Between Home Server Device 100 and Memory Card 300
When the memory card 300 is placed in the home server device 100, an emergency key is shared between these two. The following describes sharing of the emergency key with the aid of a flowchart, shown in FIG. 28.
When detecting, via the input and output unit 102, the memory card 300 being placed thereto (Step S361), the home server device 100 requests the card ID from the memory card 300 (Step S362). Receiving the request of the card ID, the memory card 300 reads the card ID 327, "I5000D", from the secure area 320 of the information storage unit 310 (Step S363), and transmits the read card ID 327, "I5000D", to the home server device 100 (Step S364). The home server device 100 receives the card ID "I5000D" from the memory card 300, and judges whether the same ID as the received card ID "I5000D" is included in the emergency key list 124 stored in the storage unit 110 (Step S365). If it is included in the emergency key list 124 (Step S365: YES), the home server device 100 ends the process of emergency key sharing.

If the same ID as the received card ID "I5000D" is not included in the emergency key list 124 (Step S365: NO), the home server device 100 generates a random number, and then generates a 336-bit length emergency key K_EMR based on the generated random number, date information and the card ID "I5000D" (Step S366).
Then, the home server device 100 establishes a SAC with the memory card 300, and generates the session key Ka (Step S367). Then, the home server device 100 extracts 54 bits from the beginning of the generated session key Ka, and generates a common key K_E1A (Step S368). Using the generated common key K_E1A, the home server device 100 generates an encrypted emergency key Enc1(Ka, K_EMR) by an encryption scheme indicated by the scheme identifier "E_1" (Step S369). The home server device 100 then transmits the generated encrypted emergency key Enc1(Ka, K_EMR) and scheme identifier "E_1" to the memory card 300 (Step S371), and writes the card ID "I5000D" and the emergency key K_EMR into the emergency key list 124 (Step S372).

The memory card 300 receives the encrypted emergency key Enc1(Ka, K_EMR) and scheme identifier "E_1" from the home server device 100, and generates a common key K_E1A' by extracting 54 bits from the beginning of a session key Ka' generated by the SAC establishment (Step S375). Using the generated common key K_E1A', the memory card 300 decrypts the received encrypted emergency key Enc1(K_E1A, K_EMR) by an encryption scheme indicated by the received scheme identifier "E_1" (Step S376). Next, the memory card 300 writes the generated emergency key K_EMR to the secure area 320 (Step S377).

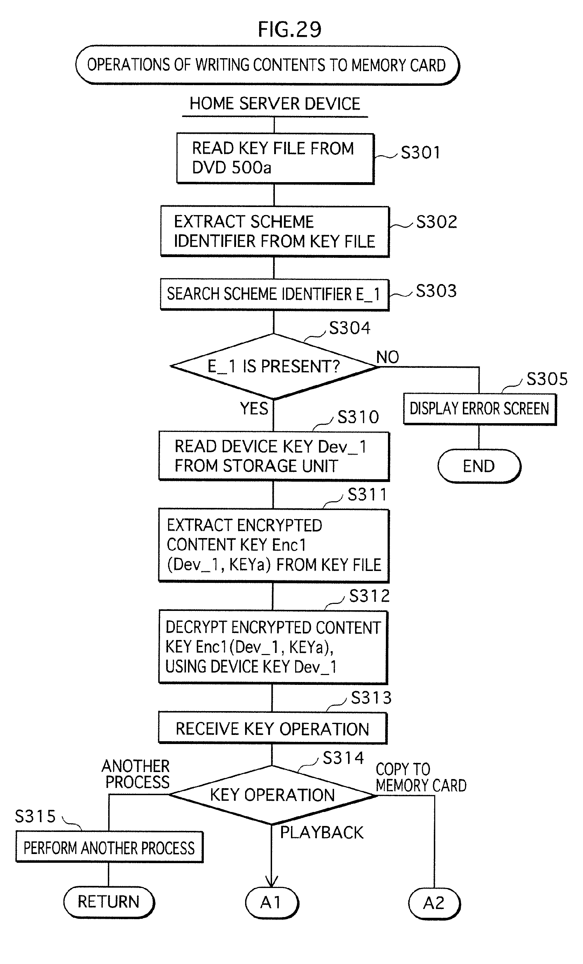

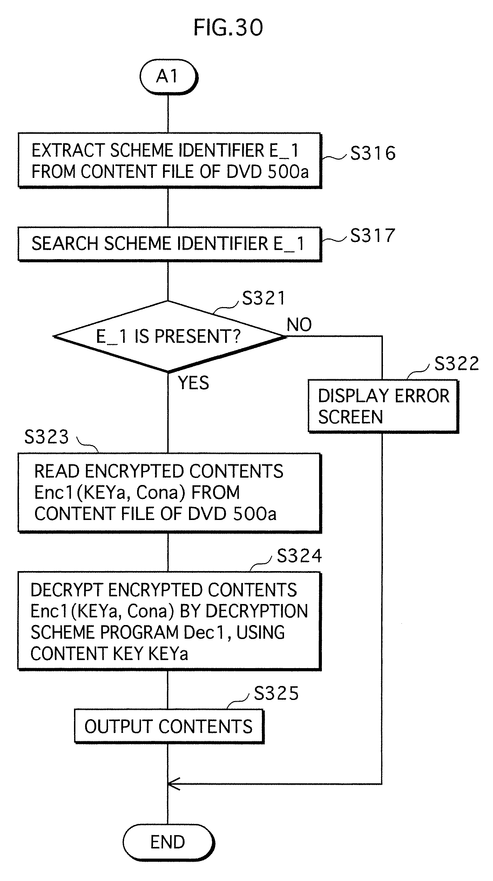

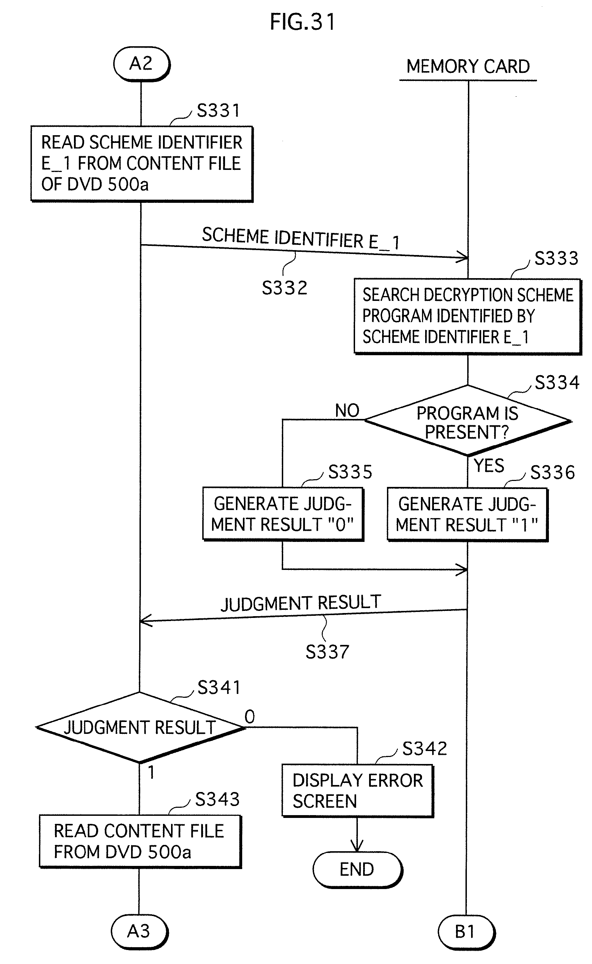

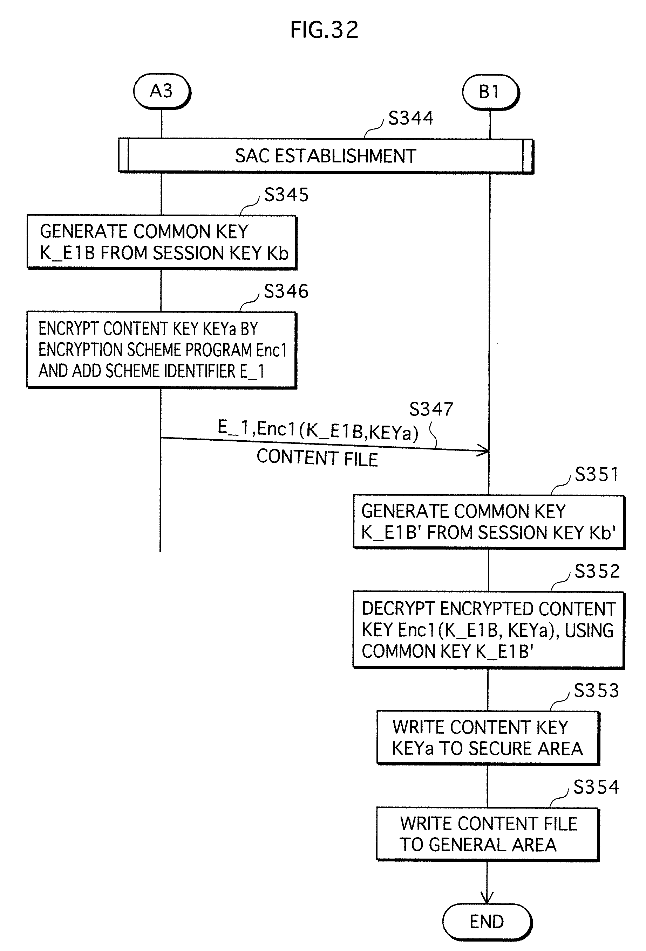

(2) Operation of Writing Contents to Memory Card 300
Next is described operation of writing contents to the memory card 300, with the aid of flowcharts shown in FIGs. 29 to 32. Here, assume that the emergency key sharing between the home server device 100 and the memory card 300, described in the above section (1), has been completed.
When detecting, via the input and output unit 115, the DVD 500a being placed thereto, the home server device 100 reads the key file 510a from the DVD 500a (Step S301), and extracts the scheme identifier 512a "E_1" from the read key file 510a (Step S302). Then, the home server device 100 searches the same identifier as the extracted scheme identifier 512a, "E_1", in the storage unit 110 (Step S303). When determining that the scheme identifier "E_1" is not present (Step S304: NO), the home server device 100 displays, on the display unit 112, an error screen indicating that the DVD 500a cannot be read (Step S305), and ends the process.

When determining that the scheme identifier "E_1" is present in the storage unit 110 (Step S304: YES), the home server device 100 reads the device key Dev_1 121 from the storage unit 110 (Step S310), and extracts the encrypted content key Enc1(Dev_1, KEYa) 511a from the key f ile 510a (Step S311). Then, using the read device key Dev_1 121, the home server device 100 decrypts the extracted encrypted content key Enc1(Dev_1, KEYa) based on a decryption scheme indicated by the scheme identifier 512a, "E_1" (Step S312).

Next, the home server device 100 receives a user's key operation via the input unit 113 (Step S313). When directed to play the contents back according to the key operation, the home server device 100 reads the scheme identifier 517a, "E_1", from the content file 515a of the DVD 500a (Step S316), and searches the same identifier as the read scheme identifier 517a, "E_1", in the storage unit 110 (Step S317). When determining that the scheme identifier 517a, "E_1", is not present (Step S321: NO), the home server device 100 displays, on the display unit 112, an error screen indicating that the contents cannot be generated (Step S322).

When determining that the scheme identifier 517a, "E_1", is present (Step S321: YES), the home server device 100 reads the encrypted contents Enc1(KEYa, Cona) 516a from the content file 515a of the DVD 500a (Step S323), and reads the content key KEYa. Then, using the content key KEYa, the home server device 100 generates the contents by decrypting the encrypted contents Enc1(KEYa, Cona) 516a based on a decryption scheme indicated by the scheme identifier 517a, "E_1" (Step S324).

Subsequently, the home server device 100 outputs the generated contents to the personal computer 50 (Step S325).
When directed to copy the contents to a memory card according to a user's key operation (Step S314), the home server device 100 reads the scheme identifier 517a, "E_1", from the content file 515a of the DVD 500a (Step S331), outputs the read scheme identifier 517a, "E_1", to the memory card 300, and inquires whether a ciphertext that has been encrypted by an encryption scheme indicated by the output scheme identifier can be decrypted (Step S332).

The memory card 300 receives the scheme identifier "E_1" from the home server device 100, receives the inquiry of whether a ciphertext that has been encrypted by an encryption scheme indicated by the received scheme identifier "E_1" can be decrypted, and searches, in the program memory 311, the decryption scheme program Dec1 indicated by the received scheme identifier "E_1" (Step S333). When determining that the decryption scheme program Dec1 indicated by the scheme identifier "E_1" is present (Step S334: YES), the memory card 300 generates a judgment result "1" (Step S336). When determining that the decryption scheme program Dec1 indicated by the scheme identifier "E_1" is not present (Step S334: NO), the memory card 300 generates a judgment result "0" (Step S335).

Next, the memory card 300 outputs the generated judgment result to the home server device 100 (Step S337).
The home server device 100 receives the judgment result from the memory card 300. If the received judgment result is "0" (Step S341: "0"), the home server device 100 displays, on the display unit 112, an error screen indicating that the contents cannot be copied to the memory card 300 (Step S342).

If the received judgment result is "1" (Step S341: "1"), the home server device 100 reads the content file 515a from the DVD 500a (Step S343), next establishes a SAC with the memory card 300, and generates the session key Kb (Step S344). Subsequently, the home server device 100 generates a common key K_E1B by extracting 54 bits from the beginning of the generated session key Kb (Step S345). Then, the home server device 100 reads the content key KEYa, generates the encrypted content key Enc1(K_E1B, KEYa) by encrypting the content key KEYa by an encryption scheme indicated by the scheme identifier "E_1", using the generated common key K_E1B, and adds the scheme identifier "E_1" indicating the encryption scheme of the encryption scheme program Enc1 (Step S346). The home server device 100 outputs, to the memory card 300, the generated encrypted content key Enc1(K_E1B, KEYa), the scheme identifier "E_1", and the content file 515a read from the DVD 500a (Step S347).

Receiving, from the home server device 100, the encrypted content key Enc1 (K_E1B, KEYa), scheme identifier "E_1" and content file, the memory card 300 extracts 54 bits from the beginning of the session key Kb' generated by the SAC establishment, and thereby generates a common key K_E1B' (Step S351). Then, using the generated common key K_E1B', the memory card 300 generates the content key KEYa by decrypting the received encrypted content key Enc1(K_E1B, KEYa) by the decryption scheme program Dec1 indicated by the received scheme identifier "E_1" (Step S352). The memory card 300 writes the generated content key KEYa to the secure area 320 (Step S353) while writing the content file to the general area 312 (Step S354).

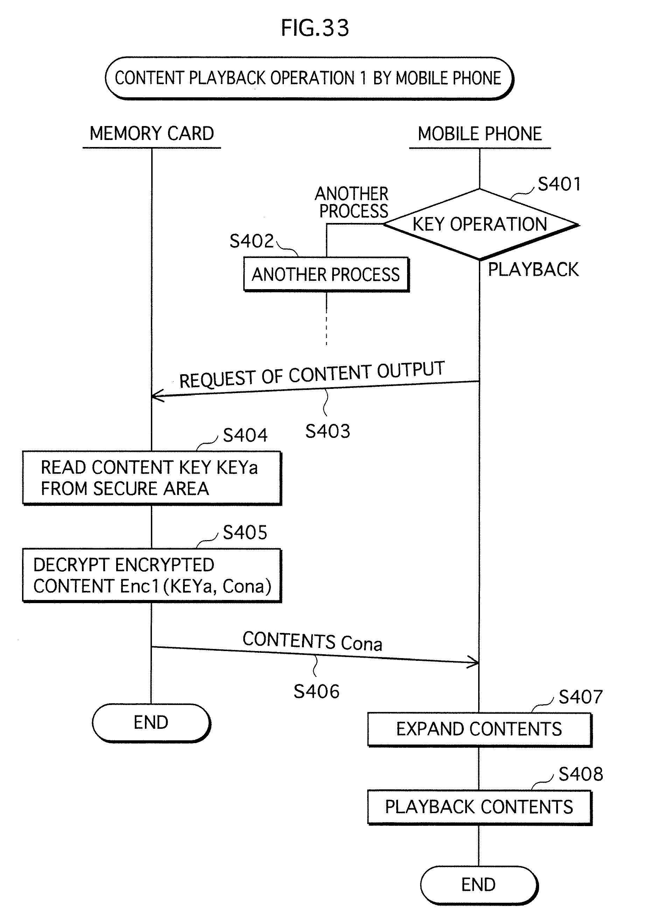

When directed to perform another process according to a user's key operation (Step S314), the home server device 100 performs the process (Step S315).
(3) Content Playback by Mobile Phone 700
Next is described operation for content playback performed by the mobile phone 700, with the aid of a flowchart shown in FIG. 33.

While the memory card 300, to which contents have been copied by the home server device 100, being placed in the mobile phone 700, the mobile phone 700 receives a user's key operation (Step S401), and requests output of the contents from the memory card 300 when receiving operation directing information indicating playback of the contents according to the key operation (Step S403).
When receiving operation directing information indicating another process according to the user's key operation (Step S401), the mobile phone 700 performs the process (Step S402).

When receiving a request of content output from the mobile phone 700, the memory card 300 reads the content key KEYa from the secure area 320 (Step S404). After reading the content file from the general area 312, the memory card 300 decrypts the encrypted contents Enc1 (KEYa, Cona) included in the read content file by the decryption scheme program Dec1 indicated by the scheme identifier "E_1" included in the content file, using the read content key KEYa, to thereby generate the contents Cona (Step S405). Next, the memory card 300 outputs the generated contents Cona to the mobile phone 700 (Step S406).

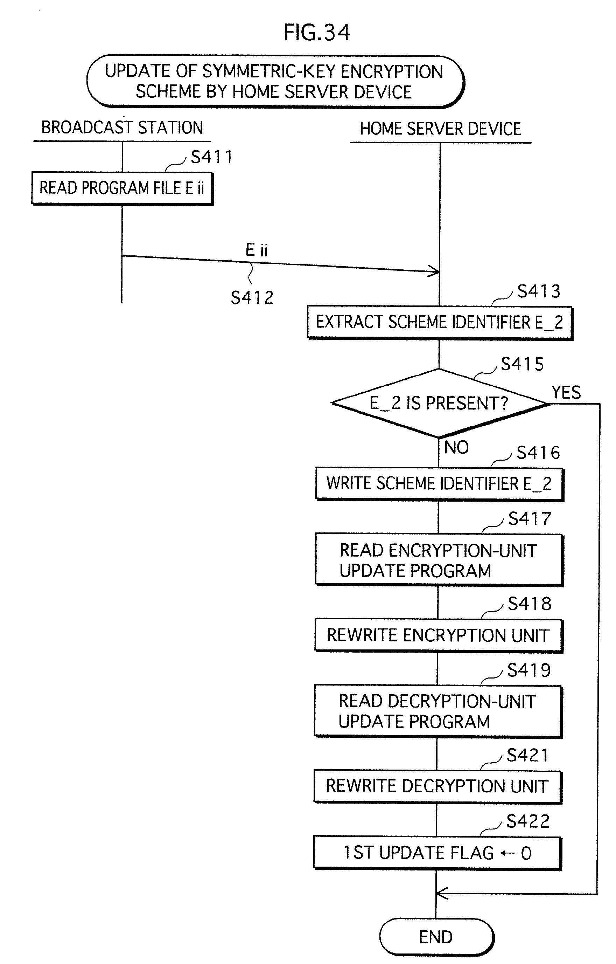

The mobile phone 700 receives the contents Cona from the memory card 300, expands the received contents Cona (Step S407), and plays the expanded contents back (Step S408).
(4) Update of Symmetric-Key Encryption Scheme by Home Server Device 100
Next is described operation for updating the symmetric-key encryption scheme of the home server device 100, with the aid of a flowchart shown in FIG. 34.

The broadcast station 70 reads the program file Eᵢᵢ received from the security management device 600 (Step S411), and transmits the read program file Eᵢᵢ through broadcast waves (Step S412).
After receiving the program file Eᵢᵢ, the home server device 100 extracts the scheme identifier "E_2" from the received program file Eᵢᵢ (Step S413), and searches the scheme identifier "E_2" in the storage unit 110. When determining that the scheme identifier "E_2" is present in the storage unit 110 (Step S415: YES), the home server device 100 directly ends the process.

When determining that the scheme identifier "E_2" is not present in the storage unit 110, the home server device 100 writes the scheme identifier "E_2" to the storage unit 110 (Step S416).
Next, the home server device 100 extracts the encryption-unit update program from the received program file Eᵢᵢ (Step S417), and rewrites the encryption unit 108 according to procedures shown by the extracted encryption-unit update program (Step S418).

The home server device 100 extracts the decryption-unit update program from the received program file Eᵢᵢ (Step S419), and rewrites the decryption unit 109 according to procedures shown by the extracted decryption-unit update program (Step S421).
Then, the home server device 100 sets the 1st update flag 181 in the storage unit 110 to "0" (Step S422).

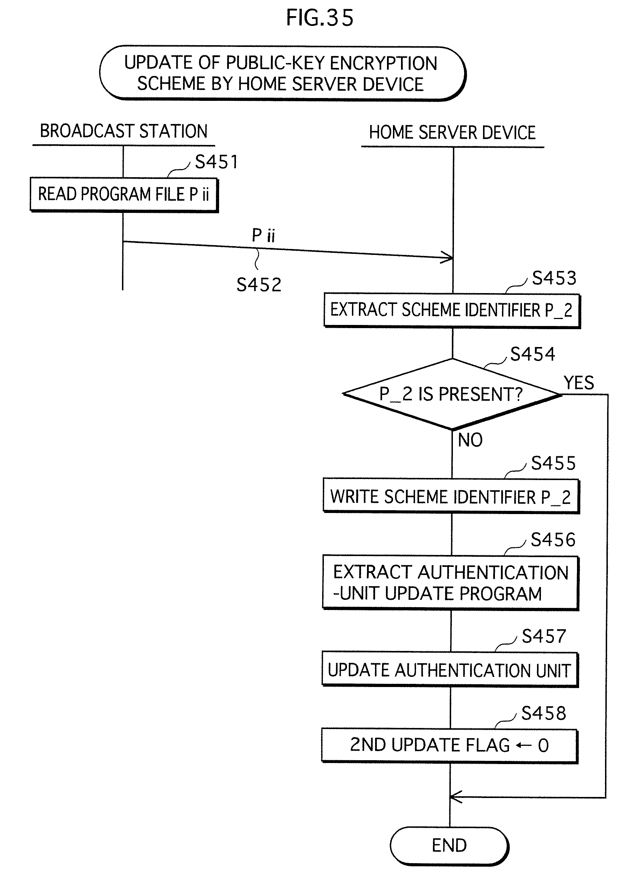

(5) Update of Public-Key Encryption Scheme by Home Server Device 100
Next is described operation for updating the public-key encryption scheme of the home server device 100, with the aid of a flowchart shown in FIG. 35.
The broadcast station 70 reads the program file Pᵢᵢ received from the security management device 600 (Step S451), and transmits the read program file Pᵢᵢ through broadcast waves (Step S452).

After receiving the program file Pᵢᵢ, the home server device 100 extracts the scheme identifier "P_2" from the received program file Pᵢᵢ (Step S453), and searches the scheme identifier "P_2" in the storage unit 110. When determining that the scheme identifier "P_2" is present in the storage unit 110 (Step S454: YES), the home server device 100 directly ends the process.
When determining that the scheme identifier "P_2" is not present in the storage unit 110 (Step S454: NO), the home server device 100 writes the scheme identifier "P_2" to the storage unit 110 (Step S455).

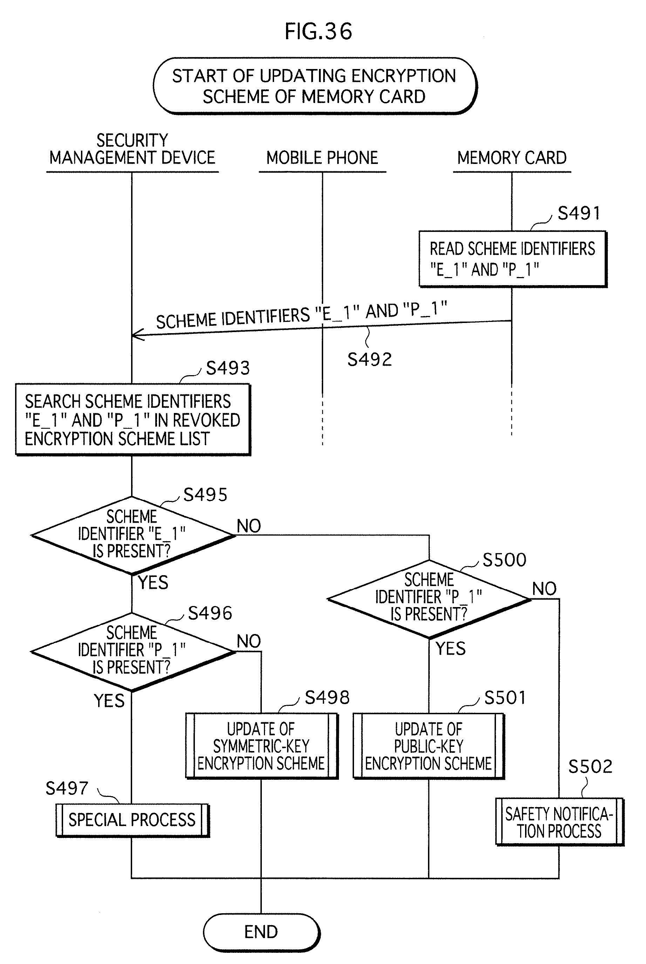

Next, the home server device 100 extracts the authentication-unit update program from the received program file Pᵢᵢ (Step S456), and rewrites the authentication unit 103 according to procedures shown by the extracted authentication-unit update program (Step S457). Then, the home server device 100 sets the 2nd update flag 182 in the storage unit 110 to "0" (Step S458), and ends the process.
(6) Start of Encryption Scheme Update Processes by Memory Card 300
Next is described the update processes of the encryption schemes performed by the memory card 300, with the aid of a flowchart shown in FIG. 36.

When detecting being placed in the mobile phone 700, the memory card 300 reads the scheme identifier 341, "E_1", and the scheme identifier 355, "P_1", from the program memory 311 (Step S491). Then, the memory card 300 transmits the read scheme identifier 341, "E_1", and scheme identifier 355, "P_1", to the security management device 600 via the mobile phone 700 (Step S492), and requests the security management device 600 to check the safety.

After receiving the scheme identifiers "E_1" and "P_1" from the memory card 300, the security management device 600 searches the same identifiers as the received scheme identifiers "E_1" and "P_1" in the revoked encryption scheme list 621 stored in the information storage unit 610 (Step S493).
When determining that the same identifier as the scheme identifier "E_1" is present in the revoked encryption scheme list 621 (Step S495 : YES), and further determining that the same identifier as the scheme identifier "P_1" is present in the revoked encryption scheme list 621 (Step S496: YES), the security management device 600 performs a special process, and ends the processes of updating the encryption schemes of the memory card 300 (Step S497).

When determining in Step S496 that the same identifier as the scheme identifier "P_1" is not present in the revoked encryption scheme list 621, the security management device 600 moves on to the process of updating the symmetric-key encryption scheme (Step S498).
When determining in Step S495 that the same identifier as the scheme identifier "E_1" is not present in the revoked encryption scheme list 621, but determining that the same identifier as the scheme identifier "P_1" is present in the revoked encryption scheme list 621 (Step S500: YES), the security management device 600 moves on to the process of updating the public-key encryption scheme (Step S501).

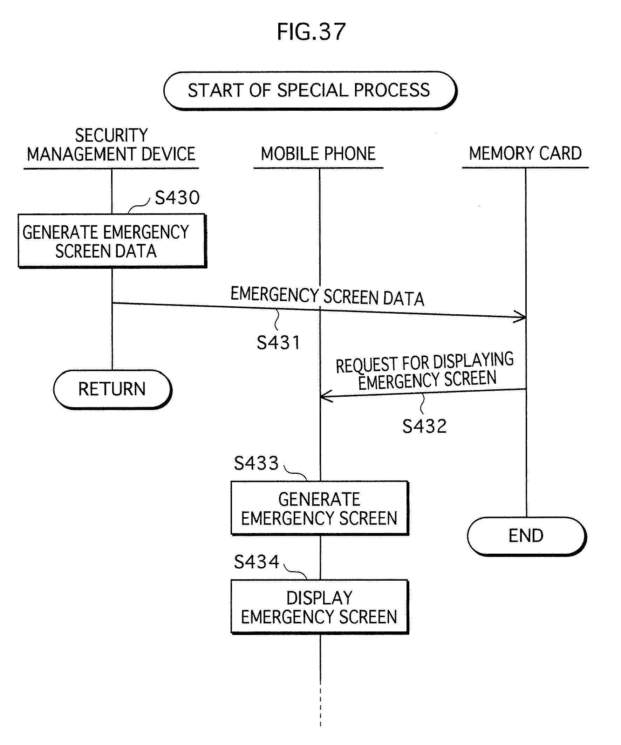

When determining in Step S500 that the same identifier as the scheme identifier "P_1" is not present in the revoked encryption scheme list 621, the security management device 600 performs a safety notification process, and ends the process of updating the encryption scheme of the memory card 300 (Step S502).
(7) Special Process
Next is described the special process, with the aid of a flowchart shown in FIG. 37, which is a detail of Step S497 in FIG. 36.

The security management device 600 generates emergency screen data (Step S430), and transmits the generated emergency screen data to the memory card 300 via the Internet 20 and the mobile phone 700 (Step S431).
After receiving the emergency screen data from the security management device 600, the memory card 300 requests emergency screen display of the mobile phone 700 and outputs the emergency screen data (Step S423). The mobile phone 700 receives the request of emergency screen display and the emergency screen data from the memory card 300, and generates an emergency screen from the received emergency screen data (Step S433). Then, the mobile phone 700 displays the generated emergency screen on the display unit 712 (Step S434), and ends the special process.

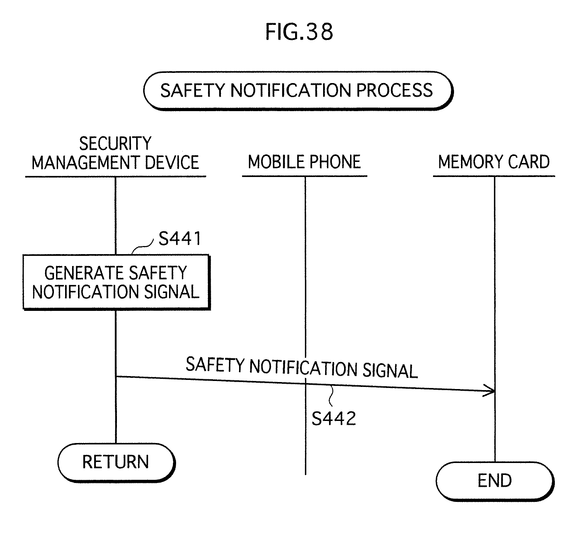

(8) Safety Notification Process
Next is described the safety notification process, with the aid of a flowchart shown in FIG. 38, which is a detail of Step S502 in FIG. 36.
The security management device 600 generates a safety notification signal (Step S441), and transmits the generated safety notification signal to the memory card 300 via the Internet 20 and the mobile phone 700 (Step S442).

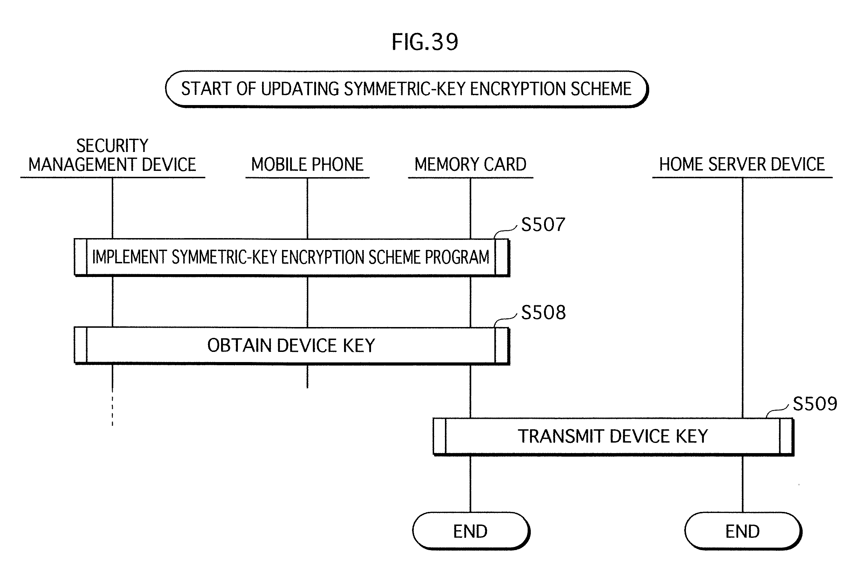

When receiving the safety notification signal from the security management device 600, the memory card 300 directly ends the process.
(9) Update of Symmetric-Key Encryption Scheme by Memory Card 300
Next is described the update process of the symmetric-key encryption scheme performed by the memory card 300, with the aid of a flowchart shown in FIG. 39, which is a detail of Step S498 in FIG. 36.

The memory card 300 obtains programs based on a new symmetric-key encryption scheme from the security management device 600 via the mobile phone 700, and installs the obtained programs (Step S507).
Next, the memory card 300 obtains, from the security management device 600, the device key Dev_2 corresponding to the new symmetric-key encryption scheme (Step S508), and transmits the obtained device key Dev_2 to the home server device 100 (Step S509).

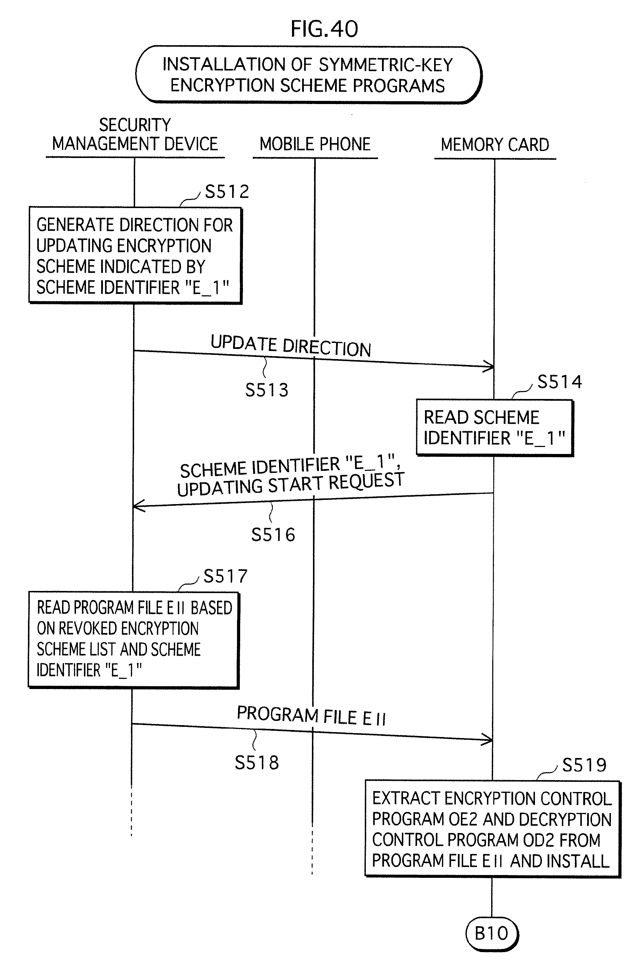

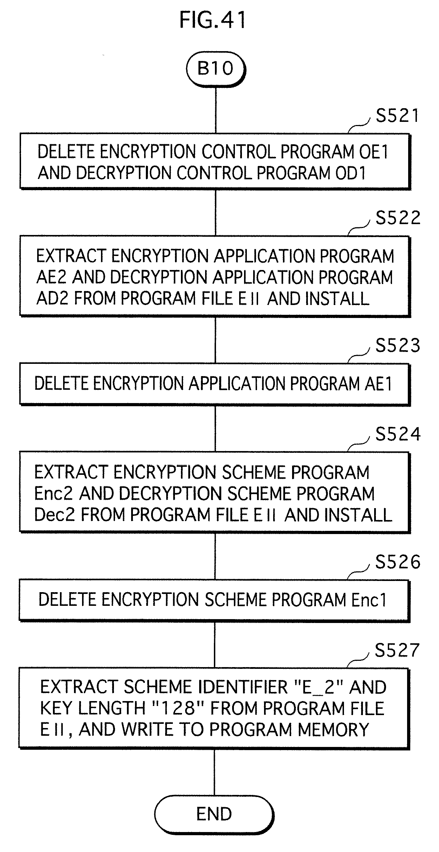

(10) Installation of Programs for Symmetric-Key Encryption Scheme
Next is described installation of programs for the new symmetric-key encryption scheme of the memory card 300, with the aid of flowcharts shown in FIGs. 40 and 41, which show details of Step S507 in FIG. 39.
The security management device 600 generates an update direction that directs the update of an encryption scheme indicated by the scheme identifier "E_1" (Step S512), and transmits the generated update direction to the memory card 300 via the Internet 20 (Step S513). When receiving the update direction of an encryption scheme indicated by the scheme identifier "E_1" from the security management device 600, the memory card 300 reads the scheme identifier 341, "E_1", from the program memory 311 (Step S514), transmits the read scheme identifier 341, "E_1", to the security management device 600, and places a request of starting the update (Step S516).

When receiving the scheme identifier "E_1" and updating start request from the memory card 300, the security management device 600 reads the program file E_{II} 641 based on the revoked encryption scheme list 621 and the received scheme identifier "E_1" (Step S517). Then, the security management device 600 transmits the read program file E_{II} 641 to the memory card 300 (Step S518).

When receiving the program file E_{II} from the security management device 600, the memory card 300 installs the encryption control program OE2 and decryption control program OD2 included in the received program file E_{II} (Step S519). Next, the memory card 300 deletes the encryption control program OE1 331 and decryption control program OD1 332 from the program memory 311 (Step S521).
Then, the memory card 300 installs the encryption application program AE2 and decryption application program AD2 included in the received program file E_{II} (Step S522), and deletes the encryption application program AE1 335 from the program memory 311 (Step S523).

The memory card 300 installs the encryption scheme program Enc2 and decryption scheme program Dec2 included in the received program file E_{II} (Step S524). The memory card 300 then deletes the encryption scheme program Enc1 342 from the program memory 311 (Step S526).
Subsequently, the memory card 300 writes the scheme identifier "E_2" and key length "128" included in the received program file E_{II} to the program memory 311 (Step S527), and ends the installation of programs for the symmetric-key encryption scheme.

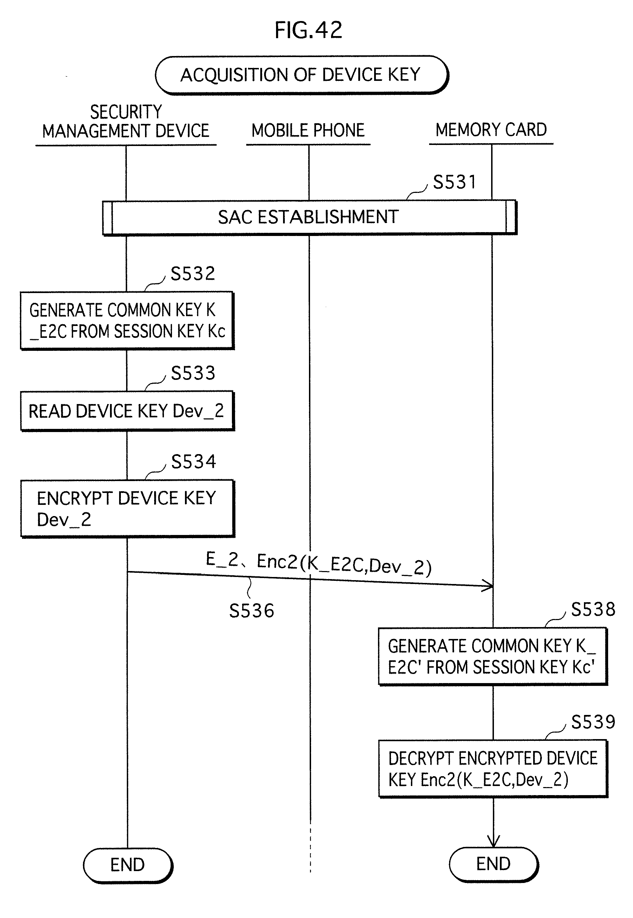

(11) Acquisition of Device Key
Next is described operation for device key acquisition performed by the memory card 300, with the aid of a flowchart shown in FIG. 42, which is a detail of Step S508 in FIG. 39.
The security management device 600 establishes a SAC with the memory card 300 and generates the session key Kc (Step S531). Then, the security management device 600 extracts 128 bits from the beginning of the session key Kc, and thereby generates the common key K_E2C (Step S532).

The security management device 600 next reads the device key Dev_2 from the revoked encryption scheme list 621 based on the scheme identifier "E_1" preliminarily received from the memory card 300 (Step S533), and generates the encrypted device key Enc2 (K_E2C, Dev_2) by encrypting the read device key Dev_2 by an encryption scheme indicated by the scheme identifier "E_2", using the generated common key K_E2C (Step S534).

The security management device 600 transmits, to the memory card 300, the generated encrypted device key Enc2(K_E2C, Dev_2) and the scheme identifier "E_2" indicating an encryption scheme used to generate the encrypted device key Enc2(K_E2C, Dev_2) (Step S536).
Receiving, from the security management device 600, the scheme identifier "E_2" and encrypted device key Enc2(K_E2C, Dev_2), the memory card 300 extracts 128 bits from the beginning of the session key Kc' generated by the SAC establishment, and thereby generates the common key K_E2C' (Step S538). The memory card 300 decrypts the received encrypted device key Enc2(K_E2C, Dev_2), using the generated common key K_E2C' (Step S539).

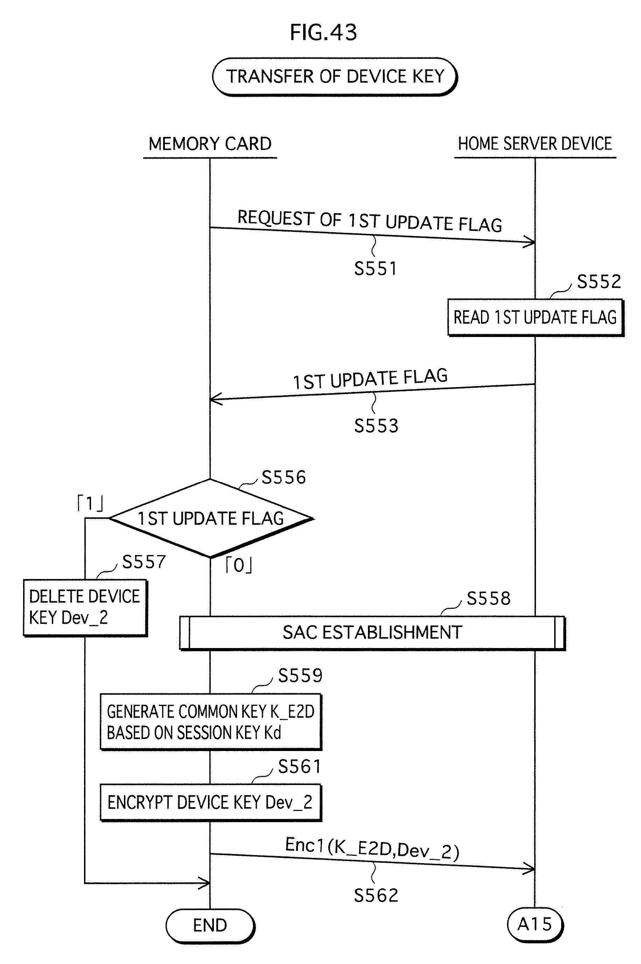

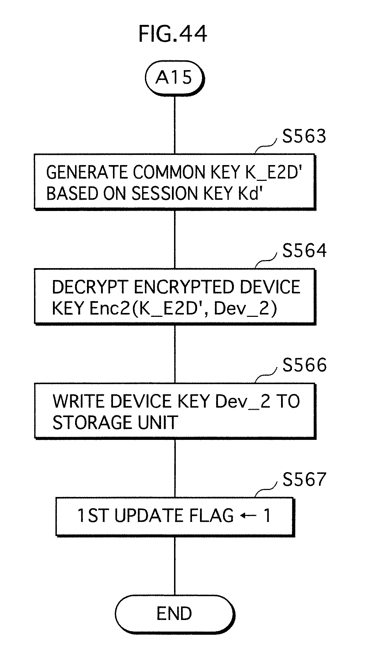

(12) Transfer of Device Key
Next is described a process of transferring a device key to the home server device 100 from the memory card 300, with the aid of flowcharts shown in FIGs. 43 and 44, which show details of Step S509 in FIG. 39.
When placed in the home server device 100, the memory card 300 requests a 1st update flag of the home server device 100 (Step S551).

Receiving the request of a 1st update flag from the memory card 300, the home server device 100 reads the 1st update flag 181 from the storage unit 110 (Step S552), and transmits the read 1st update flag 181 to the memory card 300 (Step S553).
The memory card 300 receives the 1st update flag from the home server device 100, and judges whether the received 1st update flag is "1" (Step S556). When determining that it is "1", the memory card 300 deletes the device key Dev_2 that the memory card 300 currently stores (Step S557), and ends the process.

When determining that the received 1st update flag is "0" (Step 5556), the memory card 300 establishes a SAC with the home server device 100 and generates the session key Kd (Step S558). The memory card 300 extracts 128 bits from the beginning of the generated session key Kd, and generates the common key K_E2D (Step S559). Then, the memory card 300 encrypts the device key Dev_2 using the generated common key K_E2D to thereby generate the encrypted device key Enc2(K_E2D, Dev_2) (Step S561). Subsequently, the memory card 300 transmits the generated encrypted device key Enc2(K_E2D, Dev_2) to the home server device 100 (Step S562).

Receiving the encrypted device key Enc2(K_E2D, Dev_2) from the memory card 300, the home server device 100 extracts 128 bits from the beginning of the session key Kd' generated by the SAC establishment, generates the common key K_E2D' (Step S563), generates the device key Dev_2 by decrypting the received encrypted device key Enc2(K_E2D, Dev_2) using the generated common key K_E2D' (Step S564), and writes the generated device key Dev_2 to the storage unit 110 (Step S566).

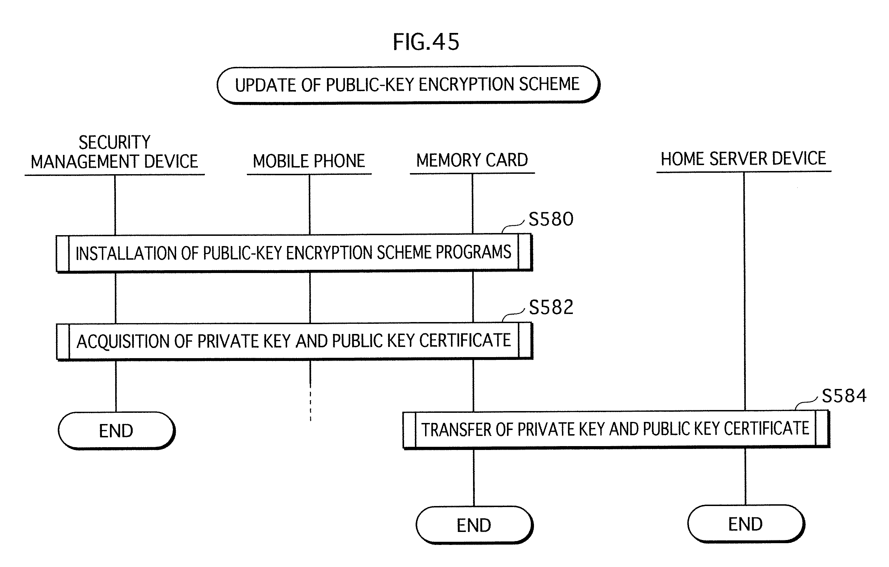

Then, the home server device 100 writes "1" to the 1st update flag 181 (Step S567), and ends the process.
(13) Update of Public-Key Encryption Scheme of Memory Card 300
Next is described a process of updating the public-key encryption scheme of the memory card 300, with the aid of FIG. 45, which shows details of Step S501 in FIG. 36.

The memory card 300 obtains programs for a new public-key encryption scheme from the security management device 600 via the mobile phone 700, and installs the obtained programs (Step S580). Then, the memory card 300 obtains a new private key and public key certificate from the security management device 600 (Step S582), and transmits the obtained private key and public key certificate to the home server device 100 (Step S584).

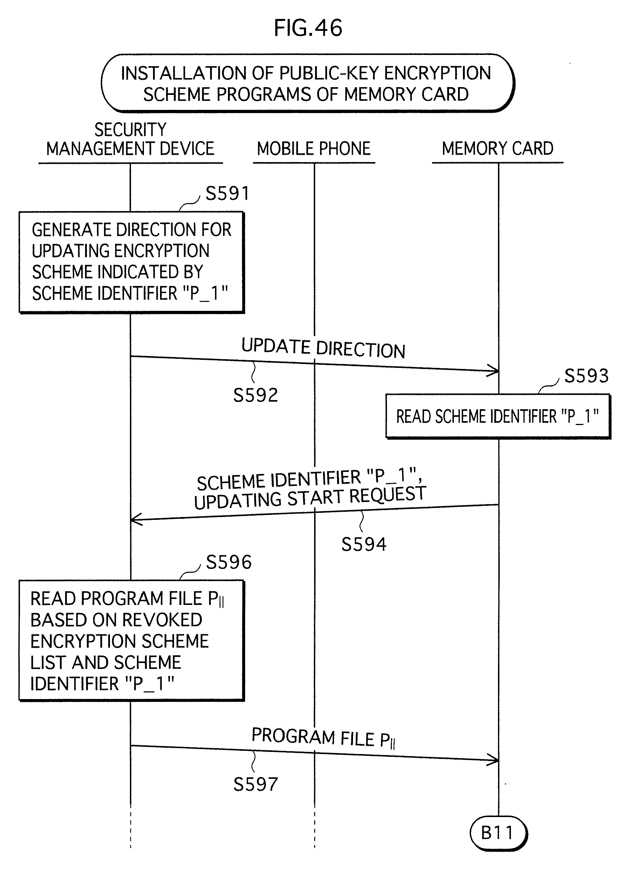

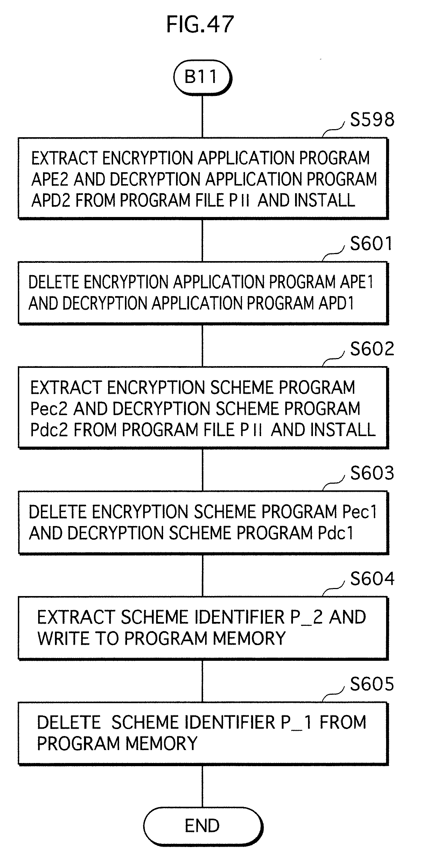

(14) Installation of Programs for Public-Key Encryption Scheme
Next is described installation of programs for the new public-key encryption scheme of the memory card 300, with the aid of flowcharts shown in FIGs. 46 and 47, which show details of Step S580 in FIG. 45.
The security management device 600 generates an update direction that directs the update of an encryption scheme indicated by the scheme identifier "P_1" (Step S591), and transmits the generated update direction to the memory card 300 via the Internet 20 (Step S592). When receiving the update direction of an encryption scheme indicated by the scheme identifier "P_1" from the security management device 600, the memory card 300 reads the scheme identifier 355, "P_1", from the program memory 311 (Step S593), transmits the read scheme identifier 355, "P_1", to the security management device 600, and places a request of starting the update (Step S594).

When receiving the scheme identifier "P_1" and updating start request from the memory card 300, the security management device 600 reads the program file P_{II} 671 based on the revoked encryption scheme list 621 and the received scheme identifier "P_1" (Step S596). Then, the security management device 600 transmits the read program file P_{II} 671 to the memory card 300 (Step S597).

When receiving the program file P_{II} from the security management device 600, the memory card 300 installs the encryption application program APE2 and decryption application program APD2 included in the received program file P_{II} (Step S598). Next, the memory card 300 deletes the encryption application program APE1 352 and decryption application program APD1 353 from the program memory 311 (Step S601).

Then, the memory card 300 installs the encryption scheme program Pec2 and decryption scheme program Pdn2 included in the received program file P_{II} (Step S602), and deletes the encryption scheme program Pec1 356 and decryption scheme program Pdc1 357 from the program memory 311 (Step S603).
The memory card 300 writes the scheme identifier "P_2" included in the received program file P_{II} to the program memory 311 (Step S604), deletes the scheme identifier 355, "P_1", from the program memory 311 (Step S605), and ends the installation of programs for the public-key encryption scheme.

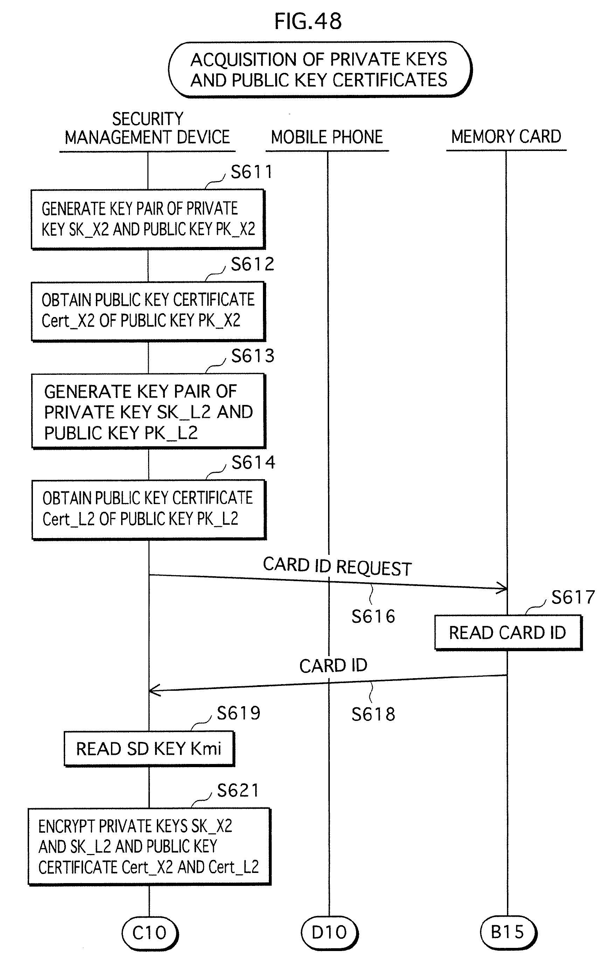

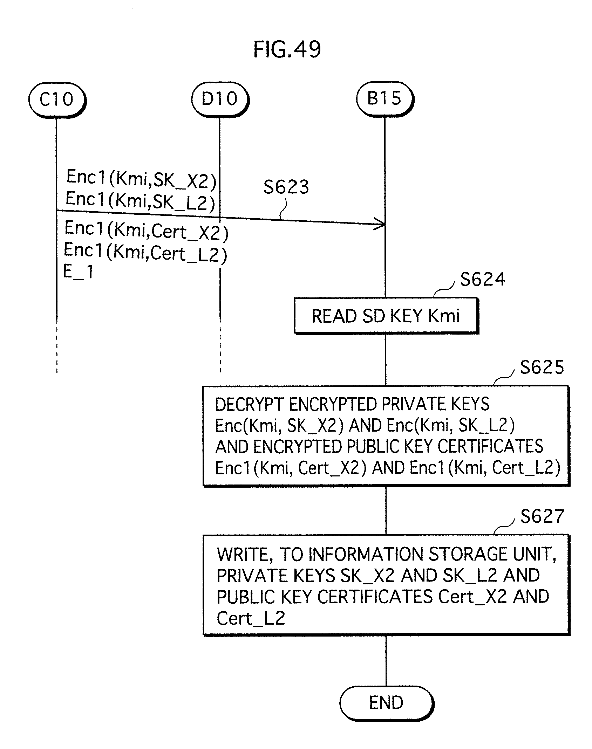

(15) Acquisition of Private Keys and Public Key Certificates
Next is described a process of obtaining private keys and public key certificates, with the aid of flowcharts shown in FIGs. 48 and 49, which show details of Step S582 in FIG. 45.
The security management device 600 generates the key pair of the private key SK_X2 and the public key PK_X2 (Step S611), and obtains, from the certificate authority, the public key certificate Cert_X2 of the public key PK_X2 (Step S612). Next, the security management device 600 generates the key pair of the private key SK_L2 and public key PK_L2 (Step S613), and obtains, from the certificate authority, the public key certificate Cert_L2 of the public key PK_L2 (Step S614).

Next, the security management device 600 requests the card ID from the memory card 300 (Step S616).
Receiving the request of the card ID from the security management device 600 via the mobile phone 700, the memory card 300 reads the card ID 327, "I5000D", from the information storage unit 310, and transmits the read card ID 327, "I5000D", to the security management device 600 (Step S618).

Receiving the card ID "I5000D" from the memory card 300, the security management device 600 selects SD key information from the SD key list based on the received card ID "I5000D", and reads the SD key Kmi included in the selected SD key information (Step S619). The security management device 600 encrypts the private key SK_X2, public key certificate Cert_X2, private key SK_L2 and public key certificate Cert_L2, using the read SD key Kmi to thereby generate the encrypted private key Enc1(Kmi, SK_X2), encrypted public key certificate Enc1(Kmi, Cert_X2), encrypted private key Enc1(Kmi, SK_L2) and encrypted public key certificate Enc1(Kmi, Cert_L2) (Step S621).

Then, the security management device 600 transmits, to the memory card 300, the generated encrypted private key Enc1(Kmi, SK_X2), encrypted public key certificate Enc1(Kmi, Cert_X2), encrypted private key Enc1(Kmi, SK_L2) and encrypted public key certificate Enc1(Kmi, Cert_L2) as well as the scheme identifier "E_1" (Step S623).
The memory card 300 receives, from the security management device 600 via the mobile phone 700, the encrypted private key Enc1 (Kmi, SK_X2), encrypted public key certificate Enc1 (Kmi, Cert_X2), encrypted private key Enc1 (Kmi, SK_L2), encrypted public key certificate Enc1 (Kmi, Cert_L2), and scheme identifier "E_1". The memory card 300 then reads the SD key Kmi 330 from the information storage unit 310 (Step S624), and decrypts the received encrypted private key Enc1(Kmi, SK_X2), encrypted public key certificate Enc1(Kmi, Cert_X2), encrypted private key Enc1(Kmi, SK_L2) and encrypted public key certificate Enc1(Kmi, Cert_L2), using the read SD key Kmi 330, and thereby generates the private key SK_X2, public key certificate Cert_X2, private key SK_L2 and public key certificate Cert_L2 (Step S625). The memory card 300 writes, to the information storage unit 310, the generated private key SK_X2, public key certificate Cert_X2, private key SK_L2 and public key certificate Cert_L2 (Step S627), and ends the process of obtaining the private keys and public key certificates.

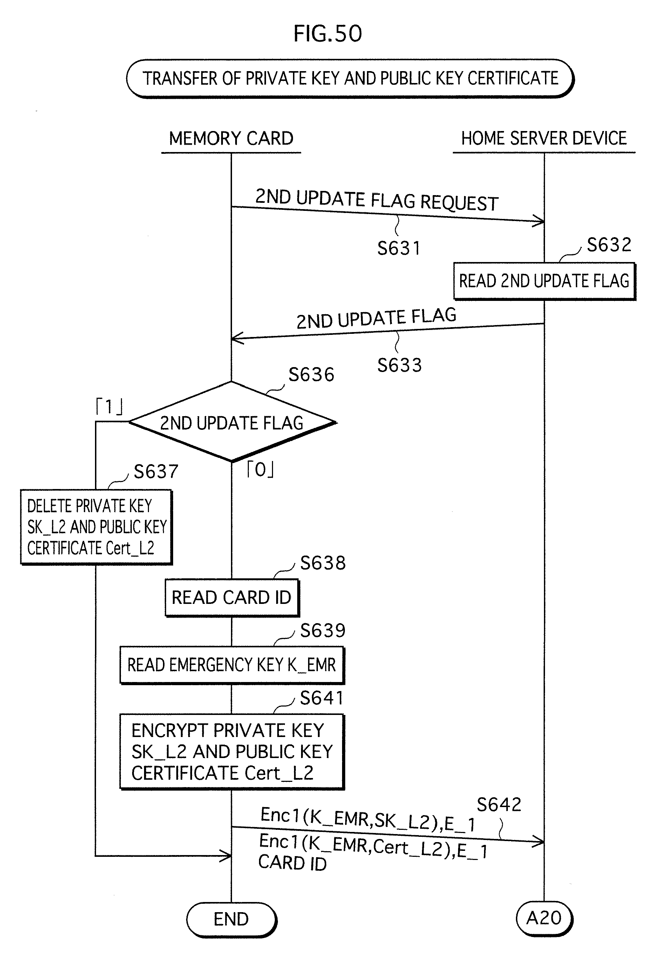

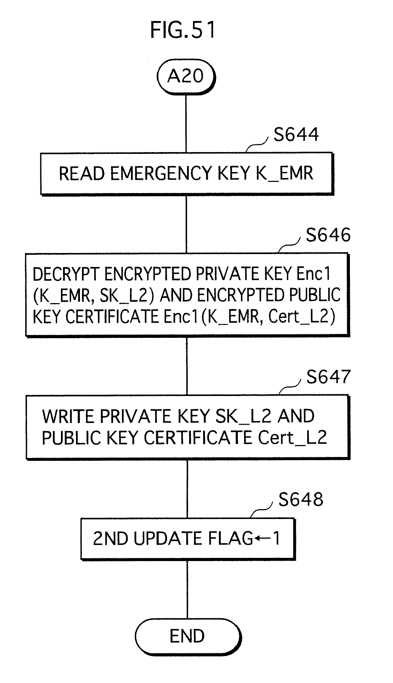

(16) Transfer of Private Key and Public Key Certificate
Next is described a process of transferring a private key and a public key certificate to the home server device 100 from the memory card 300, with the aid of flowcharts shown in FIGs. 50 and 51, which show details of Step S584 in FIG. 45.
When detecting being placed in the home server device 100, the memory card 300 requests a 2nd update flag from the home server device 100 (Step S631). Receiving the request of a 2nd update flag from the memory card 300, the home server device 100 reads the 2nd update flag 182 from the storage unit 110 (Step S632), and transmits the read 2nd update flag 182 to the memory card 300 (Step S633).

The memory card 300 receives the 2nd update flag from the home server device 100, and judges whether the received 2nd update flag is "1" (Step S636). When determining that it is "1", the memory card 300 deletes the private key SK_L2 and public key certificate Cert_L2 (Step S637), and ends the process.
When determining that the received 2nd update flag is "0" (Step S636), the memory card 300 reads the card ID 327, "I5000D", from the information storage unit 310 (Step S638). The memory card reads the emergency key K_EMR 328 from the information storage unit 310 (Step S639), and encrypts the private key SK_L2 and public key certificate Cert_L2, using the read emergency key K_EMR 328, and thereby generates the encrypted private key Enc1 (K_EMR, SK_L2) and encrypted public key certificate Enc1(K_EMR, Cert_L2) (Step S641). Then, the memory card 300 transmits, to the home server device 100, the generated encrypted private key Enc1(K_EMR, SK_L2) and encrypted public key certificate Enc1(K_EMR, Cert_L2) as well as the scheme identifier "E_1" and the read card ID 327, "I5000D" (Step S642).

Receiving, from the memory card 300, the encrypted private key Enc1(K_EMR, SK_L2), encrypted public key certificate Enc1(K_EMR, Cert_L2), scheme identifier "E_1" and card ID "I5000D", the home server device 100 selects the emergency key information 125 from the emergency key list 124 based on the received card ID "I5000D", and reads the emergency key K_EMR included in the selected emergency key information 125 (Step S644). Next, the home server device 100 decrypts the encrypted private key Enc1(K_EMR, SK_L2) and encrypted public key certificate Enc1(K_EMR, Cert_L2) using the read emergency key K_EMR, and thereby generates the private key SK_L2 and public key certificate Cert_L2 (Step S646). Subsequently, the home server device 100 writes the generated private key SK_L2 and public key certificate Cert_L2 to the storage unit 110 (Step S647).

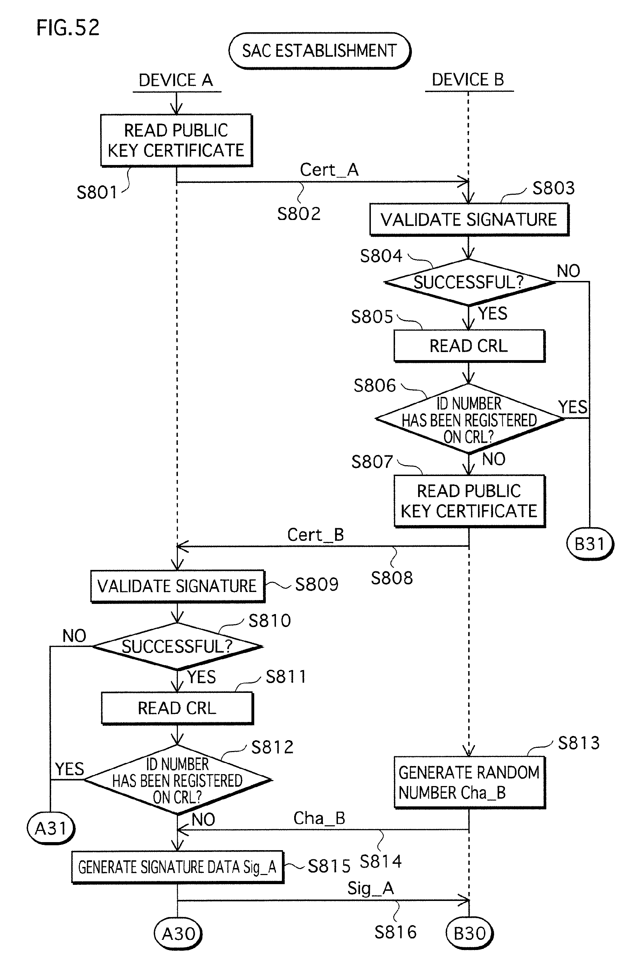

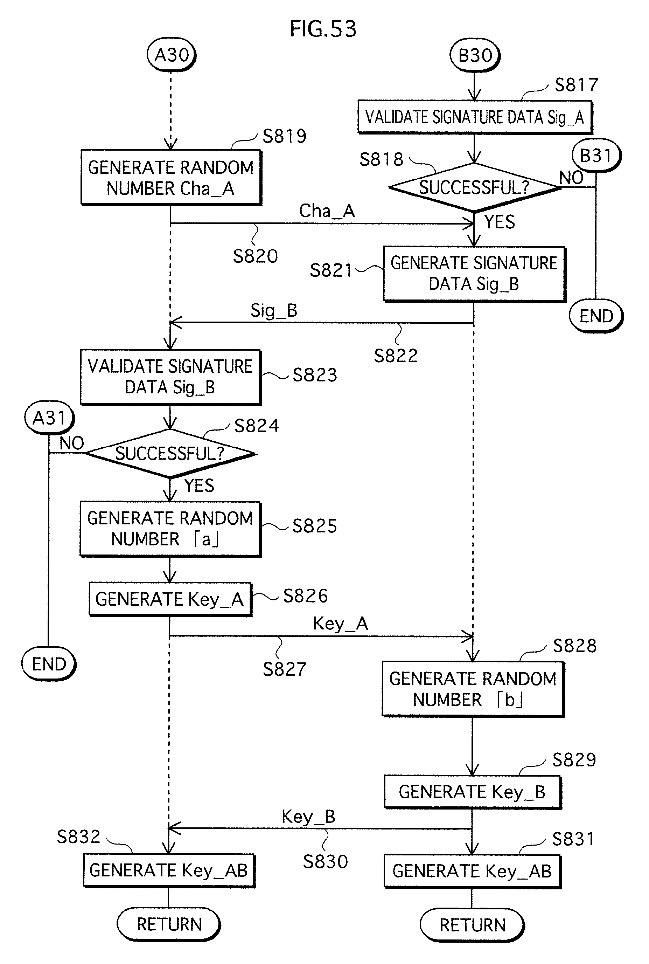

Then, the home server device 100 writes "1" to the 2nd update flag 182 of the storage unit 110 (Step S648), and ends the process.
(17) SAC Establishment
Next is described the SAC establishment between devices, with the aid of FIGs. 52 and 53.
Note that a method described here to establish a SAC is merely an example, and different authentication technique and key sharing technique may be employed instead. In addition, since the SAC establishment is carried out between the home server device 100 and the memory card 300 as well as between the memory card 300 and the security management device 600, the following description uses notations of "device A" and "device B" to represent a set of two devices.

Here, Gen() denotes a key generation function, and Y is a parameter specific to a system. The key generation function Gen ( ) satisfies the relationship of Gen(x, Gen(z, Y)) = Gen (z, Gen (x, Y)). The key generation function is practicable by arbitrary publicly-known technology, and therefore the detail is not described here.
The device A reads the public key certificate Cert_A (Step S801), and transmits the read public key certificate Cert_A to the device B (Step S802).

When receiving the public key certificate Cert_A, the device B performs signature validation by applying the signature validation algorithm V to the signature data Sig_CA of the certificate authority included in the received public key certificate Cert_A, using the public key PK_CA of the certificate authority (Step S803). When the signature validation is not successful (Step S804 : NO), the device B ends the process.
When the signature validation is successful (Step S804: YES), the device B reads the CRL (Step S805), and judges whether an ID number ID_A included in the received public key certificate Cert_A has been registered on the read CRL (Step S806). When determining that it has been registered (Step S806: YES), the device B ends the process.

When determining that it has not been registered (Step S806: NO), the device B reads a public key certificate Cert_B (Step S807), and transmits the read public key certificate Cert_B to the device A (Step S808).
After receiving the public key certificate Cert_B, the device A performs signature validation by applying the signature validation algorithm V to the signature data Sig_CA of the certificate authority included in the received public key certificate Cert_B, using the public key PK_CA of the certificate authority (Step S809). When the signature validation is not successful (Step S810: NO), the device A ends the process.

When the signature validation is successful (Step S810 : YES), the device A reads the CRL (Step S811), and judges whether an ID number ID_B included in the received public key certificate Cert_B has been registered on the read CRL (Step S812). When determining that it has been registered (Step S812: YES), the device A ends the process. When determining that it has not been registered (Step S812: NO), on the other hand, the device A continues the process.

The device B generates the random number Cha_B (Step S813), and transmits the generated random number Cha_B to the device A (Step S814).
After receiving the random number Cha_B, the device A generates the signature data Sig_A by applying the signature generation algorithm S to the received random number Cha_B, using the private key SK_A of the device A (Step S815), and transmits the generated signature data Sig_A to the device B (Step S816).

Receiving the signature data Sig_A, the device B performs signature validation by applying the signature validation algorithm V to the received signature data Sig_A, using the public key PK_A of the device A included in the received public key certificate Cert_A (Step S817). When determining that the signature validation is not successful (Step S818 : NO), the device B ends the process. When determining that the signature validation is successful (Step S818: YES), on the other hand, the device B continues the process.

The device A generates the random number Cha_A (Step S819), and transmits the generated random number Cha_A to the device A (Step S820).
After receiving the random number Cha_A, the device B generates the signature data Sig_B by applying the signature generation algorithm S to the received random number Cha_A, using the private key SK_B of the device B (Step S821), and transmits the generated signature data Sig_B to the device A (Step S822).

After receiving the signature data Sig_B, the device A performs signature validation by applying the signature validation algorithm V to the received signature data Sig_B, using the public key PK_B of the device B included in the received public key certificate Cert_B (Step S823). When determining that the signature validation is not successful (Step S824: NO), the device A ends the process. When determining that the signature validation is successful (Step S824: YES), on the other hand, the device A then generates a random number "a" (Step S825), generates Key_A = Gen(a, Y), using the generated random number "a" (Step S826), and transmits the generated Key_A to the device B (Step S827).

After receiving Key_A, the device B generates a random number "b" (Step S828), generates Key_B = Gen(b, Y), using the generated random number "b" (Step S829), and transmits the generated Key_B to the device A (Step S830).
In addition, the device B generates Key_AB = Gen(b, Key_A) = Gen(b, Gen(a, Y)), using the generated random number "b" and the received key_A, and uses this as a session key (Step S831).

After receiving Key_B, the device A generates Key_AB = Gen(a, Key_B) = Gen(a, Gen(b, Y)) from the generated random number "a" and the received Key_B, and uses this as a session key (Step S832).
*1.9 Summary*
As has been described, in the present invention, the security management device 600 stores therein information of which encryption schemes have been broken and update programs used for installing encryption schemes that replace broken encryption schemes.

In the case when the symmetric-key encryption scheme or the public-key encryption scheme used by the home server device 100 has been broken, the security management device 600 transmits the update programs to the broadcast station 70, which transmits the received update programs through broadcast waves.
The home server device 100 obtains the update programs from the broadcast station 70, and updates the currently using encryption scheme based on the obtained programs.

The memory card 300 inquires the security management device 600 about the safety of the symmetric-key encryption scheme and public-key encryption scheme that the memory card 300 is currently using.
In the case where the symmetric-key encryption scheme has been broken, the memory card 300 obtains, from the security management device 600, programs for a symmetric-key encryption scheme which replaces the broken symmetric-key encryption scheme, and installs the obtained programs.

Next, the memory card 300 safely obtains a device key corresponding to the new symmetric-key encryption scheme from the security management device 600, and safely transfers the obtained device key to the home server device 100.
In the case where the public-key encryption scheme is broken, the memory card 300 obtains, from the security management device 600, programs for a public-key encryption scheme which replaces the broken public-key encryption scheme, and installs the obtained programs.

The memory card 300 furthermore safely obtains, from the security management device 600, a new private key of the memory card 300 itself and a public key certificate of a public key paired with this new private key, as well as a new private key of the home server device 100 and a public key certificate of a public key paired with this new private key, and safely transfers, to the home server device 100, the new private key of the home server device 100 and the public key certificate of the public key paired with the new private key.

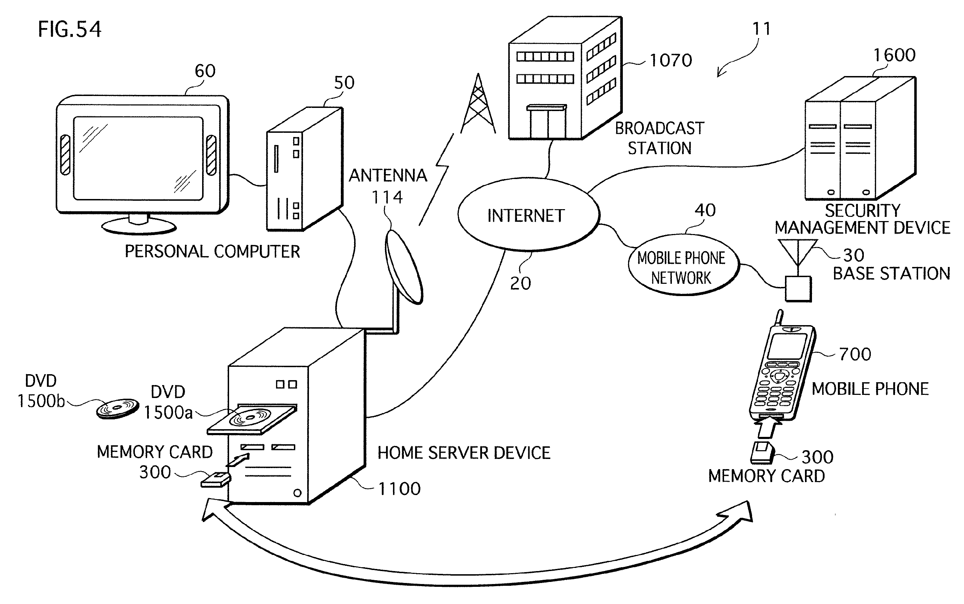

Herewith, the home server device 100 and memory card 300 are capable of ensuring safe communications on a steady state by safely and readily updating an encryption scheme whose security is at risk.
2. EMBODIMENT 2
The following describes an update system 11 of another preferred embodiment according to the present invention.
*2.1 Structure of Update System 11*
As shown in FIG. 54, the update system 11 comprises: a home server device 1100; a mobile phone 700; a security management device 1600; and a broadcast station 1070.

As to the update system 11, descriptions of the same components as in the update system 10 of Embodiment 1 are left out here, and the following describes the update system 11 focusing on the differences from the update system 10.
The home server device 1100, mobile phone 700, security management device 1600 and broadcast station 1070 are connected to the Internet 20.
The home server device 1100 decrypts contents obtained from the DVD 500a by the DES encryption scheme, as in the case of the home server device 100 of Embodiment 1. The home server device 1100 also generates a common key shared with the memory card 300, using the RSA encryption scheme, and establishes a SAC.

Furthermore, the home server device 1100 receives, from the broadcast station 1070, encrypted program contents generated by encrypting various program contents. The home server device 1100 decrypts the received encrypted program contents by an encryption scheme other than the symmetric-key encryption scheme and the public-key encryption scheme―hereinafter, referred to as a "broadcast encryption scheme", for the sake of simplification of description. According to user's operation, the home server device 1100 stores program contents in its internal memory. In addition, the home server device outputs the program contents to an external device having a playback function―e.g. the personal computer 50. The broadcast encryption scheme may be any encryption scheme, and here, the symmetric key encryption scheme RC2 (Rivest' s Cipher 2) is used for this by way of example. Thus, the home server device 1100 distributes the program contents to authorized devices through the broadcast station.

Here, assume the case where any one of the DES encryption scheme, the RSA encryption scheme and the broadcast encryption scheme has been broken, and a way to break the encryption scheme has been found.
The home server device 1100 obtains programs used for installing a new encryption scheme which replaces the broken encryption scheme, a key used for the new encryption scheme and the like, and updates the broken encryption scheme according to the obtained programs.

In this case, the home server device 1100 obtains the above-stated programs and key following one of three acquisition procedures below:
A. acquiring the programs and key via the Internet;
B. acquiring the programs by broadcast waves while acquiring the key via the Internet; and
C. acquiring the programs by broadcast waves while acquiring the key from the memory card.

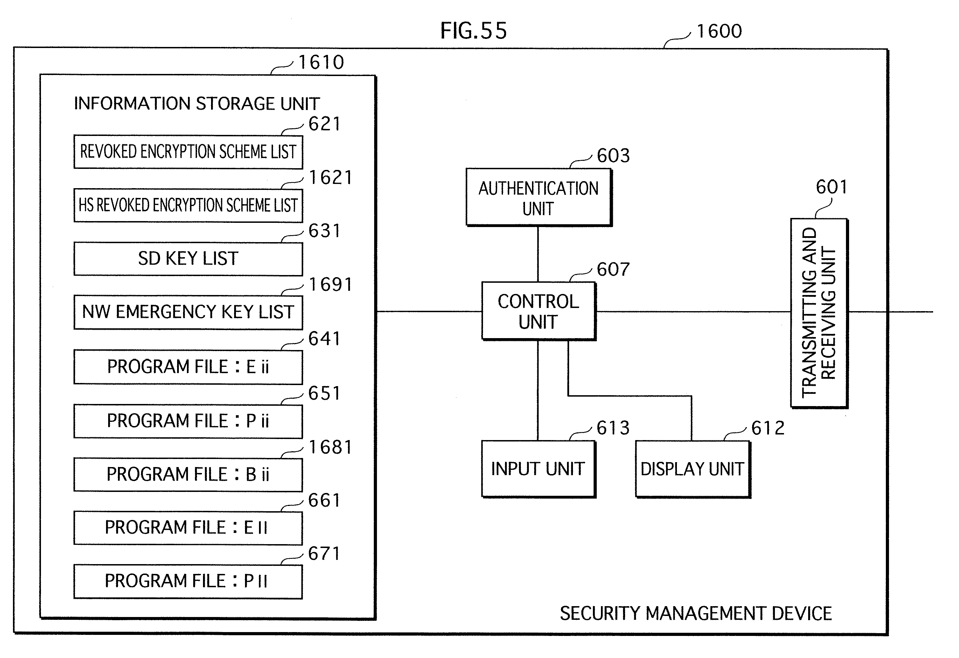

Next is described each device making up the update system 11. Note that, since the DVD 500a, DVD 500b, mobile phone 700 and memory card 300 are the same as those in Embodiment 1, the descriptions are omitted.
*2.2 Security Management Device 1600*
The security management device 1600 comprises, as shown in FIG. 55: a transmitting and receiving unit 601; an authentication unit 603; a control unit 1607; an information storage unit 1610; a display unit 612; and an input unit 613.

The security management device 1600 is composed of a micro processing unit, RAM, ROM, hard disk and so on, which are not specifically shown in the figure. Computer programs are stored in the RAM, ROM and hard disk. The micro processing unit operates according to the programs, and thereby the security management device 1600 fulfills its function.

Each unit making up the security management device 1600 is described below. Note that, since the following units are the same as those in Embodiment 1, their descriptions are left out here: the transmitting and receiving unit 601; authentication unit 603; display unit 612; and input unit 613.
(1) Information Storage Unit 1610
The information storage unit 1610 is structured from a hard disk unit, and stores therein, as shown in FIG. 55, a revoked encryption scheme list 621, a HS revoked encryption scheme list 1621, a SD key list 631, a NW emergency key list 1691, a program file Eᵢᵢ 641, a program file Pᵢᵢ 651, a program file Bᵢᵢ 1681, a program file E_{II} 661 and a program file P_{II} 671, for example.

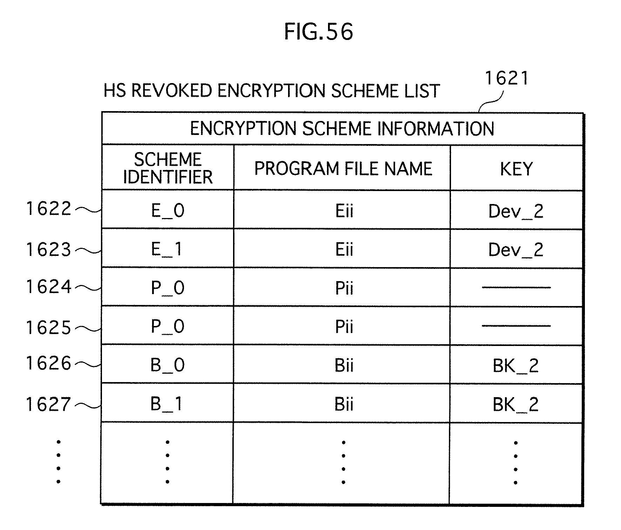

The following are the same as those stored by the information storage unit 610 of the security management device 600 according to Embodiment 1: the revoked encryption scheme list 621; SD key list 631; program file Eᵢᵢ 641; program file Pᵢᵢ 651; program file E_{II} 661; and program file P_{II} 671.
(A) HS Revoked Encryption Scheme List 1621
The HS revoked encryption scheme list 1621 includes, as shown in FIG. 56, a plurality of encryption scheme information sets 1622, 1623, 1624, and 1625.... Each encryption scheme information set corresponds to an encryption scheme which has already been broken. Some encryption scheme information sets include a scheme identifier and a program file name, while others include a scheme identifier, a program file name and a key.

The scheme identifier is an identifier indicating an encryption scheme. The program file name is a file name of a program file including programs showing a procedure to install, on the home server device 1100, a new encryption scheme which replaces an encryption scheme indicated by the scheme identifier. The key is a device key used for decrypting encrypted contents or encrypted program contents stored in the DVD 500b corresponding to the new encryption scheme that replaces the encryption scheme indicated by the scheme identifier.

For example, the encryption scheme information 1622 includes: a scheme identifier "E_0"; a program file name "Eᵢᵢ"; a device key Dev_2. The device key Dev_2 is a 128-bit key used for decrypting an encrypted content key stored in a DVD corresponding to an encrypted scheme which replaces an encryption scheme indicated by the scheme identifier "E_0". An encryption scheme information set 1627 includes: a scheme identifier "B_1"; a program file name "Bᵢᵢ" ; and a broadcast key BK_2. The broadcast key BK_2 is a 256-bit key (hereinafter, referred to as a "broadcast key") used for decrypting encrypted program contents generated by an encryption scheme which replaces an encryption scheme indicated by the scheme identifier 'B_1". Here, the scheme identifier "B_1" indicates RC2, for example.

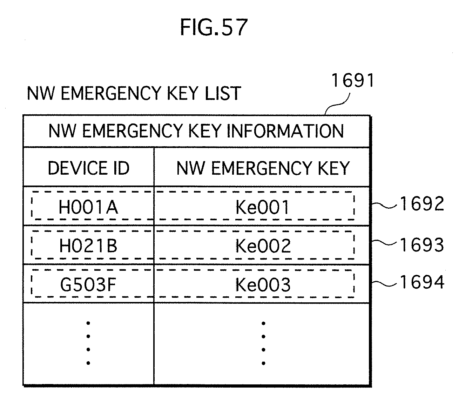

(B) NW Emergency Key List 1691
The NW emergency key list 1691 includes, as shown in FIG. 57, a plurality of NW emergency key information sets 1692, 1693, and 1694.... Each NW emergency key information set has a device ID and a NW emergency key.
Each device ID is identification information corresponding to a different home server device manufactured by an authorized manufacturer. Each NW emergency key is key information used to communicate with a home server device indicated by the device ID in the event of an emergency. Here, the "event of an emergency" means when a public-key encryption scheme used by the home server device is to be updated.

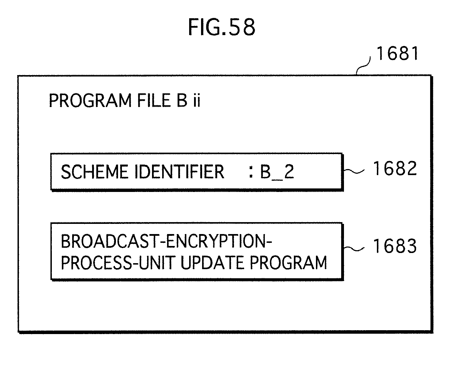

(C) Program File Bᵢᵢ 1681
The program file Bᵢᵢ 1681 is, as shown in FIG. 58, composed of a scheme identifier 1682, "B_2", and a broadcast-encryption-process-unit update program 1683. "B_2" is identification information corresponding to RC5 (Rivest's Cipher 5), for example. The broadcast-encryption-process-unit update program 1683 includes procedures for rewriting an FPGA making up a broadcast encryption processing unit 1118 (to be hereinafter described) of the home server device 1100, and establishing a circuit having a function to decrypt a ciphertext based on an encryption scheme indicated by the scheme identifier "B_2".

(2) Control Unit 1607
In the case when an encryption scheme indicated by the scheme identifier "E_1" is broken, the control unit 1607 transmits the program file Eᵢᵢ 641 to the broadcast station 1070 via the Internet 20, as in the same manner as the control unit 607 of the security management device 600 according to Embodiment 1. In the case when an encryption scheme indicated by the scheme identifier "P_1" is broken, the control unit 1607 transmits the program file Pᵢᵢ 671 to the broadcast station 1070 via the Internet 20.

The control unit 1607 transmits the CRL to the broadcast station 1070 via the Internet 20.
The control unit 1607 receives a request of examining the safety of the encryption scheme from the memory card 300 via the Internet 20 and transmitting and receiving unit 601, and transmits, to the memory card 300 according to need, the program file E_{II} 661, program file P_{II} 671, device key Dev2, encrypted private key Enc1 (Kmi, SK_X2), encrypted public key certificate Enc1(Kmi, Cert_X2), encrypted private key Enc1(Kmi, SK_L2) and encrypted public key certificate Enc1(Kmi, Cert_L2). Since specific procedure of the above process is the same as the process procedure of the control unit 607 of the security management device 600 according to Embodiment 1, the description is omitted here, and differences of the control unit 1607 from the control unit 607 will be described below.

In the case when an encryption scheme indicated by the scheme identifier "B_1" is broken, the control unit 1607 receives a direction from the operator via the input unit 613, and transmits the program file Bᵢᵢ 1681 to the broadcast station 1070 via the Internet 20 according to the received direction.
The control unit 1607 also receives, from the home server device 1100 via the Internet 20 and transmitting and receiving unit 601, scheme identifiers indicating encryption schemes that the home server device 1100 is currently using, and receives a request of examining the safety of these encryption schemes indicated by the received scheme identifiers.

When receiving, from the home server device 1100, the scheme identifiers "E_1", "P_1" and "B_1" indicating encryption schemes that the home server device 1100 is currently using, as well as the request of examining the security of encryption schemes indicated by the scheme identifiers "E_1", "P_1" and "B_1", the control unit 1607 searches, in the HS revoked encryption scheme list 1621, encryption scheme information sets including the received scheme identifiers "E_1", "P_1" and "B_1". As a result of the search, if all the scheme identifiers "E_1", "P_1" and "B_1" are detected, the following process (i) is carried out. If none of the three scheme identifiers is detected, the following process (ii) is carried out. If only the scheme identifier "E_1" is detected, the following process (iii) is carried out. If only the scheme identifier "P_1" is detected, the following process (iv) is carried out. If only the scheme identifier "B_1" is detected, the following process (v) is carried out.

In addition, the control unit 1607 receives a scheme identifier and a key request from the home server device 1100. The key request is a request of transmitting a key and a public key certificate used for an encryption scheme indicated by the scheme identifier. When receiving a scheme identifier and key request, the control unit 1607 carried out the following process (vi).
Next is described the processes (i) to (vi).
(i) In the Case Scheme Identifiers "E_1", "P_1" and "B_1" are Detected
The control unit 1607 generates emergency screen data, and transmits the generated emergency screen data to the home server device 1100 via the transmitting and receiving unit 601. An example of a screen generated from the emergency screen data is shown in FIG. 14, and the screen informs the user of an emergency.

(ii) In the Case No Scheme Identifier is Detected
The control unit 1607 generates a safety notification signal showing that all encryption schemes indicated by the scheme identifiers "E_1", "P_1" and "B_1", respectively, are safe, and transmits the generated safety notification signal to the home server device 1100 via the transmitting and receiving unit 601.

(iii) In the Case Scheme Identifier "E_1" is Detected
The control unit 1607 performs the update process of an encryption scheme indicated by the scheme identifier "E_1" in the following procedure: (iii-a) transmission of a program file; and (iii-b) transmission of a device key.

The descriptions of processes (iii-a) and (iii-b) are given below.
(iii-a) Transmission of Program File
The control unit 1607 generates an update direction which directs an update of an encryption scheme indicated by the scheme identifier "E_1", and transmits the generated update direction to the home server device 1100 via the transmitting and receiving unit 601.

Next, the control unit 1607 receives the scheme identifier "E_1" and an update start request from the home server device 1100.
The control unit 1607 selects, from the HS revoked encryption scheme list 1621 in the information storage unit 1610, the encryption scheme information set 1623 including the same identifier as the received scheme identifier "E_1". The control unit 1607 then reads the program file Eᵢᵢ 641 based on the program file name included in the selected encryption scheme information set 1623, and transmits the read program file Eᵢᵢ 641 to the home server device 1100 via the transmitting and receiving unit 601.

(iii-b) Transmission of Device Key
Next, the control unit 1607 directs the authentication unit 603 to establish a SAC. After the authentication unit 603 has established a SAC, the control unit 1607 receives a session key Ke from the authentication unit 603. Then, the control unit 1607 extracts 128 bits from the beginning of the received session key Ke, and uses this as a symmetric-key K_E2E.
Then, the control unit 1607 selects, from the HS revoked encryption scheme list 1621, the encryption scheme information set 1623 including the same identifier as the scheme identifier "E_1" received from the home server device 1100, and extracts the device key Dev_2 from the selected encryption scheme information set 1623. The control unit 1607 encrypts the extracted device key Dev_2 by an encryption scheme indicated by the scheme identifier "E_2", using the symmetric-key K_E2E, and thereby generates an encrypted device key Enc2 (K_E2E, Dev_2). Subsequently, the control unit 1607 transmits, to the home server device 1100, the generated encrypted device key Enc2(K_E2E, Dev_2) and the scheme identifier "E_2" indicating an encryption scheme used to generate the encrypted device key.

(iv) In the Case Scheme Identifier "P_1" is Detected
The control unit 1607 performs the update process of an encryption scheme indicated by the scheme identifier "P_1" of the home server device 1100 in the following procedure: (iv-a) transmission of a program file; and (iv-b) generation of a key and transmission of a public key certificate.

The descriptions of processes (iv-a) and (iv-b) are given below.
(iv-a) Transmission of Program File
The control unit 1607 generates an update direction which directs an update of an encryption scheme indicated by the scheme identifier "P_1", and transmits the generated update direction to the home server device 1100 via the transmitting and receiving unit 601.

Next, when receiving the scheme identifier "P_1" and an updating start request from the home server device 1100, the control unit 1607 selects, from the HS revoked encryption scheme list 1621 in the information storage unit 1610, the encryption scheme information set 1625 including the same identifier as the scheme identifier "P_1". The control unit 1607 then reads the program file Pᵢᵢ 651 based on the program file name included in the selected encryption scheme information set 1625, and transmits the read program file Pᵢᵢ 651 to the home server device 1100 via the transmitting and receiving unit 601.

(iv-b) Generation of Key and Transmission of Public Key Certificate
Next, the control unit 1607 generates a key pair of the private key SK_L2 and the public key PK_L2, and obtains, from the certificate authority, the public key certificate Cert_L2 of the generated public key PK_L2. The certificate authority is the same as one described in Embodiment 1, and therefore the description will not be repeated here.
Next, the control unit 1607 requests a device ID from the home server device 1100 via the transmitting and receiving unit 601. Subsequently, the control unit 1607 receives a device ID "H001A" and an update encryption identifier from the home server device 1100. Here, the received update encryption identifier is either one of the scheme identifiers "E_1" and "B_1".

When receiving the device ID "H001A" and scheme identifier, the control unit 1607 selects the NW emergency key information set 1692 from the NW emergency key list 1691 based on the received device ID, "H001A", and reads a NW emergency key Ke001 included in the selected NW emergency key information set 1692.
Then, the control unit 1607 encrypts the private key SK_L2 and public key certificate Cert_L2 by an encryption scheme indicated by the received identifier, using the read NW key Ke001, and thereby generates an encrypted private key and encrypted public key certificate.

Next, the control unit 1607 transmits the generated encrypted private key and encrypted public key certificate as well as the received update encryption identifier to the home server device 1100 via the transmitting and receiving unit 601.
(v) When Scheme Identifier "B_1" is Detected
The control unit 1607 performs the update process of an encryption scheme indicated by the scheme identifier "B_1" in the following procedure: (v-a) transmission of a program file; and (v-b) transmission of a broadcast key.

The descriptions of the processes (v-a) and (v-b) are given below.
(v-a) Transmission of Program File
The control unit 1607 generates an update direction which directs an update of the encryption scheme indicated by the scheme identifier "B_1", and transmits the generated update direction to the home server device 1100 via the transmitting and receiving unit 601.

Next, the control unit 1607 receives the scheme identifier "B_1" and an updating start request from the home server device 1100.
The control unit 1607 selects, from the HS revoked encryption scheme list 1621 in the information storage unit 1610, the encryption scheme information set 1627 including the same identifier as the received scheme identifier "B_1". Then, the control unit 1607 reads the program file Bᵢᵢ 1681 based on the program file name included in the selected encryption scheme information set 1627, and transmits the read program file Bᵢᵢ 1681 to the home server device 1100 via the transmitting and receiving unit 601.

(v-b) Transmission of Broadcast Key
Next, the control unit 1607 directs the authentication unit 603 to establish a SAC. When the establishment of a SAC is completed, the control unit 1607 receives a session key Kf from the authentication unit 603. Then, the control unit 1607 extracts 256 bits from the beginning of the received session key Kf, and uses this as a common key K_B2F.
Then, the control unit 1607 selects, from the HS revoked encryption scheme list 1621, the encryption scheme information set 1627 including the same identifier as the scheme identifier "B_1" received from the home server device 1100. The control unit 1607 extracts the broadcast key BK_2 from the selected encryption scheme information set 1627, and encrypts the extracted broadcast key BK_2 by an encryption scheme indicated by the scheme identifier "B_2", using the common key K_B2F, to thereby generate an encrypted broadcast key EncB2(K_B2F, BK_2). Subsequently, the control unit 1607 transmits the generated encrypted broadcast key EncB2(K_B2F, BK_2) and the scheme identifier "B_2" indicating the encryption scheme used to generate the encrypted broadcast key to the home server device 1100 via the transmitting and receiving unit 601.

In the present specification, EncB2(A, C) denotes a ciphertext generated by encrypting a plain text C by an encryption scheme indicated by the scheme identifier "B_2", using a key A.
(vi) When Receiving Scheme Identifier and Key Request
The control unit 1607 receives a key request and one of the scheme identifiers "E_2", "P_2" and "B_2".

(vi-1) When receiving the scheme identifier "E_2" and a key request, the control unit 1607 transmits an encrypted device key generated by encrypting the device key Dev_2 to the home server device 1100. Since the procedure is the same as the transmission of the device key described in the above process (iii-b), the explanation is omitted here.
(vi-2) When receiving the scheme identifier "P_2" and a key request, the control unit 1607 transmits, to the home server device 1100, an encrypted private key and an encrypted public key certificate generated by encrypting the private key SK_L2 and public key certificate Cert_L2, respectively. Since the procedure is the same as the generation of the private key and transmission of the public key certificate described in the above process (iv-b), the explanation is omitted here.

(vi-3) When receiving the scheme identifier "B_2" and a key request, the control unit 1607 transmits, to the home server device 1100, an encrypted broadcast key generated by encrypting the broadcast key BK_2. Since the procedure is the same as the transmission of the broadcast key described in the process (v-b), the explanation is omitted here.
*2.3 Broadcast Station 1070*
The broadcast station 1070 receives a CRL, the program file Eᵢᵢ, the program file Pᵢᵢ or the program file Bᵢᵢ from the security management device 1600 via the Internet 20.

The broadcast station 1070 includes an amplifier, a modulator, an antenna and so on, and converts the received CRL, program file Eᵢᵢ, program file Pᵢᵢ or program file Bᵢᵢ into broadcast waves and transmits it.
In addition, the broadcast station 1070 broadcasts encrypted program contents generated by encrypting program contents, including video and audio, by an encryption scheme indicated by the scheme identifier "B_1", using a broadcast key BK_1.

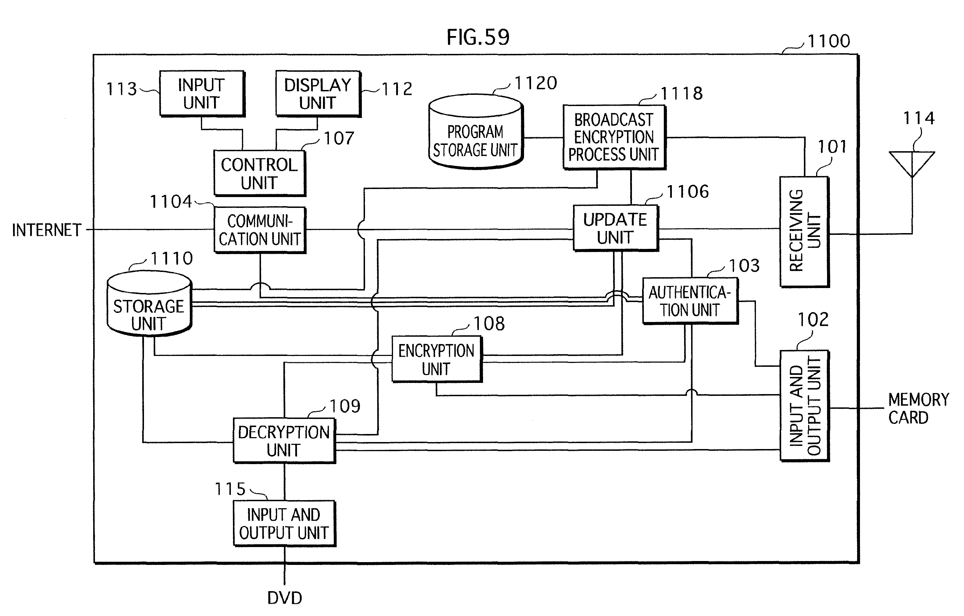

After receiving the program file Bᵢᵢ, the broadcast station 1070 broadcasts encrypted program contents generated by encrypting program contents by an encryption scheme indicated by the scheme identifier "B_2", using the broadcast key BK_2.
*2.4 Home Server Device 1100*
The home server device 1100 comprises, as shown in FIG. 59: a receiving unit 101; an input and output unit 102; an authentication unit 103; an update unit 1106; a control unit 1107; an encryption unit 108; a decryption unit 109; a communication unit 1104; a broadcast encryption process unit 1118; a storage unit 1110; a program storage unit 1120; a display unit 112; an input unit 113; an antenna 114; and an input and output unit 115.

The home server device 1100 is composed of a micro processing unit, RAM, ROM, hard disk and so on, which are not specifically shown in the figure. Computer programs are stored in the RAM, ROM, hard disk and storage unit 1100. The micro processing unit operates according to the computer programs, and thereby the home server device 1100 fulfills its function.

In addition, the DVD 500a or DVD 500b and the memory card 300 are placed in the home server device 1100.
Next is described each component making up the home server device 1100; however, since the following components have the same structure and operation as those corresponding unit of the home server device 1100 according to Embodiment 1, their descriptions are omitted: the receiving unit 101; input and output unit 102; authentication unit 103; encryption unit 108; decryption unit 109; display unit 112; input unit 113 ; antenna 114; and input and output unit 115.

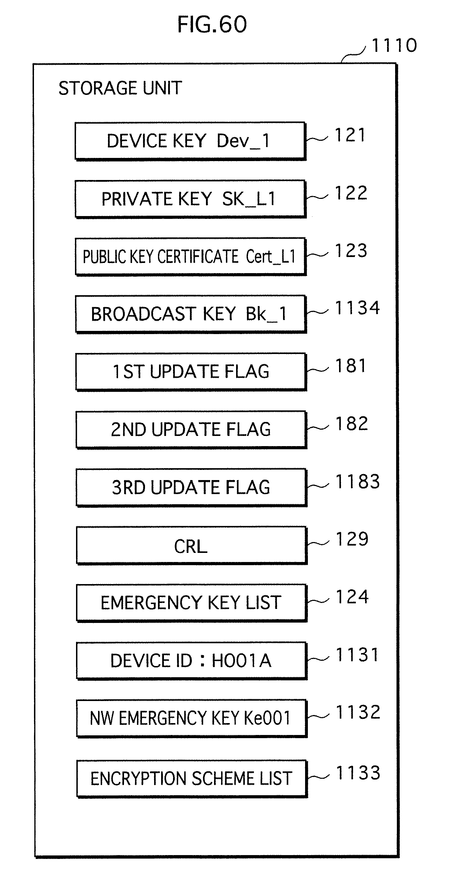

(1) Storage Unit 1110
The storage unit 1110 is structured from a hard disk unit, and stores therein, for example, a device key Dev_1 121, a private key SK_L1 122, a public key certificate Cert_L1 123, a broadcast key BK_1 1134, a 1st update flag 181, a 2nd update flag 182, a 3rd update flag 1183, a CRL 129, an emergency key list 124, a device ID 1131, "H001A", a NW emergency key Ke001 1132, and an encryption scheme list 1133, as shown in FIG. 60.

The device key Dev_1 121, private key SK_L1 122, public key certificate Cert_L1 123, 1st update flag 181, 2nd update flag 182, CRL 129 and emergency key list124 are the same as those stored in the storage unit 110 of Embodiment 1, and therefore, their explanations are omitted.

The broadcast key BK_1 1134 is encrypted by an encryption scheme indicated by the scheme identifier "B_1", and a 64-bit length key used to decrypt encrypted program contents which are broadcast from the broadcast station.
The 3rd update flag 1183 is a flag indicating whether an update process of the broadcast encryption scheme has been completed, and is a value of either "0" or "1". The value "0" indicates that the update of the broadcast encryption process unit 1118 has been completed, but a new broadcast key has not been obtained. The value "1" indicates that the update of the broadcast encryption process unit 1118 as well as the acquisition of a new broadcast key have been completed.

The device ID 1131, "H001A", is identification information specific to the home server device 1100.
The NW emergency key Ke001 1132 is key information specific to the home server device 1100, and used only to communicate with the security management device 1600 in the event of an emergency. Here, the "event of an emergency" means when a symmetric-key encryption scheme that the home server device 1100 is currently using is broken.

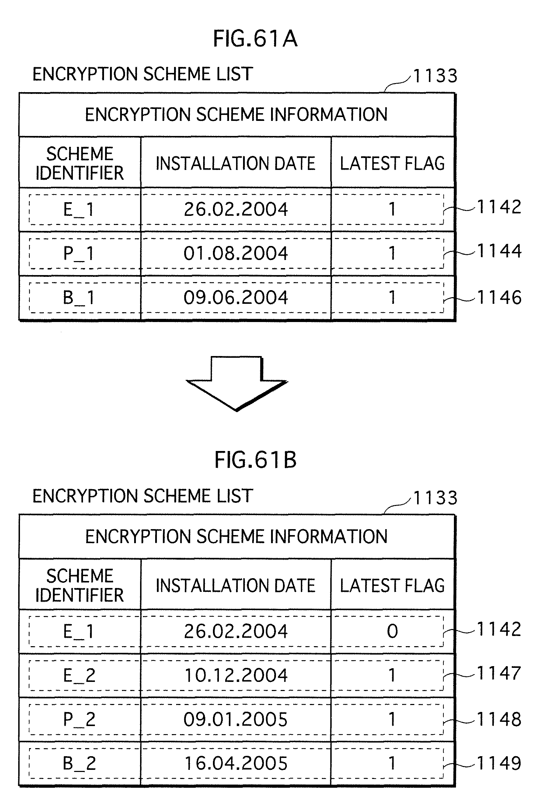

The encryption scheme list 1133 is composed of, as shown in FIG. 61A, a plurality of encryption scheme sets 1142, 1144 and 1146, and each encryption scheme information set includes a scheme identifier, an installation date and the latest flag.
Each of the scheme identifiers indicates a usable encryption scheme in the home server device 1100. Each of the installation dates indicates a date on which the home server device 1100 installed an encryption scheme indicated by a corresponding scheme identifier. Each of the latest flags indicates whether to request the security management device 1600 to examine the safety of an encryption scheme indicated by a corresponding scheme identifier. The value "0" indicates that an encryption scheme indicated by a corresponding scheme identifier will not be a target of the request, while the value "1" indicating that an encryption scheme indicated by a corresponding scheme identifier will be a target of the request.

The encryption scheme information set 1142 corresponds to a symmetric-key encryption scheme applicable in the home server device 1100, while the encryption scheme information set 1144 corresponds to a public-key encryption scheme used in the home server device 1100. In addition, the encryption scheme information set 1146 corresponds to a broadcast encryption scheme used in the home server device 1100.
The encryption scheme list 1133 is rewritten according to an update of an encryption scheme by the update unit 1106 (to be hereinafter described in detail). FIG. 61B shows an example of the encryption scheme list 1133 after the symmetric-key encryption scheme, public-key encryption scheme and broadcast encryption scheme are updated. The encryption scheme list 1133, after the update, is composed of a plurality of encryption scheme information sets 1142, 1147, 1148 and 1149.

The encryption scheme information sets 1142 and 1147 correspond to usable symmetric-key encryption schemes in the home server device 1100, while the encryption scheme information set 1148 corresponds to a public-key encryption scheme used in the home server device 1100. In addition, the encryption scheme information set 1149 corresponds to a broadcast encryption scheme used in the home server device 1100.
(2) Program Storage Unit 1120
The program storage unit 1120 is structured from a hard disk unit, for example, and stores therein a plurality of program contents.

(3) Communication Unit 1104
The communication unit 1104 transmits and receives a variety of information between an external device connected to the Internet 20 and the update unit 1106 or the authentication unit 103.
(4) Control Unit 1107
The control unit 1107 performs an update of the CRL, generation of an emergency key, and playback or copy of contents, as in the case of the control unit 107 of the home server device 100 according to Embodiment 1. These processes have been described in relation to the control unit 107, and therefore, their descriptions are omitted here.

In addition, according to user's operation, the control unit 1107 outputs a broadcast key stored in the storage unit 1110 to the broadcast encryption process unit 1118, directs the broadcast encryption process unit 1118 to decrypt encrypted program contents received via the antenna 114 and receiving unit 101, and writes program contents generated by the broadcast encryption process unit 1118 to the program storage unit 1120. In addition, the control unit 1107 outputs the program contents stored in the program storage unit 1120 to the personal computer 50.

(5) Update Unit 1106
The update unit 1106 has an FPGA writing device.
In addition, the update unit 1106 prestores therein a check time and date and a broadcast-key inquiry interval. The check time and date is when the update unit 1106 inquires the security management device 1600 about whether an encryption scheme that the home server device 1100 is currently using needs to be updated. The update unit 1106, here, prestores a check time and date of "11:30 Sunday". The broadcast-key inquiry interval is a time interval to, in the case when a new broadcast key cannot be obtained from the security management device 1600 for the update of the broadcast encryption scheme, make another attempt for the acquisition. Here, the update unit 106 prestores a broadcast-key inquiry interval of "24 hours".

The update unit 1106 monitors the current time and date. When the current time and date matches the prestored check time and date, the update unit 1106 inquires the security management device 1600 about the necessity of updating the encryption scheme, and (A) acquires programs and a key via the Internet to thereby update the encryption scheme.
In addition, the update unit 1106 receives one of the program files Eᵢᵢ, Pᵢᵢ, and Bᵢᵢ through broadcast waves from the broadcast station 1070 via the receiving unit 101. When receiving such a program file, the update unit 1106 (B) acquires programs by broadcast waves while acquiring a key via the Internet to thereby update the encryption scheme. In this case, if the Internet communication is not available for the reason that the home server device 1100 is not connected to the Internet 20, the network has a problem, or the like, the update unit 1106 (C) acquires programs by broadcast waves while acquiring a key from a memory card to thereby update the encryption scheme.

Note that the symmetric-key encryption scheme and public-key encryption scheme are updated according to one of the above procedures (A), (B) and (C). The broadcast encryption scheme is updated according to one of the procedures (A) and (B).
The following explains the above-mentioned procedures (A) to (C) in detail.
(A) In the Case of Acquiring Programs and Key via the Internet
If the current time and date match the prestored check time and date, the update unit 1106 searches, from among the encryption scheme information sets making up the encryption scheme list 1133 stored in the storage unit 1110, ones each having "1" for the latest flag. Here, the update unit 1106 detects the encryption scheme information sets 1142, 1144 and 1146, and reads the scheme identifiers "E_1", "P_1" and "B_1" therefrom.

Then, the update unit 1106 transmits the read scheme identifiers "E_1", "P_1" and "B_1" to the security management device 1600 via the communication unit 1104 and the Internet 20, and requests the security management device 1600 to examine the safety of the encryption schemes.
Subsequently, the update unit 1106 receives, from the security management device 1600 via the Internet 20 and the communication unit 1104, one of the following: emergency screen data; a safety notification signal; a direction to update an encryption scheme indicated by the scheme identifier "E_1"; a direction to update an encryption scheme indicated by the scheme identifier "P_1"; and a direction to update an encryption scheme indicated by the scheme identifier "B_1". The update unit 1106 performs processes described below for individual cases.

### (A-i) When Receiving Emergency Screen Data

Receiving emergency screen data from the security management device 1600, the update unit 1106 outputs the received emergency screen data to the mobile phone 700 and requests the mobile phone 700 to display an emergency screen. An example of a screen displayed here is the same as the emergency screen shown in FIG. 14.
(A-ii) When Receiving Safety Notification Signal
Receiving a safety notification signal from the security management device 1600, the update unit 1106 determines that the encryption schemes stored in the memory card 300 itself are safe, and ends the update processes of the encryption schemes.

(A-iii) Update of Symmetric-Key Encryption Scheme via the Internet
When receiving a direction to update an encryption scheme indicated by the scheme identifier "E_1", the update unit 1106 reads the scheme identifier "E_1" from the encryption scheme list of the storage unit 1110, transmits the read scheme identifier "E_1" to the security management device 1600 via the communication unit 1104 and the Internet 20, and requests the security management device 1600 to start updating the encryption scheme.

Next, the update unit 1106 receives the program file Eᵢᵢ from the security management device 1600 via the Internet 20.
When receiving the program file Eᵢᵢ, the update unit 1106 performs the update process of the symmetric-key encryption scheme in the following procedure: (A-iii-a) updates of the encryption unit 108 and decryption unit 109; and (A-iii-b) acquisition of a device key. The descriptions of processes (A-iii-a) and (A-iii-b) are given below.

(A-iii-a) Updates of Encryption Unit 108 and Decryption Unit 109
The update unit 1106 extracts the scheme identifier "E_2" from the received program file Eᵢᵢ, and obtains the current time and date. The update unit 1106 generates the encryption scheme information set 1147 including the extracted scheme identifier "E_2", an installation date which is the obtained current time and date, and the latest flag "1". Then, the update unit 1106 adds the generated encryption scheme information set 1147 to the encryption scheme list 1133. Subsequently, the update unit 1106 rewrites the latest flag of the encryption scheme information set 1142 including the scheme identifier "E_1" with "0".

Then, the update unit 1106 extracts the encryption-unit update program from the received program file Eᵢᵢ, rewrites the FPGA making up the encryption unit 108 according to the procedure shown by the extracted encryption-unit update program, and establishes a circuit having a function to perform encryption in compliance with an encryption scheme indicated by the scheme identifier "E_2". To be more specific, the update unit 106 generates arbitrary logical function circuits on a plurality of CLBs (Configuration Logic Blocks) making up the FPGA, and establishes a circuit by connecting the generated logical function circuits using connection resources present between each CLB. In addition, the update unit 1106 writes the received encryption-unit update program to config ROM attached to the FPGA element.

Next, the update unit 1106 extracts a decryption-unit update program from the received program file Eᵢᵢ, rewrites the FPGA making up the decryption unit 109 according to the procedure shown by the extracted decryption-unit update program, and establishes a circuit having a function to perform decryption in compliance with encryption schemes indicated by the scheme identifiers "E_1" and "E_2".
Then, the update unit 106 sets the 1st update flag 181 of the storage unit 1110 to "0".

(A-iii-b) Acquisition of Device Key
Receiving, from the security management device 1600 via the communication unit 1104, a public key certificate of the security management device 1600, the update unit 1106 outputs the received public key certificate to the authentication unit 103 and directs the authentication unit 103 to establish a SAC. After a SAC is established by the authentication unit 103, the update unit 1106 receives a session key Ke' from the authentication unit 103.

Subsequently, the update unit 1106 receives the encrypted device key Enc2(K_E2E, Dev_2) and scheme identifier "E_2" from the security management device 1600 via the communication unit 1104. The update unit 1106 outputs the received encrypted device key Enc2(K_E2E, Dev_2) and scheme identifier "E_2" as well as the session key Kc' received from the authentication unit 103 to the decryption unit 109, and directs the decryption unit 109 to decrypt the encrypted device key Enc2(K_E2C, Dev_2).

Next, the update unit 1106 receives the device key Dev_2 from the decryption unit 109, and writes the received device key Dev_2 to the storage unit 1110. After writing the device key Dev_2, the update unit 1106 sets the 1st update flag 181 to "1".
(A-iv) Update of Public-Key Encryption Scheme via the Internet
In the case of receiving a direction to update an encryption scheme indicated by the scheme identifier "P_1", the update unit 1106 reads the scheme identifier "P_1" from the encryption scheme list of the storage unit 1110, transmits the read scheme identifier "P_1" to the security management device 1600 via the communication unit 1104 and the Internet 20, and requests the security management device 1600 to start updating the encryption scheme.

Next, the update unit 1106 receives the program file Pᵢᵢ from the security management device 1600 via the Internet 20 and the communication unit 1104.
When receiving the program file Pᵢᵢ, the update unit 1106 performs the update process of the public-key encryption scheme in the following procedure: (A-iv-a) an update of the authentication unit 103; and (A-iv-b) acquisition of a private key and a public key certificate. The descriptions of these processes (A-iv-a) and (A-iv-b) are given below.

(A-iv-a) Update of Authentication Unit 103
The update unit 1106 extracts a scheme identifier "P_2" from the received program file Pᵢᵢ, and obtains the current time and date. The update unit 1106 generates the encryption scheme information set 1148 including the extracted scheme identifier "P_2", an installation date which is the obtained current time and date, and the latest flag "1". Then, the update unit 1106 adds the generated encryption scheme information set 1148 to the encryption scheme list. Subsequently, the update unit 1106 rewrites the latest flag of the encryption scheme information set 1144 including the scheme identifier "P_1" with "0".

Then, the update unit 1106 extracts the authentication-unit update program from the received program file Pᵢᵢ, rewrites the FPGA making up the authentication unit 103 according to the procedure shown by the extracted authentication-unit update program, and establishes a circuit having a function to establish a SAC using the scheme identifier "P_2".
Then, the update unit 1106 sets the 2nd update flag 182 of the storage unit 1110 to "0".

(A-iv-b) Acquisition of Private Key and Public Key Certificate
Next, the update unit 1106 receives a request of the device ID from the security management device 1600 via the Internet 20 and communication unit 1104. Receiving the request of the device ID, the update unit 1106 reads the device ID 1131, "H001A", from the storage unit 1110.
Among from the encryption scheme information sets, each having "1" for the latest flag, in the encryption scheme list 1133, the update unit 1106 selects ones other than an encryption scheme information set corresponding to an encryption scheme currently being a target for the update (namely, here, an encryption scheme information set including the scheme identifier "P_1"). That is, the update unit 1106 here selects the encryption scheme information sets 1142 and 1146, and reads the installation dates "26.02.2004" and "09.06.2004" from them. The update unit 1106 compares the read installation dates, and makes a scheme identifier corresponding a later installation date an update encryption identifier. Here, either one of the scheme identifiers "E_1" and "B_1" becomes the update encryption identifier.

The update unit 1106 transmits the read device ID 1131, "H001A", and the update encryption identifier to the security management device 1600 via the communication unit 1104.
The update unit 1106 then receives an encrypted private key, an encrypted public key certificate and the updated encryption identifier from the security management device 1600 via the Internet 20 and communication unit 1104.

Receiving the encrypted private key, encrypted public key certificate and update encryption identifier, the update unit 1106 reads the NW emergency key Ke001 from the storage unit 1110. If the received update encryption identifier is "E_1", the update unit 1106 outputs, to the decryption unit 109, the received update encryption identifier "E_1", encrypted private key and encrypted public key certificate, as well as the read NW emergency key Ke001. Then, the update unit 1106 directs the decryption unit 109 to decrypt the encrypted private key and encrypted public key certificate.

If the received update encryption identifier is "B_1", the update unit 1106 outputs, to the broadcast encryption process unit 1118, the encrypted private key and encrypted public key certificate, as well as the read NW emergency key Ke001, and directs the broadcast encryption process 1118 to decrypt the encrypted private key and encrypted public key certificate.
Then the update unit 1106 receives the private key SK_L2 and public key certificate Cert_L2 from the decryption unit 109 or the broadcast encryption process 1118, and writes the received private key SK_L2 and public key certificate Cert_L2 to the storage unit 1110. Subsequently, the update unit 1106 deletes the private key SK_L1 122 and public key certificate Cert_L1 123 from the storage unit 1110.

Next, the update unit 1106 deletes the encryption scheme information set 1142 including the scheme identifier "P_1" in the encryption scheme list 1133, and sets the 2nd update flag 182 stored by the storage unit 1110 to "1".
(A-v) Update of Broadcast Encryption Scheme via the Internet
When receiving a direction to update an encryption scheme indicated by the scheme identifier "B_1", the update unit 1106 reads the scheme identifier "B_1" from the encryption scheme list of the storage unit 1110, transmits the read scheme identifier "B_1" to the security management device 1600 via the communication unit 1104 and the Internet 20, and requests the security management device 1600 to start the update of the encryption scheme.

The update unit 1106 receives the program file Bᵢᵢ from the security management device 1600 via the Internet 20 and communication unit 1104.
When receiving the program file Bᵢᵢ, the update unit 1106 performs an update process of the broadcast encryption scheme in the following procedure: (A-v-a) an update of the broadcast encryption process unit 1118; and (A-v-b) acquisition of a broadcast key. The descriptions of these processes (A-v-a) and (A-v-b) are given below.

(A-v-a) Update of Broadcast Encryption Process Unit 1118
The update unit 1106 extracts the scheme identifier "B_2" from the received program file Bᵢᵢ, and obtains the current time and date. The update unit 1106 generates the encryption scheme information set 1149 including the extracted scheme identifier "B_2", an installation date which is the obtained current time and date, and the latest flag "1". Then, the update unit 1106 adds the generated encryption scheme information set 1149 to the encryption scheme list. Subsequently, the update unit 1106 rewrites the latest flag of the encryption scheme information set 1146 including the scheme identifier "B_1" with "0".

Then, the update unit 1106 extracts the broadcast-encryption-process-unit update program from the received program file Bᵢᵢ, rewrites the FPGA making up the broadcast encryption process unit 1118 according to the procedure shown by the extracted broadcast-encryption-process-unit update program, and establishes a circuit having a function to perform decryption in compliance with an encryption scheme indicated by the scheme identifier "B_2".
Then, the update unit 1106 sets the 1st update flag 181 of the storage unit 1110 to "0".

(A-v-b) Acquisition of Broadcast Key
Receiving, from the security management device 1600 via the communication unit 1104, the public key certificate of the security management device 1600, the update unit 1106 outputs the received public key certificate to the authentication unit 103, and directs the authentication unit 103 to establish a SAC. After a SAC is established by the authentication unit 103, the update unit 1106 receives a session key Kf' from the authentication unit 103.

Subsequently, the update unit 1106 receives the encrypted device key EncB2(K_B2F, BK_2) and scheme identifier "B_2" from the security management device 1600 via the communication unit 1104. The update unit 1106 outputs the received encrypted device key EncB2(K_B2F, BK_2) and scheme identifier "B_2" as well as the session key Kf' received from the authentication unit 103 to the broadcast encryption process unit 1118, and directs the broadcast encryption process unit 1118 to decrypt the encrypted device key EncB2(K_B2F, BK_2).

Next, the update unit 1106 receives the broadcast key BK_2 from the broadcast encryption process unit 1118, and writes the received broadcast key BK_2 to the storage unit 1110. After writing the broadcast key BK_2, the update unit 1106 deletes the encryption scheme information set 1142 including the scheme identifier "B_1" of the encryption scheme list 1133 and sets the 1st update flag 181 to "1".
(B) In the Case of Acquiring Programs by Broadcast Waves While Acquiring Key via the Internet
The update unit 1106 receives one of the program files Eᵢᵢ, Pᵢᵢ, and Bᵢᵢ from the broadcast station 1070 via the antenna 114 and receiving unit 101. The update unit 1106 performs one of the following processes (B-i) to (B-iii) when receiving the individual program files.

(B-i) Update of Symmetric-Key Encryption Scheme by Broadcast Waves
When receiving the program file Eᵢᵢ, the update unit 1106 extracts the scheme identifier "E_2" from the received program file Eᵢᵢ. The update unit 1106 searches, from the encryption scheme list 1133 stored in the storage unit 1110, a scheme identifier that matches the extracted scheme identifier "E_2". In the case when the scheme identifier "E_2" is present in the encryption scheme list 1133, the update unit 1106 ends the update process of the symmetric-key encryption scheme since the updates of the encryption unit 108 and decryption unit 109 have already been completed.

If the scheme identifier "E_2" is not present in the encryption scheme list 1133, the update unit 1106 updates the encryption unit 108 and decryption unit 109 based on the received program file Eᵢᵢ. The specific procedure is the same as the procedure described in (A-iii-a) Updates of Encryption Unit 108 and Decryption Unit 109 of (A-iii) Update of Symmetric-Key Encryption Scheme via the Internet above, and therefore, the explanation is omitted here.

When the updates of the encryption unit 108 and decryption unit 109 are finished, the update unit 1106 examines, via the communication unit 1104, whether the Internet communication is available. If the communication is not available, the update unit 1106 moves on to the process (C) below.
If the communication is available, the update unit 1106 transmits, to the security management device 1600 via the communication unit 1104 and the Internet 20, the extracted scheme identifier "E_2" and a key request which requests to transmit a device key used for an encryption scheme indicated by the scheme identifier "E_2".

Next, the update unit 1106 established a SAC with the security management device 1600, and safely obtains the device key Dev_2 corresponding to the scheme identifier "E_2". The specific procedure for obtaining the device key Dev_2 is the same as the procedure described in (A-iii-b) Acquisition of Device Key of (A-iii) Update of Symmetric-Key Encryption Scheme via the Internet above, and therefore, the explanation is omitted here.
(B-ii) Update of Public-Key Encryption Scheme by Broadcast Waves
When receiving the program file Pᵢᵢ, the update unit 1106 extracts the scheme identifier "P_2" from the received program file Pᵢᵢ. The update unit 1106 searches, from the encryption scheme list 1133 stored in the storage unit 1110, a scheme identifier that matches the extracted scheme identifier "P_2". In the case when the scheme identifier "P_2" is present in the encryption scheme list 1133, the update unit 1106 ends the update process of the public-key encryption scheme since the update of the authentication unit 103 has already been completed.

If the scheme identifier "P_2" is not present in the encryption scheme list 1133, the update unit 1106 updates the authentication unit 103 based on the received program file Pᵢᵢ. The specific procedure is the same as the procedure described in (A-iv-a) Update of Authentication Unit 103 of (A-iv) Update of Public-Key Encryption Scheme via the Internet above, and therefore, the explanation is omitted here.
When the update of the authentication unit 103 is finished, the update unit 1106 examines, via the communication unit 1104, whether the Internet communication is available. If the communication is not available, the update unit 1106 moves on to the process (C) below.

If the communication is available, the update unit 1106 transmits, to the security management device 1600 via the communication unit 1104, the extracted scheme identifier "P_2" and a key request which request to transmit a private key and a public key certificate used for an encryption scheme indicated by the scheme identifier "P_2".
Next, the update unit 1106 establishes a SAC with the security management device 1600, and safely obtains the private key SK_L2 and the public key certificate Cert_L2 corresponding to the scheme identifier "P_2". The specific procedure of such acquisition is the same as the procedure described in (A-iv-b) Acquisition of Private Key and Public Key Certificate of (A-iv) Update of Public-Key Encryption Scheme via the Internet above, and therefore, the explanation is omitted here.

(B-iii) Update of Broadcast Encryption Scheme by Broadcast Waves
When receiving the program file Bᵢᵢ, the update unit 1106 extracts the scheme identifier "B_2" from the received program file Bᵢᵢ. The update unit 1106 searches, from the encryption scheme list 1133 stored in the storage unit 1110, a scheme identifier that matches the extracted scheme identifier "B_2". In the case when the scheme identifier "B_2" is present in the encryption scheme list 1133, the update unit 1106 ends the update process of the broadcast encryption scheme since the update of the authentication unit 103 has already been completed.

If the scheme identifier "B_2" is not present in the encryption scheme list 1133, the update unit 1106 updates the authentication unit 103 based on the received program file Bᵢᵢ. The specific procedure is the same as the procedure described in (A-v-a) Update of Broadcast Encryption Process Unit 1118 of (A-v) Update of Broadcast Encryption Scheme via the Internet above, and therefore, the explanation is omitted here.
When the update of the broadcast encryption process unit 1118 is finished, the update unit 1106 examines, via the communication unit 1104, whether the Internet communication is available. If the communication is not available, the update unit 1106 starts timing, and examines again whether the Internet communication is available when the time reaches "24 hours" of the broadcast-key inquiry interval after the commencement of the timing.

If the communication is available, the update unit 1106 transmits, to the security management device 1600 via the communication unit 1104, the extracted scheme identifier "B_2" and a key request that requests to transmit a broadcast key used for an encryption scheme indicated by the scheme identifier "B_2".
Next, the update unit 1106 establishes a SAC with the security management device 1600, and safely obtains the broadcast key BK_2 corresponding to the scheme identifier "B_2". The specific procedure for obtaining the broadcast key BK_2 is the same as the procedure described in (A-v-b) Acquisition of Broadcast Key of (A-v) Update of Broadcast Encryption Scheme via the Internet above, and therefore, the explanation is omitted here.

(C) In the Case of Acquiring Programs by Broadcast Waves While Acquiring Key from Memory Card
When the Internet communication is not available in the process of (B-i) Update of Symmetric-Key Encryption Scheme by Broadcast Waves described in the above section (B), the update unit 1106 obtains a device key corresponding to the scheme identifier "E_2" via the memory card 300. The specific means for obtaining the device key is the same as the procedure described in (i-b) Acquisition of Device Key performed by the update unit 106 of Embodiment 1, and therefore, the explanation is omitted here.

In addition, when the Internet communication is not available in (B-ii) Update of Public-Key Encryption Scheme by broadcast waves, the update unit 1106 obtains a private key and a public key certificate corresponding to the scheme identifier "P_2" via the memory card 300. The specific acquisition means is the same as the procedure described in (ii-b) Acquisition of Private Key and Public Key Certificate performed by the update unit 106 of Embodiment 1, except for the process in which the encryption scheme information set 1144 including the scheme identifier "P_1" is deleted from the encryption scheme list 1133 before the 2nd update flag is set to "1", and therefore, the explanation is omitted here.

(6) Broadcast Encryption Process Unit 1118
The broadcast encryption process unit 1118 is structured from an FPGA element, and the FPGA element is made up of an FPGA and config ROM.
The broadcast encryption process unit 1118 has a function to perform a decryption process on the FPGA according to an encryption scheme indicated by the scheme identifier "B_1". In addition, the broadcast encryption process unit 1118 has a function to perform a decryption process on the FPGA according to an encryption scheme indicated by the scheme identifier "B_2", when the broadcast encryption scheme is updated by the update unit 1106.

The broadcast encryption process 1118 receives a decryption key from the control unit 1107 or the update unit 1106 and a direction to decrypt a ciphertext.
Here, combinations of the decryption key and ciphertext that the broadcast encryption process unit 1118 receives from the control unit 1107 are, for example, a combination of the broadcast key BK_1 and encrypted program contents and a combination of the broadcast key BK_2 and encrypted program contents.

Additionally, combinations of the decryption key and ciphertext that the broadcast encryption process unit 1118 receives from the update unit 1106 are, for example, a combination of the session key Kf' and encrypted broadcast key EncB2 (K_B2F, BK_2), a combination of the NW emergency key Ke001 and encrypted private key EncB1(K_EMR, SK_L2) and a combination of the emergency key K_EMR and encrypted public key certificate EncB1(K_EMR, Cert_L2).

In the present specification, a ciphertext generated by encrypting a plain text C according to an encryption scheme indicated by the scheme identifier "B_1", using a key A, is described as EncB1(A, C).
(i) Before Update of Broadcast Encryption Scheme
When receiving a decryption key and a direction to decrypt a ciphertext, the broadcast encryption process unit 1118 detects a key length of the received decryption key and judges whether the detected key length is 64 bits. When determining that the detected key length is not 64 bits, the broadcast encryption process unit 1118 extracts 64 bits from the beginning of the received decryption key, and uses this as a decryption key. If the detected key length is 64 bits, the broadcast encryption process unit 1118 omits the above process of extracting the decryption key and moves on to the next process.

Subsequently, the broadcast encryption process unit 1118 reads the ciphertext in blocks of 64 bits, and applies, to each of the read blocks, decryption computation based on an encryption scheme indicated by the scheme identifier "B_1", using the decryption key, to thereby generate a decrypted block. The broadcast encryption process unit 1118 writes the generated decrypted block to the storage unit 1110.
Until decryption of all blocks making up the ciphertext is completed, the broadcast encryption process unit 1118 repeats processes of reading a block, decrypting the read block and writing the decrypted block, and thereby generates a plain text. When decryption of all blocks is finished, the broadcast encryption process unit 1118 outputs the generated decrypted text.

(ii) After Update of Broadcast Encryption Scheme
When receiving a decryption key and a direction to decrypt a ciphertext, the broadcast encryption process unit 1118 detects a key length of the received decryption key and judges whether the detected key length is 256 bits. When determining that the detected key length is not 256 bits, the broadcast encryption process unit 1118 extracts 256 bits from the beginning of the received decryption key, and uses this as a decryption key. If the detected key length is 256 bits, the broadcast encryption process unit 1118 omits the above process of extracting the decryption key and moves on to the next process.

Subsequently, the broadcast encryption process unit 1118 reads the ciphertext in blocks of 256 bits, and applies, to each of the read blocks, decryption computation based on an encryption scheme indicated by the scheme identifier "B_2", using the decryption key, to thereby generate a decrypted block. The broadcast encryption process unit 1118 writes the generated decrypted block to the storage unit 1110.
Until decryption of all blocks making up the ciphertext is completed, the broadcast encryption process unit 1118 repeats processes of reading a block, decrypting the read block and writing the decrypted block, and thereby generates a decrypted text. When decryption of all blocks is finished, the broadcast encryption process unit 1118 outputs the generated decrypted text.

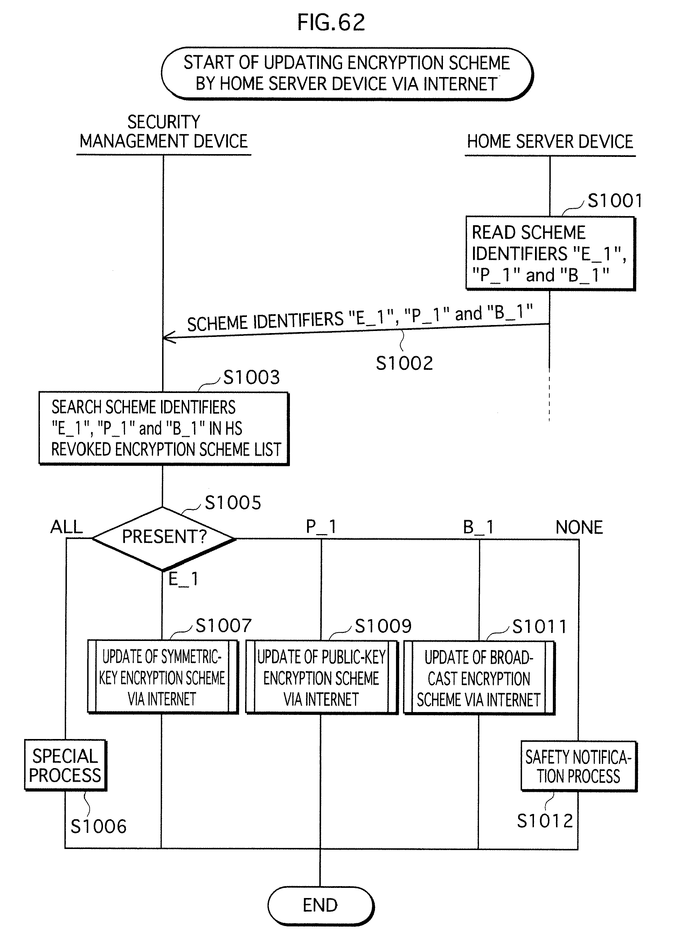

*2.5 Operations of Update System 11*
The operations of the Update system 11 are described next.
(1) Start of Updating Encryption Scheme by Home Server Device via the Internet
When it gets to the check time and date, "11:30 Sunday", the home server device 1100 inquires the security management device 1600, via the Internet 20, about the necessity of updates of the encryption schemes, and performs the updates of the encryption schemes. The following explains the updates of the encryption schemes performed by the home server device 1100 via the Internet 20, with the aid of a flowchart shown in FIG. 62.

The update unit 1106 of the home server device 1100 searches, from among the encryption scheme information sets making up the encryption scheme list 1133 stored in the storage unit 1110, ones each having "1" for the latest flag, and reads the scheme identifiers "E_1", "P_1" and "B_1" from the searched encryption scheme information sets (Step S1001). Then, the update unit 1106 transmits the read scheme identifiers "E_1", "P_1" and "B_1" to the security management device 1600 via the communication unit 1104 and the Internet 20, and requests the security management device 1600 to examine the safety of the encryption schemes (Step S1002).

The control unit 1607 of the security management device 1600 receives the scheme identifiers "E_1", "P_1" and "B_1", and searches the same identifiers as the received scheme identifiers "E_1", "P_1" and "B_1" in the HS revoked encryption scheme list 1621 (Step S1003).
As a result of the search, if all the scheme identifiers "E_1", "P_1" and "B_1" are present in the HS revoked encryption scheme list 1621 (Step S1005: ALL), the control unit 1607 performs a special process (Step S1006). Here, the special process means transmitting emergency screen data to the home server device 1100, which subsequently displays an emergency screen, as in the case of the special process described in Embodiment 1 with the aid of FIG. 37.

As a result of the search, if none of the scheme identifiers "E_1", "P_1" and "B_1" is present in the HS revoked encryption scheme list 1621 (Step S1005: NONE), the control unit 1607 performs a safety notification process (Step S1012). Here, the safety notification process means transmitting a safety notification signal, as in the case of the safety notification process described in Embodiment 1 with the aid of FIG. 38.

As a result of the search, if the scheme identifier "E_1" is detected (Step S1005: E_1), the control unit 1607 starts updating the symmetric-key encryption scheme via the Internet (Step S1007).
If the scheme identifier "P_1" is detected, the control unit 1607 starts updating the public-key encryption scheme via the Internet (Step S1009).

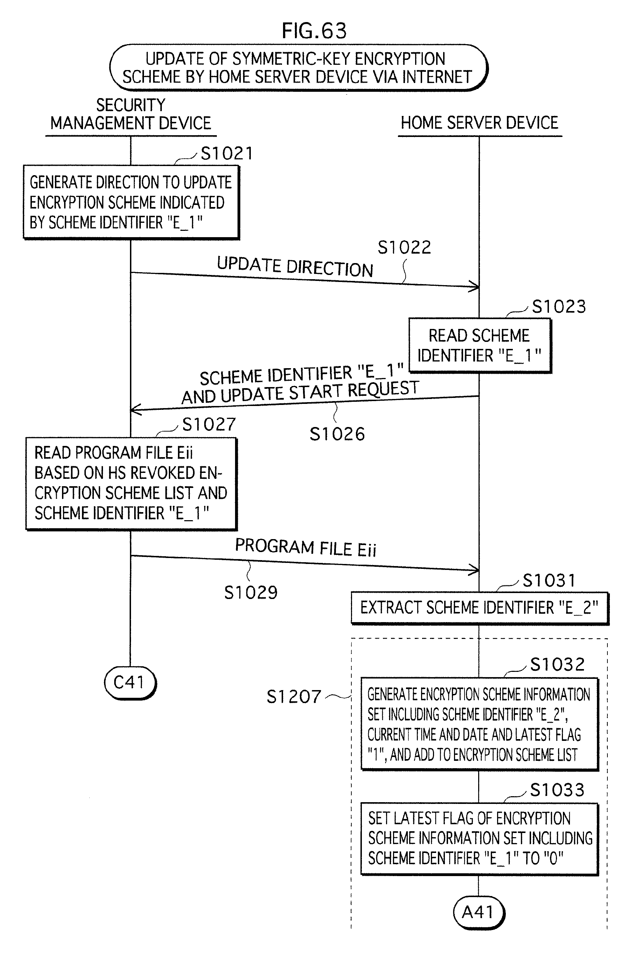

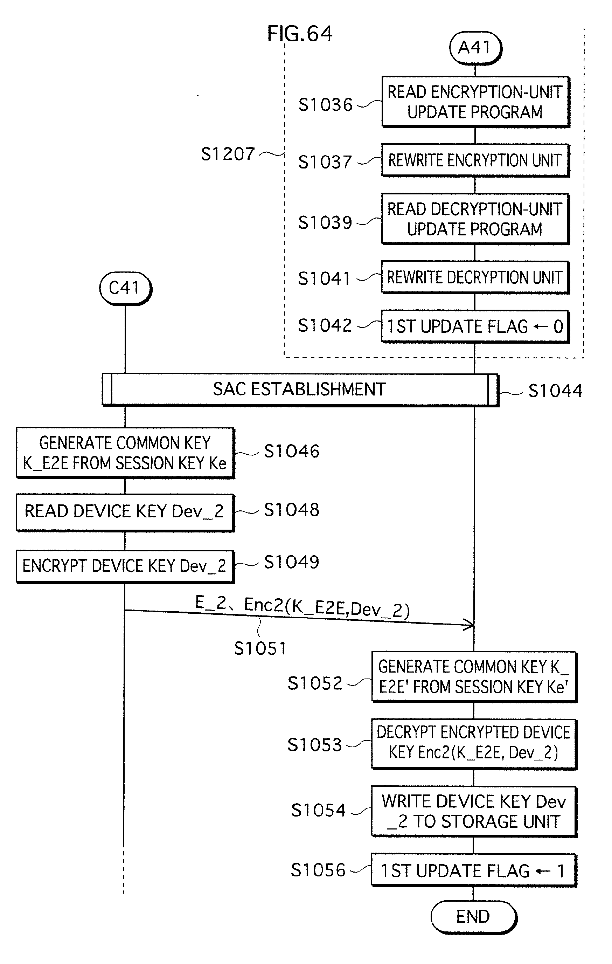

If the scheme identifier "B_1" is detected, the control unit 1607 starts updating the broadcast encryption scheme via the Internet (Step S1011).
(2) Update of Symmetric-Key Encryption Scheme by Home Server Device via the Internet
The following explains the update of the symmetric-key encryption scheme performed by the home server device 1100 via the Internet 20, with the aid of flowcharts shown in FIGs. 63 and 64, which are details of Step S1007 in FIG. 62.

The security management device 1600 generates a direction to update an encryption scheme indicated by the scheme identifier "E_1" (Step S1021), and transmits the generated direction to the home server device 1100 (Step S1022).
The update unit 1106 of the home server device 1100 receives the direction to update an encryption scheme indicated by the scheme identifier "E_1" via the Internet 20. When receiving the direction, the update unit 1106 reads the scheme identifier "E_1" from the encryption scheme list 1133 stored in the storage unit 1110 (Step S1023), and transmits the read scheme identifier "E_1" and an updating start request to the security management device 1600 via the Internet 20 (Step S1026).

The control unit 1607 of the security management device 1600 receives the scheme identifier "E_1" and updating start request from the home server device 1100 via the Internet 20, selects, from the HS revoked encryption scheme list 1621, the encryption scheme information set 1623 including the same identifier as the received scheme identifier "E_1", reads the program file Eᵢᵢ 641 based on the program file name included in the selected encryption scheme information set 1623 (Step S1027). Then, the control unit 1607 transmits the read program file Eᵢᵢ 641 to the home server device 1100 via the Internet 20 (Step S1029).

The update unit 1106 of the home server device 1100 receives the program file Eᵢᵢ from the security management device 1600 via the Internet 20, and extracts the scheme identifier "E_2" from the received program file Eᵢᵢ (Step S1031). The update unit 1106 generates an encryption scheme information set including the extracted scheme identifier "E_2", the current time and date and the latest flag "1", and adds the generated encryption scheme information set to the encryption scheme list 1133 (Step S1032). Then, the update unit 1106 rewrites the latest flag of the encryption scheme information set including the scheme identifier "E_1" with "0" (Step S1033).

Then, the update unit 1106 reads the encryption-unit update program from the received program file Eᵢᵢ (Step S1036), and rewrites the FPGA making up the encryption unit 108 according to the read encryption-unit update program (Step S1037). Subsequently, the update unit 1106 reads the decryption-unit update program from the received program file Eᵢᵢ (Step S1039), and rewrites the FPGA making up the decryption unit 109 according to the read decryption-unit update program (Step S1041).

Then, the update unit 1106 rewrites the 1st update flag 181 stored in the storage unit 1110 with "0" (Step S1042).
Next, the update unit 1106 directs the authentication unit 103 to establish a SAC, and the authentication unit 103 establishes a SAC with the security management device 1600 (Step S1044). Note that the details of Step S1044 are as shown in FIGs. 52 and 53.

After a SAC is established, the control unit 1607 of the security management device 1600 receives a session key Ke from the authentication unit 603, and extracts 128 bits from the beginning of the received session key Ke to thereby generate the common key K_E2E (Step S1046). The control unit 1607 reads the device key Dev_2 from the HS revoked encryption scheme list 1621 of the information storage unit 1610 (Step S1048), and generates the encrypted device key Enc2(K_E2E, Dev_2) by encrypting the read device key Dev_2 according to an encryption scheme indicated by the scheme identifier "E_2", using the generated common key K_E2E (Step S1049). The control unit 1607 transmits the generated encrypted device key Enc2(K_E2E, Dev_2) and scheme identifier "E_2" to the home server device 1100 via the Internet 20 (Step S1051).

The update unit 1106 of the home server device 1100 receives the scheme identifier "E_2" and encrypted device key Enc2(K_E2E, Dev_2) from the security management device 1600 via the Internet 20 and communication unit 1104. When receiving these, the update unit 1106 outputs, to the decryption unit 109, the session key Ke' generated by the authentication unit 103 as well as the received scheme identifier "E_2" and encrypted device key Enc2(K_E2E, Dev_2), and directs the decryption unit 109 to decrypt the encrypted device key Enc2(K_E2E, Dev_2).

Based on the received scheme identifier "E_2", the decryption unit 109 extracts 128 bits from the beginning of the received session key Ke' to thereby generate the common key K_E2E' (Step S1052). The decryption unit 109 decrypts the encrypted device key Enc2(K_E2E, Dev_2) according to an encryption scheme indicated by the scheme identifier "E_2" using the generated common key K_E2E' (Step S1053). Subsequently, the decryption unit 109 outputs the generated device key Dev_2 to the update unit 1106.

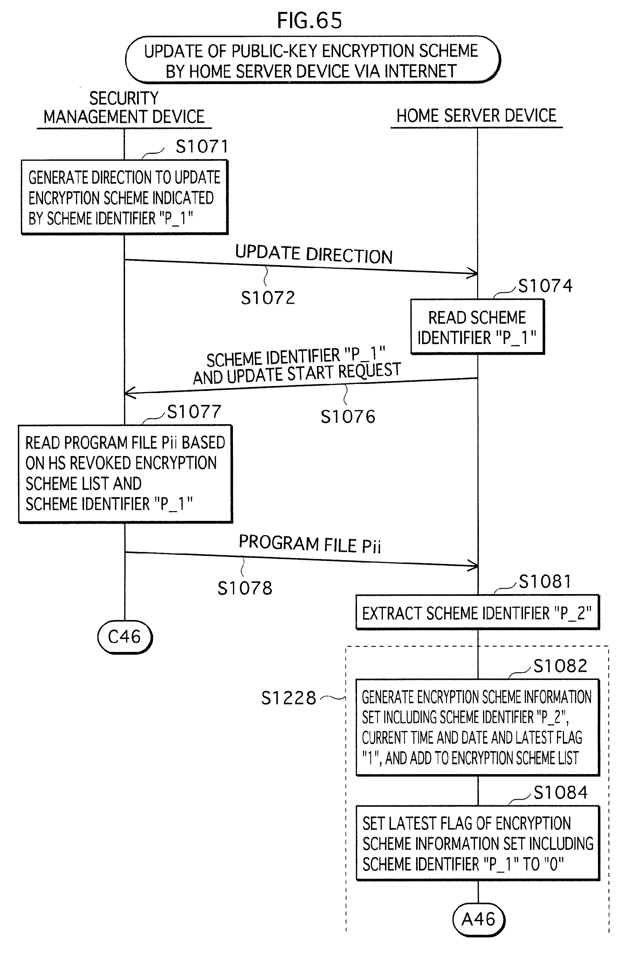

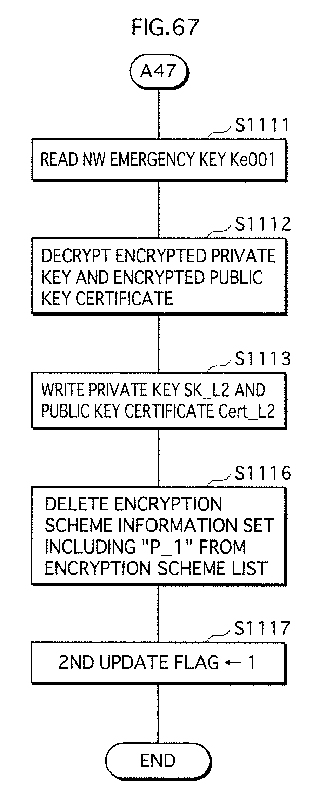

The update unit 1106 receives the device key Dev_2 from the decryption unit 1108, and writes the received device key Dev_2 to the storage unit 1110 (Step S1054). Next, the update unit 1106 rewrites the 1st update flag 181 stored in the storage unit 1110 with "1" (Step S1056).
(3) Update of Public-Key Encryption Scheme by Home server Device via the Internet
The following explains the update of the public-key encryption scheme performed by the home server device 1100 via the Internet 20, with the aid of flowcharts shown in FIGs. 65 to 67, which are details of Step S1009 in FIG. 62.

The security management device 1600 generates an update direction which directs the update of an encryption scheme indicated by the scheme identifier "P_1" (Step S1071), and transmits the generated update direction to the home server device 1100 via the Internet 20 (Step S1072).
The update unit 1106 of the home server device 1100 receives the update direction of an encryption scheme indicated by the scheme identifier "P_1" from the security management device 1600 via the Internet 20, and reads the scheme identifier "P_1" from the encryption scheme list 1133 stored in the storage unit 1110 (Step S1074). The update unit 1106 transmits the read scheme identifier 335, "P_1", to the security management device 1600, and requests the security management device 1600 to start the update process (Step S1076).

When receiving the scheme identifier "P_1" and update start request from the home server device 1100 via the Internet 20, the control unit 1607 of the security management device 1600 reads the program file Pᵢᵢ 651 based on the HS revoked encryption scheme list 1621 and the received scheme identifier "P_1" (Step S1077). Next, the control unit 1607 transmits the read program file Pᵢᵢ 651 to the home server device 1100 via the Internet 20 (Step S1078).

The update unit 1106 of the home server device 1100 receives the program file Pᵢᵢ via the Internet 20 and communication unit 1104, and extracts the scheme identifier "P_2" from the received program file Pᵢᵢ (Step S1081). The update unit 1106 generates an encryption scheme information set including the extracted scheme identifier "P_2", the current time and date and the latest flag "1", and adds the generated encryption scheme information set to the encryption scheme list 1133 (Step S1082). Then, the update unit 1106 rewrites the latest flag of the encryption scheme information set including the scheme identifier "P_1" with "0" (Step S1084).

Then, the update unit 1106 extracts the authentication-unit update program from the received program file Pᵢᵢ (Step S1086), and rewrites the authentication unit 103 according to the procedure shown by the extracted authentication-unit update program (Step S1087). Then, the update unit 1106 rewrites the 2nd update flag 182 of the storage unit 1110 with "0" (Step S1089).
After having completed transmission of the program file Pᵢᵢ, the control unit 1107 of the security management device 1600 generates a key pair of the private key SK_L2 and the public key PK_L2 (Step S1091), and obtains the public key certificate Cert_L2 of the public key PK_L2 from the certificate authority (Step S1092). Then, the control unit 1107 requests the device ID from the home server device 1100 via the Internet 20 (Step S1094).

The update unit 1106 of the home server device 1100 receives the request of the device ID from the security management device 1600 via the Internet 20 and communication unit 1104. When receiving the request of the device ID, the update unit 1106 reads the device ID 1131, "H001A", from the storage unit 1110 (Step S1096). Next, the update unit 1106 reads, from the encryption scheme list 1133, an installation date corresponding to the scheme identifier "E_1" and an installation date corresponding to the scheme identifier "B_1", and compares these installation dates (Step S1097). In the case when the installation date corresponding to "E_1" shows a later date (Step S1097 : E_1 > B_1), the update unit 1106 makes the scheme identifier "E_1" the update encryption identifier (Step S1098).

In the case when the installation date corresponding to "B_1" shows a later date (Step S1097: B_1 > E_1), the update unit 1106 makes the scheme identifier "B_1" the update encryption identifier (Step S1101).
Next, the update unit 1106 transmits the update encryption identifier and the read device ID 1131, "H001A", to the security management device 1600 via the Internet 20 (Step S1103).

The control unit 1607 of the security management device 1600 receives the update encryption identifier and device ID, "H001A", from the home server device 1100 via the Internet 20, and reads the NW emergency key Ke001 from the NW emergency key list 1691 stored in the information storage unit 1610, based on the received device ID, "H001A" (Step S1104). The control unit 1607 generates an encrypted private key and an encrypted public key certificate by encrypting the private key SK_L2 and public key certificate Cert_L2, respectively, according to an encryption scheme indicated by the received update encryption identifier, using the read NW emergency key Ke001 (Step S1106). The control unit 1607 transmits the generated encrypted private key and encrypted pubic key certificate as well as the received update encryption identifier to the home sever device 1100 via the Internet 20 (Step S1108).

The update unit 1106 of the home server device 1100 receives the encrypted private key, encrypted public key certificate and update encryption identifier from the security management device 1600 via the Internet 20, and reads the NW emergency key Ke001 1132 from the storage unit 1110 (Step S1111).
Next, the update unit 1106 outputs the read NW emergency key Ke001 1132 to the decryption unit 109 or the broadcast encryption process unit 1118 depending on the received update encryption identifier, and directs the decryption unit 109 or the broadcast encryption process unit 1118 to decrypt the received encrypted private key and encrypted public key certificate.

The decryption unit 109 or the broadcast encryption process unit 1118 generates the private key SK_L2 and public key certificate Cert_L2 by decrypting the encrypted private key and encrypted public key certificate, respectively, using the NW emergency key Ke001 (Step S1112).
The update unit 1106 writes the private key SK_L2 and public key certificate Cert_L2 to the storage unit 1110 (Step S1113), and deletes the encryption scheme information set 1144 including the scheme identifier "P_1" from the encryption scheme list 1133 (Step S1116). Next, the update unit 1106 rewrites the 2nd update flag 182 with "1".

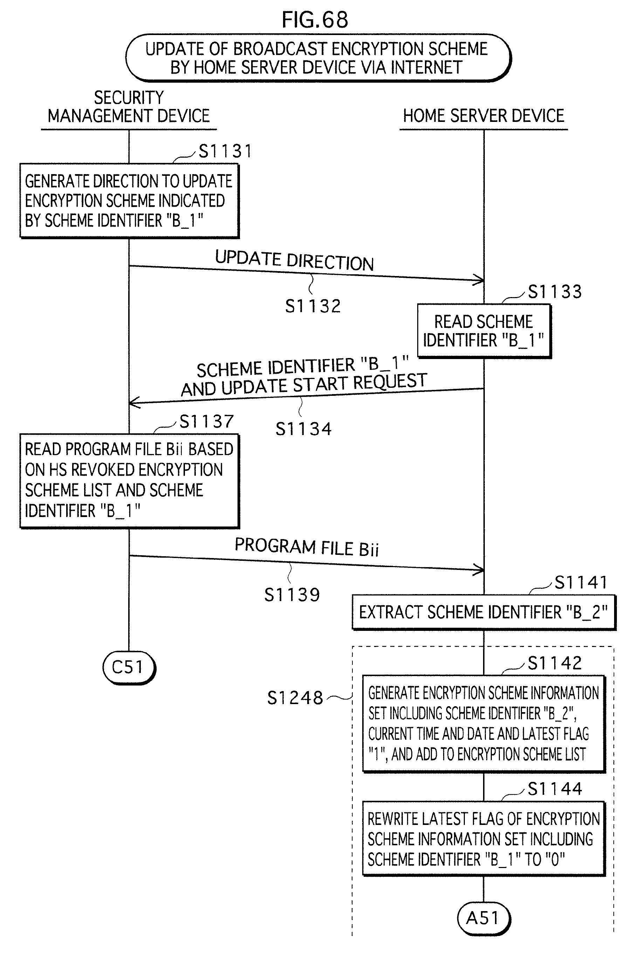

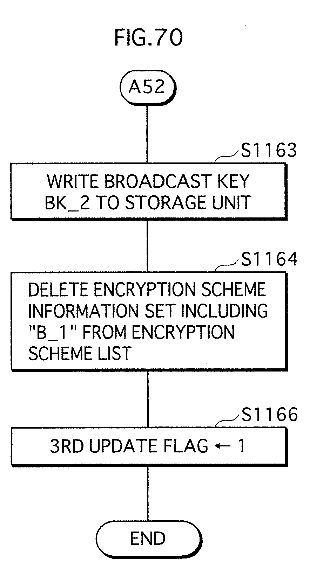

(4) Update of Broadcast Encryption Scheme by Home Server Device via the Internet
The following explains the update of the broadcast encryption scheme performed by the home server device 1100 via the Internet 20, with the aid of flowcharts shown in FIGs. 68 to 70, which are details of Step S1011 in FIG. 62.
The security management device 1600 generates an update direction to update an encryption scheme indicated by the scheme identifier "B_1" (Step S1131), and transmits the generated update direction to the home server device 1100 (Step S1132).

The update unit 1106 of the home server device 1100 receives the update direction of an encryption scheme indicated by the scheme identifier "B_1" via the Internet 20, and reads the scheme identifier "B_1" from the encryption scheme list 1133 stored in the storage unit 1110 (Step S1133). The update unit 1106 transmits the read scheme identifier "B_1" and an updating start request to the security management device 1600 via the Internet 20 (Step S1134).

When receiving the scheme identifier "B_1" and update start request from the home server device 1100 via the Internet 20, the control unit 1607 of the security management device 1600 selects, from the HS revoked encryption scheme list 1621, the encryption scheme information set 1627 including the same identifier as the received scheme identifier "B_1", and reads the program file Bᵢᵢ 1681 based on the program file name included in the selected encryption scheme information set 1627 (Step S1027). Next, the control unit 1607 transmits the read program file Bᵢᵢ 1681 to the home server device 1100 via the Internet 20 (Step S1139).

The update unit 1106 of the home server device 1100 receives the program file Bᵢᵢ from the security management device 1600 via the Internet 20, and extracts the scheme identifier "B_2" from the received program file Bᵢᵢ (Step S1141). The update unit 1106 generates an encryption scheme information set including the extracted scheme identifier "B_2", the current time and date and the latest flag "1", and adds the generated encryption scheme information set to the encryption scheme list 1133 (Step S1142). Then, the update unit 1106 rewrites, in the encryption scheme list 1133, the latest flag of the encryption scheme information set including the scheme identifier "B_1" with "0" (Step S1144).

Then, the update unit 1106 reads the broadcast-encryption-process-unit update program from the received program file Bᵢᵢ (Step S1146), and rewrites the FPGA making up the broadcast encryption process unit 1118 according to the read broadcast-encryption-process-unit update program (Step S1147). Then, the update unit 1106 rewrites the 3rd update flag 1183 stored in the storage unit 1110 with "0" (Step S1149).

Next, the update unit 1106 directs the authentication unit 103 to establish a SAC. The authentication unit 103 establishes a SAC with the security management device 1600 (Step S1151). Note that the details of Step S1151 are as shown in FIGs. 52 and 53.
After a SAC is established, the control unit 1607 of the security management device 1600 receives a session key Kf from the authentication unit 603, and extracts 256 bits from the beginning of the received session key Kf to thereby generate the common key K_B2F (Step S1152). The control unit 1607 reads the broadcast key BK_2 from the HS revoked encryption scheme list 1621 of the information storage unit 1610 (Step S1153), and generates the encrypted broadcast key EncB2(K_B2F, BK_2) by encrypting the read broadcast key BK_2 according to an encryption scheme indicated by the scheme identifier "B_2", using the generated common key K_B2F (Step S1156). The control unit 1607 transmits the generated encrypted broadcast key EncB2(K_B2E, BK_2) and scheme identifier "B_2" to the home server device 1100 via the Internet 20 (Step S1157).

The update unit 1106 of the home server device 1100 receives the scheme identifier "B_2" and encrypted broadcast key EncB2 (K_B2E, BK_2) from the security management device 1600 via the Internet 20 and communication unit 1104. When receiving these, the update unit 1106 outputs, to the broadcast encryption process unit, the session key Kf' generated by the authentication unit 103 as well as the received encrypted broadcast key EncB2(K_B2E, BK_2), and directs the broadcast encryption process unit to decrypt the encrypted broadcast key EncB2(K_B2E, BK_2).

The broadcast encryption process unit 1118 extracts 256 bits from the beginning of the received session key Kf' to thereby generate the common key K_B2F' (Step S1159). The broadcast encryption process unit 1118 decrypts the encrypted broadcast key EncB2(K_B2E, BK_2) according to an encryption scheme indicated by the scheme identifier "B_2" using the generated common key K_B2F' (Step S1161). Subsequently, the broadcast encryption process unit 1118 outputs the generated broadcast key BK_2 to the update unit 1106.

The update unit 1106 receives the broadcast key BK_2 from the decryption unit 1108, and writes the received broadcast key BK_2 to the storage unit 1110 (Step S1163). Next, the update unit 1106 deletes the encryption scheme information set 1146 including the scheme identifier "B_1" from the encryption scheme list 1133 (Step S1164), and rewrites the 3rd update flag 1183 stored in the storage unit 1110 with "1" (Step S1166).

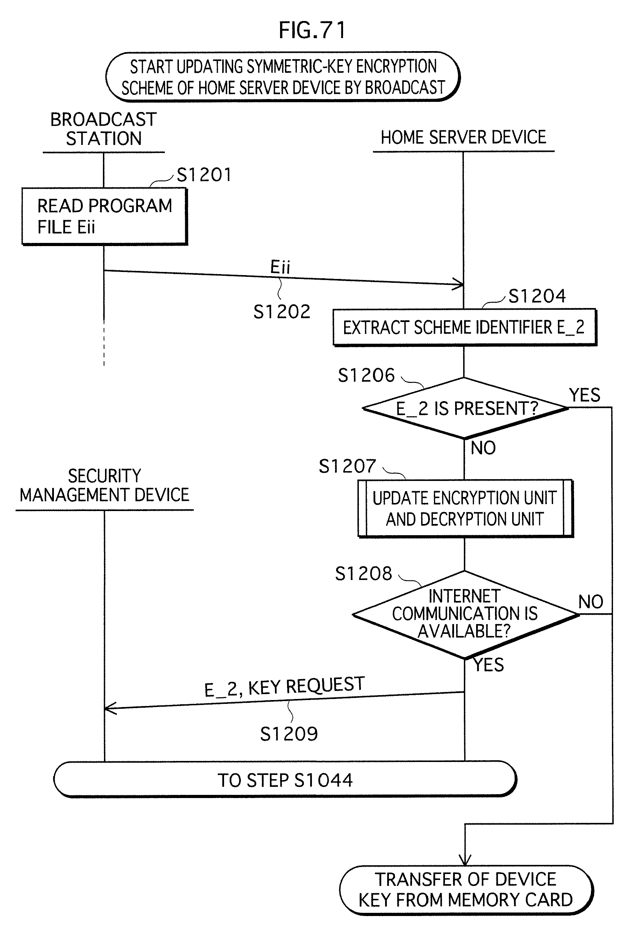

(5) Update Process of Symmetric-Key Encryption Scheme of Home Server Device by Broadcast Waves
The following describes the operations of the home server device 1100 in the case of starting the update of the symmetric-key encryption scheme by broadcast waves from the broadcast station 1070, with the aid of a flowchart shown in FIG. 71.
The broadcast station 1070 reads the program file Eᵢᵢ received from the security management device 1600 (Step S1201), and transmits the read program file Eᵢᵢ through broadcast waves (Step S1202).

The update unit 1106 of the home server device 1100 receives the program file Eᵢᵢ via the receiving unit 101 and extracts the scheme identifier "E_2" from the received program file Eᵢᵢ (Step S1204). The update unit 1106 searches, in the encryption scheme list 1133, the same identifier as the extracted scheme identifier "E_2". When determining that the scheme identifier "E_2" is present (Step S1206 : YES), the update unit 1106 directly ends the process, and obtains the device key through transfer from the memory card 300.

When determining that that the scheme identifier "E_2" is not present in the encryption scheme list 1133 (Step S1206: NO), the update unit 1106 updates the encryption unit 108 and the decryption unit 109 based on the received program file Eᵢᵢ (Step S1207). Note that the details of Step S1207 are the same as Steps S1032 to S1042 in FIGs. 63 and 64.
Next, if the Internet communication is available (Step S1208: YES), the update unit 1106 transmits the scheme identifier "E_2" included in the received program file Eᵢᵢ and a key request to the security management device 1600 via the Internet 20 (Step S1209), and moves the process to Step S1044.

If the Internet communication is not available (Step S1208: NO), the update unit 1106 obtains the device key through transfer from the memory card 300. Note that the transfer of the device key from the memory card is the same as described above with the aid of the flowcharts shown in FIGs. 43 and 44, and therefore, the explanation is omitted here.
The control unit 1607 of the security management device 1600 receives the scheme identifier "E_2" and key request via the Internet 20, and moves the process to Step S1044.

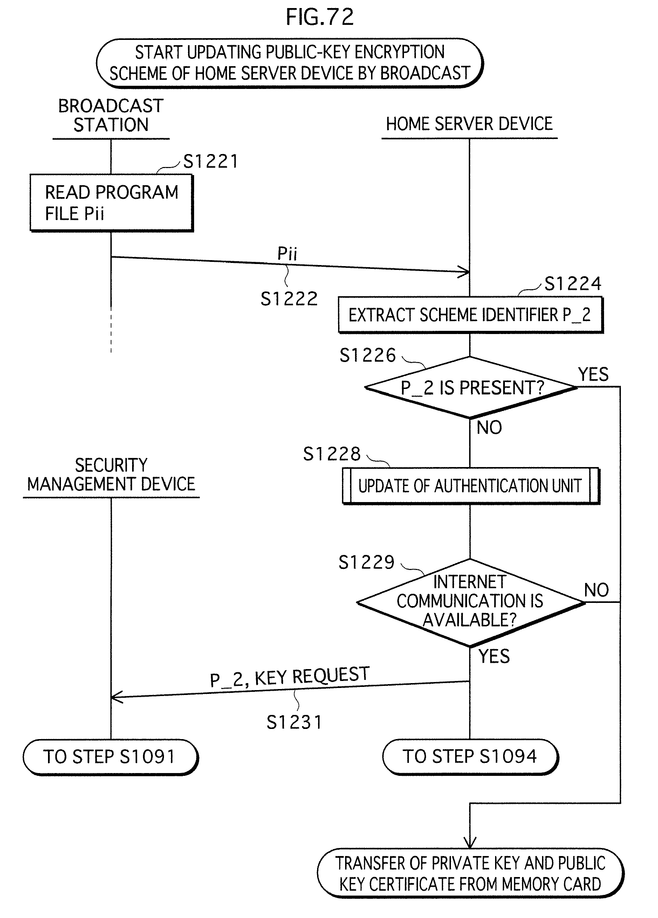

(6) Update Process of Public-Key Encryption Scheme of Home Server Device by Broadcast Waves
The following describes the operations of the home server device 1100 in the case of starting the update of the public-key encryption scheme by broadcast waves from the broadcast station 1070, with the aid of a flowchart shown in FIG. 72.
The broadcast station 1070 reads the program file Pᵢᵢ received from the security management device 1600 (Step S1221), and transmits the read program file Pᵢᵢ through broadcast waves (Step S1222).

The update unit 1106 of the home server device 1100 receives the program file Pᵢᵢ via the receiving unit 101 and extracts the scheme identifier "P_2" from the received program file Pᵢᵢ (Step S1224). The update unit 1106 searches, in the encryption scheme list 1133, the same identifier as the extracted scheme identifier "P_2". When determining that the scheme identifier "P_2" is present (Step S1226: YES), the update unit 1106 directly ends the process, and obtains the private key and public key certificate through transfer from the memory card 300.

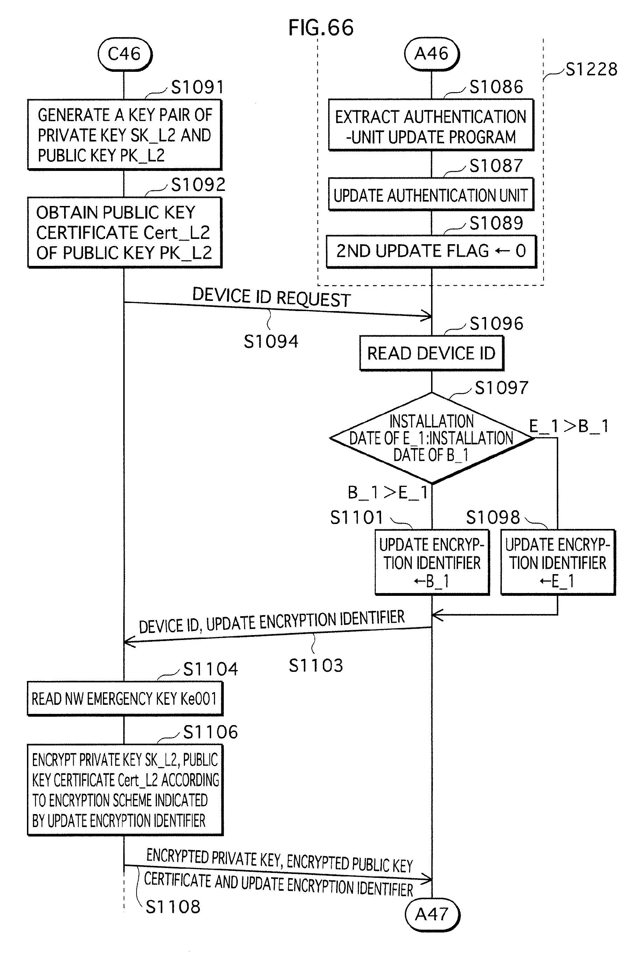

When determining that the scheme identifier "P_2" is not present in the encryption scheme list 1133 (Step S1226: NO), the update unit 1106 updates the authentication unit 103 based on the received program file Pᵢᵢ (Step S1228). Note that the details of Step S1228 are the same as Steps S1082 to S1089 in FIGs. 65 and 66.
Next, if the Internet communication is available (Step S1229: YES), the update unit 1106 transmits the scheme identifier "P_2" included in the received program file Pᵢᵢ and a key request to the security management device 1600 via the Internet 20 (Step S1231), and moves the process to Step S1094.

If the Internet communication is not available (Step S1229: NO), the update unit 1106 obtains the private key and public key certificate through transfer from the memory card 300. Note that the transfer of the private key and public key certificate from the memory card 300 is the same as described above with the aid of the flowcharts shown in FIGs. 50 and 51, and therefore, the explanation is omitted here.
The control unit 1607 of the security management device 1600 receives the scheme identifier "P_2" and key request via the Internet 20, and moves the process to Step S1091.

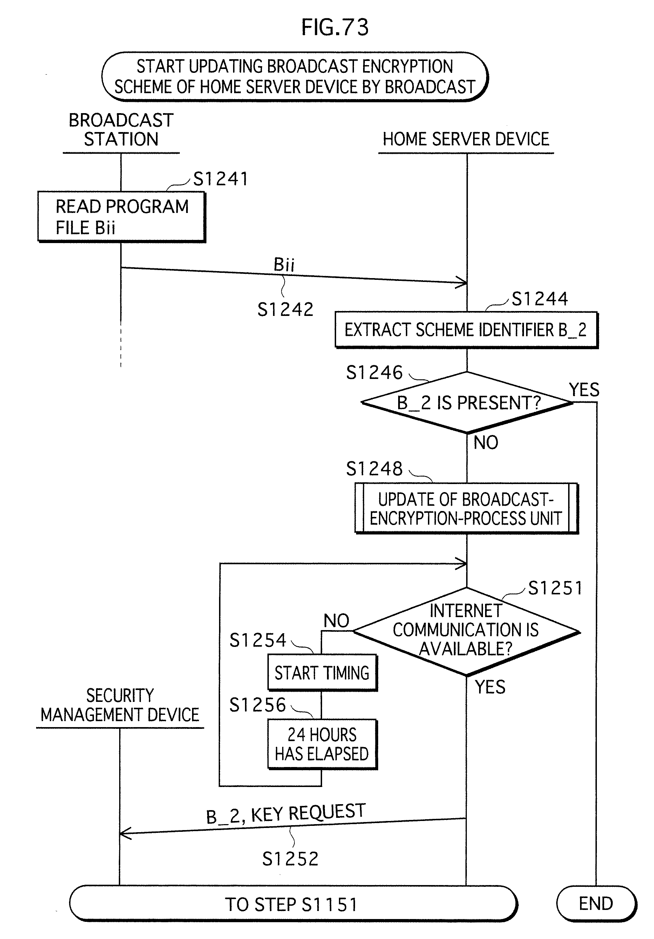

(7) Update Process of Broadcast Encryption Scheme of Home Server Device by Broadcast Waves
The following describes the operations of the home server device 1100 in the case of starting the update of the broadcast encryption scheme by broadcast waves from the broadcast station 1070, with the aid of a flowchart shown in FIG. 73.
The broadcast station 1070 reads the program file Bᵢᵢ received from the security management device 1600 (Step S1241), and transmits the read program file Bᵢᵢ through broadcast waves (Step S1242).

The update unit 1106 of the home server device 1100 receives the program file Bᵢᵢ via the receiving unit 101 and extracts the scheme identifier "B_2" from the received program file Bᵢᵢ (Step S1244). The update unit 1106 searches, in the encryption scheme list 1133, the same identifier as the extracted scheme identifier "B_2". When determining that the scheme identifier "B_2" is present in the encryption scheme list 1133 (Step S1246: YES), the update unit 1106 directly ends the process.

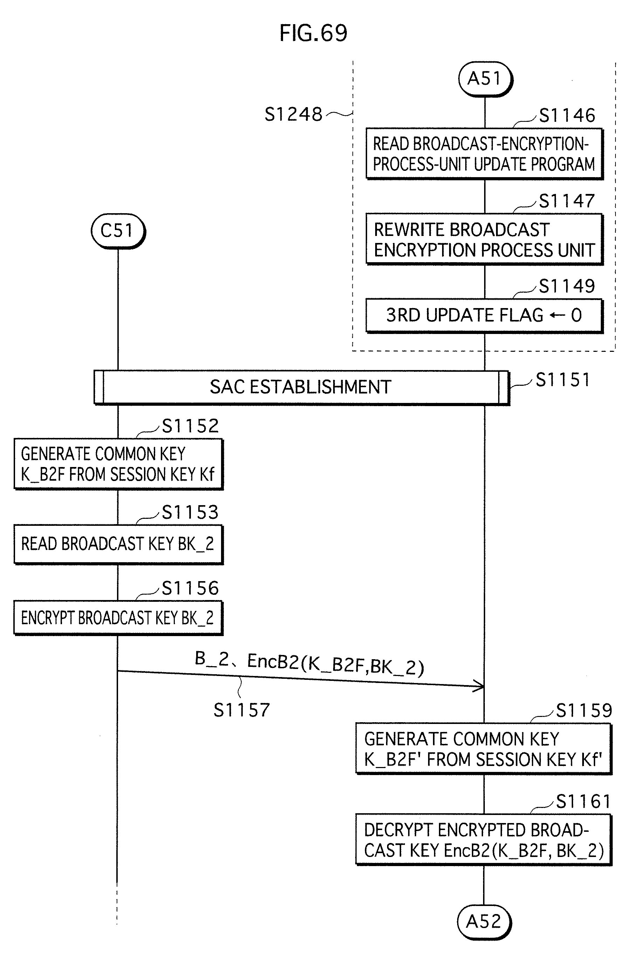

When determining that that the scheme identifier "B_2" is not present in the encryption scheme list 1133 (Step S1246: NO), the update unit 1106 updates the broadcast encryption process unit 1118 based on the received program file Bᵢᵢ (Step S1248). Note that the details of Step S1248 are the same as Steps S1142 to S1149 in FIGs. 68 and 69.
Next, if the Internet communication is available (Step S1251: YES), the update unit 1106 transmits the scheme identifier "B_2" included in the received program file Bᵢᵢ and a key request to the security management device 1600 via the Internet 20 (Step S1252), and moves the process to Step S1151.

If the Internet communication is not available (Step S1251: NO), the update unit 1106 starts timing (Step S1254), and moves the process to Step S1251 again when a period of 24 hours has elapsed (Step S1256).
The control unit 1607 of the security management device 1600 receives the scheme identifier "B_2" and a key request via the Internet 20, and moves the process to Step S1151.
*2.6 Summary and Advantageous Effects*
As has been described above, the home server device 1100 in the update system 11 uses a symmetric-key encryption scheme, a public-key encryption scheme and a broadcast encryption scheme.

The home server device 1100 obtains programs used for updating these encryption schemes by broadcast waves or via the Internet, and installs new encryption schemes. After obtaining update programs from the security management device 1600 via the Internet, the home server device 1100 subsequently obtains a key to be used for a new encryption scheme from the security management device 1600 via the Internet.

If the Internet communication is available when the home server device 1100 receives programs from the broadcast station 1070, the home server device 1100 obtains, via the Internet, a key used for the new encryption scheme. If the Internet communication is not available, the key is obtained from the memory card 300.
Herewith, in the case where the home server device 1100 is connected to the Internet, the home server device 1100 autonomously inquires about the safety of the encryption schemes, and starts the updates of the encryption schemes.

On the other hand, in the case where the home server device 1100 is not connected to the Internet, or in the case where the Internet connection is not available for the reason that the network has a problem, the home server 1100 obtains programs and a key by broadcast waves and via the memory card 300, and thus a new encryption scheme can be installed.
Accordingly, the encryption scheme can be updated by the most suitable method according to a radio wave reception condition and a network environment of where the home server device 1100 is established.

In the case when two of the symmetric-key encryption scheme, public-key encryption scheme and broadcast encryption scheme are broken, the two broken encryption schemes are sequentially updated by the remaining one encryption scheme, which is although not particularly described in the above embodiments.
3. OTHER MODIFICATIONS
Although the present invention has been described based on the above embodiments, it is a matter of course that the present invent is not confined to these embodiments. The following cases are also within the scope of the present invention.

(1) In the above embodiments, the encrypted content key and encrypted contents stored in the DVD 500a and DVD 500b are generated by the same symmetric-key encryption scheme; however, they may be generated by different encryption schemes.
(2) In Embodiment 1 above, each of the encryption unit 108, decryption unit 109 and authentication unit 103 of the home server device 100 is structured by an FPGA element; however, they may be structured by a CPLD (Complex Programmable Logic Device, or reconfigurable LSI) instead of an FPGA element.

(3) In the above Embodiments 1 and 2, processes of encryption, decryption and SAC establishment in the home server device are performed by circuits on the FPGA; however, these may be achieved in the same fashion as in the memory card 300. Namely, computer programs including procedures of encryption, decryption and SAC establishment are stored therein, and a processor executes directions making up these programs to thereby accomplish encryption, decryption and SAC establishment.

(4) In the modification (3) above, programs which are stored before the update need not necessarily be deleted after programs based on a new encryption scheme are obtained by the update of an encryption scheme.
In this case, an encryption scheme list having a structure as described in Embodiment 2 is stored in the storage unit. The encryption scheme list includes encryption scheme information sets, each of which corresponds to a program stored in the home server device 1100 before the update of the encryption scheme as well as encryption scheme information sets, each of which corresponds to a newly obtained program after the update of the encryption scheme. When directing the encryption unit or the broadcast encryption process unit to perform encryption, the control unit and update unit of the home server device output a scheme identifier corresponding to the latest encryption scheme based on the latest flags or the installation dates shown in the encryption scheme list, and have control not to use a broken encryption scheme for the encryption.

(5) In Embodiment 1 above, the memory card 300 obtains, from the security management device 600 via the mobile phone 700, computer programs including procedures of encryption and decryption according to a new encryption scheme, and installs them. In addition, the memory card 300 receives a key and a public key certificate corresponding to a new encryption scheme from the security management device 600.
Instead of receiving these computer programs, key and public key certificate from the security management device 600, these computer programs, key and public key certificate may be written, by the manufacturer, to the memory card 300, which is then distributed or sold.

(6) In Embodiment 2 above, the update unit 1106 of the home server device 1100 requests the security management device 1600, on a regular basis, to examine the security of the encryption schemes that the home server device 1100 is currently using, and the update of an encryption scheme is started in the case when the update unit 1106 receives an update direction from the security management device 1600; however, the procedure of starting the update is not limited to this.

For example, the home server device 1100 may set out to update the encryption schemes on a regular basis, regardless of whether the encryption schemes that the home server device 1100 is currently using have been broken.
The home server device 1100 transmits an updating start request for the symmetric-key encryption scheme to the security management device 1600 every other month, for example. When receiving the updating start request for the symmetric-key encryption scheme, the security management device 1600 transmits, to the home server device 1100, the program file Eᵢᵢ including programs for installing the latest symmetric-key encryption scheme at this point. The home server device 1100 receives the program file Eᵢᵢ from the security management device 1600, and subsequently installs an encryption scheme indicated by the scheme identifier "E_2" in the procedure described in Embodiment 2.

As to the public-key encryption scheme and broadcast encryption scheme also, the home server device 1100 may set out to update the encryption schemes on a regular basis, regardless of whether the encryption schemes that the home server device 1100 is currently using have been broken.
(7) In Embodiment 2, the update unit 1106 of the home server device 1100 may start the updates of the encryption schemes according to directions from outside.
For example, information indicating an encryption scheme that the home server device 1100 needs to have is stored on a DVD, and the home server device 1100 starts the update of an encryption scheme in the case when the home server device 1100 does not have an encryption scheme indicated by the information stored on the DVD.

In addition, the home server device 1100 may start the update of an encryption scheme according to user's operation.
(8) In Embodiment 2, when updating the public-key encryption scheme, the update unit 1106 compares the installation dates of the symmetric-key encryption scheme and the broadcast encryption scheme of the home server device 1100 at this point, and obtains a private key and a public key certificate used for a new public-key encryption scheme, using an encryption scheme with the later installation date.

However, a method to decide which encryption scheme is to be used in order to obtain a private key and the like is not limited to this. For example, the home server device 1100 may store an encryption level of each encryption scheme, and use an encryption scheme with a higher encryption level.
The encryption level for each encryption scheme is included in a program file and obtained from the security management device 1600 or the broadcast station 1070 when the encryption scheme is installed.

In addition, which encryption scheme is to be used can be selected according to user's operation.
(9) In Embodiments 1 and 2 as well as in the above modifications, the home server device and memory card obtain program files including programs in plain text format. Instead, they may obtain a program file including : encrypted programs, an encrypted scheme identifier and an encrypted key length, which are generated by encrypting programs, a scheme identifier, a key length, respectively, included in each program file; and a scheme identifier indicating an encryption scheme used for the encryption.

For example, in the case an encryption scheme indicated by the scheme identifier "P_1" is broken, the home server device obtains a program file including an encrypted authentication-unit update program, an encrypted scheme identifier and the scheme identifier "E_1" indicating an encryption scheme used to generate the encrypted authentication-unit update program and encrypted scheme identifier. An encryption key used for generating the encrypted authentication-unit update program and the like is, for example, the NW emergency key.

(10) The present invention may be a method of accomplishing the above-described system. Also, the present invention may be a computer program that achieves the method by a computer, or may be a digital signal representing the computer program.
(11) The present invention includes a structure in which two or more of the above embodiments and modifications are combined.

### Industrial Applicability

The present invention is operationally, continuously and repeatedly applicable in industries that provide digital data for users with the use of encryption technology, in industries that exchange digital data by secret communication using encryption technology, and in industries that manufacture and sell computer systems capable of processing the digital data.

## Claims

1. An information security device having a plurality of encryption schemes and handling information safely and reliably, **characterized by**
selecting one of the plurality of encryption schemes as an application encryption scheme and installing a different encryption scheme from the plurality of encryption schemes based on the application encryption scheme.

2. The information security device of Claim 1, comprising:
an obtaining unit operable to obtain an installation direction to install the different encryption scheme;
a selecting unit operable to select the one of the plurality of encryption schemes as the application encryption scheme;
an installation unit operable to install the different encryption scheme based on the application encryption scheme; and
an encryption processing unit operable to process the information securely based on at least one encryption scheme from among the plurality of encryption schemes and the installed different encryption scheme.

3. The information security device of Claim 2, wherein
the selecting unit selects a most recently installed encryption scheme from the plurality of encryption schemes as the application encryption scheme.

4. The information security device of Claim 2, wherein
the selecting unit selects an encryption scheme with a highest encryption level from the plurality of encryption schemes as the application encryption scheme.

5. The information security device of Claim 2, wherein
the selecting unit includes:
a direction obtaining subunit operable to externally obtain a selection direction indicating one of the plurality of encryption schemes; and
a selecting subunit operable to select the one of the plurality of encryption schemes as the application encryption scheme according to the obtained selection direction.

6. The information security device of Claim 2, wherein
the obtaining unit obtains, as the installation direction, identification information identifying a broken encryption scheme among the plurality of encryption schemes, and
the selecting unit selects, as the application encryption scheme, an encryption scheme other than the broken encryption scheme identified by the identification information from among the plurality of encryption schemes.

7. The information security device of Claim 6, wherein
the encryption processing unit processes the information safely based on the encryption scheme other than the broken encryption scheme identified by the identification information.

8. The information security device of Claim 6, wherein
the encryption processing unit uses the broken encryption scheme identified by the identification information only for decrypting a ciphertext.

9. The information security device of Claim 6, further comprising:
a deletion unit operable to delete the broken encryption scheme identified by the identification information.

10. The information security device of Claim 2, wherein
the different encryption scheme includes an algorithm showing procedures for achieving the different encryption scheme and private key information, and
the installation unit obtains the algorithm from an external device, safely obtains the private key information from the external device with use of the application encryption scheme, and stores therein the obtained algorithm and private key information.

11. The information security device of Claim 2, wherein
the encryption processing unit includes a key storage subunit and a computation execution subunit,
the key storage subunit stores therein a plurality of key information sets, each of which corresponds to a different one of the plurality of encryption schemes,
the computation execution subunit includes an encryption circuit for executing processing in accordance with the plurality of encryption schemes and a logic circuit, at least part of which is rewritable, and
the installation unit includes:
a procedure obtaining subunit operable to obtain procedure information showing a procedure to establish an encryption circuit for executing processing in accordance with the different encryption scheme on the logic circuit;
a key obtaining subunit operable to safely obtain a private key information set with use of the application encryption scheme and write the obtained private key information set to the key storage subunit; and
an establishment subunit operable to establish the encryption circuit for executing processing in accordance with the different encryption scheme on the logic circuit according to the procedure shown by the obtained procedure information.

12. The information security device of Claim 11, wherein
the procedure obtaining subunit obtains the procedure information from a server device via a network.

13. The information security device of Claim 12, wherein
the network is a broadcast network for digital broadcasting, and
the procedure obtaining subunit obtains the procedure information by receiving broadcast waves and extracting the procedure information from the received broadcast waves.

14. The information security device of Claim 11, in which a portable recording medium is placed, wherein
the portable recording medium stores therein an encrypted private key information set that is generated by encrypting the private key information set with use of the application encryption scheme, and
the key obtaining subunit obtains the private key information set by reading the encrypted private key information set from the portable recording medium and decrypting the read encrypted private key information set with use of the application encryption scheme.

15. The information security device of Claim 11, wherein
the key obtaining subunit obtains the private key information set by (i) obtaining, via a network, an encrypted private key information set that is generated by encrypting the private key information set with use of the application encryption scheme and (ii) decrypting the obtained encrypted private key information set with use of the application encryption scheme.

16. An information security system including an information security device that has a plurality of encryption schemes and handles information safely and reliably and a server device that supplies a different encryption scheme from the plurality of encryption schemes, wherein
the server device comprises a supply unit operable to supply the different encryption scheme, and
the information security device comprises:
an obtaining unit operable to obtain an installation direction to install the different encryption scheme;
a selecting unit operable to select one of the plurality of encryption schemes as an application encryption scheme;
an installation unit operable to install the different encryption scheme based on the application encryption scheme; and
an encryption processing unit operable to process the information safely based on at least one encryption scheme from among the plurality of encryption schemes and the installed different encryption scheme.

17. An encryption scheme installation method used in an information security device that has a plurality of encryption schemes, handles information safely and reliably, and installs a different encryption scheme from the plurality of encryption schemes based on an application encryption scheme, which is one of the plurality of encryption schemes, the encryption scheme installation method comprising the steps of:
obtaining an installation direction to install the different encryption scheme;
selecting the one of the plurality of encryption schemes as the application encryption scheme; and
installing the different encryption scheme based on the application encryption scheme.

18. An encryption scheme installation program used in an information security device that has a plurality of encryption schemes, handles information safely and reliably, and installs a different encryption scheme from the plurality of encryption schemes based on an application encryption scheme, which is one of the plurality of encryption schemes, the encryption scheme installation program causing a computer to execute the steps of:
obtaining an installation direction to install the different encryption scheme;
selecting the one of the plurality of encryption schemes as the application encryption scheme; and
installing the different encryption scheme based on the application encryption scheme.

19. The encryption scheme installation program of Claim 15 stored in a computer-readable recording medium.
